(19) Europäisches Patentamt European Patent Office Office européen des brevets

(11) **EP 4 513 809 A1**

(12) **EUROPEAN PATENT APPLICATION**
published in accordance with Art. 153(4) EPC

(43) Date of publication:
26.02.2025 Bulletin 2025/09

(21) Application number: 23791319.9

(22) Date of filing: 20.04.2023

(51) International Patent Classification (IPC):
*H04L 5/00* (2006.01)

(52) Cooperative Patent Classification (CPC):
H04L 5/00; H04W 72/0446; H04W 72/0453;
H04W 72/23

(86) International application number:
PCT/CN2023/089522

(87) International publication number:
WO 2023/202667 (26.10.2023 Gazette 2023/43)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 20.04.2022 CN 202210419466
17.02.2023 CN 202310154012

(71) Applicant: **Datang Mobile Communications Equipment Co., Ltd.**
**Beijing 100085 (CN)**

(72) Inventor: **HUANG, Qiuping**
**Beijing 100085 (CN)**

(74) Representative: **Cabinet Nony**
**11 rue Saint-Georges**
**75009 Paris (FR)**

(54) **REFERENCE SIGNAL TRANSMISSION METHOD AND APPARATUS, AND STORAGE MEDIUM**

(57) The disclosure provides a method for transmitting a reference signal, an apparatus, and a storage medium, and relates to the technical field of radio communication. The network device transmits configuration information of an SRS resource to a terminal, and the terminal transmits SRS to the network device based on the configuration information of the SRS resource. The SRS resource corresponds to M SRS ports, the M SRS ports include a first SRS port and a second SRS port, and the first SRS port and the second SRS port are mapped to different time domain resources.

```
┌──────────────────────────────────────────────────────────┐
│  receiving, by a terminal, configuration information of    │   S210
│  an SRS resource tranmistted by a network device           │
└──────────────────────────────────────────────────────────┘
                            │
                            ▼
┌──────────────────────────────────────────────────────────┐
│  transmitting, by the terminal, SRS to the network device  │   S211
│  based on the configuration information of the SRS          │
│  resource, wherein the SRS resource corresponds to M SRS   │
│  ports, the M SRS ports comprise a first SRS port and a    │
│  second SRS port, the first SRS port and the second SRS    │
│  port are mapped to different time domain resources         │
└──────────────────────────────────────────────────────────┘
```

FIG. 2a

**Description**

**CROSS-REFERENCE TO RELATED APPLICATIONS**

The disclosure claims the priority to Chinese patent application No.202210419466.X filed on April 20, 2022, and Chinese patent application No. 202310154012.9 filed on February 17, 2023, which are incorporated in their entirety herein by reference.

**TCHNICAL Field**

The disclosure relates to the technical field of radio communication, and particularly relates to a method for transmitting a reference signal, an apparatus, and a storage medium.

**BACKGROUND**

In a new radio (NR) access technology system of the 3rd generation partnership project (3GPP), sounding reference signaling (SRS) can be used in acquisition of uplink channel state information (CSI), acquisition of downlink CSI and beam management.

At present, uplink transmission supports at most 4 transmission antennas. Thus, a current system only supports SRS resources with 1, 2 or 4 antenna ports. With increase in terminal types, some terminals can support at most 8 transmission antennas. In this case, if a current SRS transmission mode is still used, mutual interference and performance degradation will be caused since at least two of eight SRS ports of an SRS resource with 8 antenna ports use a same cyclic shift on a same time-frequency resource.

**SUMMARY**

Examples of the disclosure provide a method for transmitting a reference signal, an apparatus, and a storage medium, so as to reduce interference between different sounding reference signaling (SRS) ports.

A first aspect provides a method for transmitting a reference signal. The method includes: receiving configuration information of an SRS resource transmitted by a network device; and transmitting SRS to the network device based on the configuration information of the SRS resource. The SRS resource corresponds to M SRS ports. The M SRS ports include a first SRS port and a second SRS port. The first SRS port and the second SRS port are mapped to different time domain resources. M is an integer greater than 1.

Alternatively, the M SRS ports include N groups of SRS ports. N is an integer greater than 1. The first SRS port and the second SRS port belong to different groups of SRS ports.

Alternatively, the transmitting SRS to the network device based on the configuration information of the SRS resource includes: determining a resource mapping scheme of the SRS and/or a cyclic shift corresponding to the SRS based on the configuration information of the SRS resource; and performing resource mapping of the M SRS ports according to the resource mapping scheme of the SRS. The resource mapping scheme includes one of a first resource mapping scheme and a second resource mapping scheme.

In the first resource mapping scheme, different groups of SRS ports of the N groups of SRS ports are mapped to different time domain resources.

In the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, and at least two groups of SRS ports of the N groups of SRS ports are mapped to different frequency domain resource groups. Both N1 and N2 are integers greater than or equal to 1.

Alternatively, after the receiving configuration information of an SRS resource transmitted by a network device, the method further includes: determining one or more of the N groups of SRS ports included in the M SRS ports, resource mapping corresponding to the M SRS ports, and SRS sequences corresponding to the M SRS ports based on one or more of a number M of the SRS ports, an SRS sequence generation parameter corresponding to the SRS resource and a transmission comb number.

Alternatively, before the transmitting SRS to the network device, the method further includes: receiving indication information transmitted by the network device. The indication information includes one or more of the following information:

at least one of a group number N of the N groups of SRS ports included in the M SRS ports, a number N1 of time domain resource groups, and a number N2 of frequency domain resource groups;
an SRS sequence generation parameter; and
time domain resource mapping mode information of the SRS.

Alternatively, the SRS sequence generation parameter includes: a maximum number of cyclic shifts; and/or cyclic shift configuration.

Alternatively, the indication information is included in the configuration information of the SRS resource. Alternatively, the indication information is independent of the configuration information of the SRS resource.

Alternatively, the first resource mapping scheme includes at least one of the following items:

SRS ports of a same group of SRS ports of the N groups of SRS ports are mapped to a same time domain resource;

the M SRS ports are mapped to a same frequency domain resource;
SRS ports of at least one group of SRS ports of the N groups of SRS ports are mapped to a plurality of time domain units in one time slot, where the plurality of time domain units are continuous or discontinuous in time;
SRS ports of at least one group of SRS ports of the N groups of SRS ports are mapped to a plurality of frequency domain units, where the plurality of frequency domain units are continuous or discontinuous in frequency;
a number of frequency domain units mapped by each SRS port of the M SRS ports is the same;
SRS ports mapped onto adjacent time domain symbols are different;
a number of time domain units mapped by each SRS port of the M SRS ports is the same; and
serial numbers of the SRS ports of the same group of SRS ports of the N groups of SRS ports are adjacent to each other, or, an interval between serial numbers of the SRS ports of the same group of SRS ports of the N groups of SRS ports is K, where K is a multiple of 2 or 4.

Alternatively, the number of time domain units mapped by each SRS port of the M SRS ports is the same includes:

the number of the time domain units mapped by each SRS port of the M SRS ports equals to $\frac{1}{N}$ of a number of time domain units configured by the network device for the SRS resource.

Alternatively, the second resource mapping scheme includes at least one of the following items:

different groups of SRS ports of the N groups of SRS ports are mapped to different time domain resource groups and different frequency domain resource groups;
N1 groups of SRS ports of the N groups of SRS ports are mapped to different time domain resource groups and a same frequency domain resource group;
N2 groups of SRS ports of the N groups of SRS ports are mapped to different frequency domain resource groups and a same time domain resource group;
SRS ports of a same group of SRS ports of the N groups of SRS ports are mapped to a same time-frequency resource;
a number of time domain units mapped by each SRS port of the M SRS ports is the same;
a number of frequency domain units mapped by each SRS port of the M SRS ports is the same; and
serial numbers of the SRS ports of the same group of SRS ports of the N groups of SRS ports are adjacent to each other, or, an interval between serial numbers of the SRS ports of the same group of SRS ports of the N groups of SRS ports is K, where K is a multiple of 2 or 4.

Alternatively, in a case that the number of time domain units mapped by each SRS port of the M SRS ports is the same, the number of the time domain units to which each SRS port is mapped equals to $\frac{1}{N1}$ of a number of time domain units configured by the network device for the SRS resource.

Alternatively, in a case that the number of frequency domain units mapped by each SRS port of the M SRS ports is the same, the number of the frequency domain units to which each SRS port is mapped equals to $\frac{1}{N2}$ of a number of frequency domain units configured by the network device for the SRS resource.

Alternatively, the transmitting SRS to the network device based on the configuration information of the SRS resource includes: determining transmission power of the SRS based on the configuration information of the SRS resource; and transmitting the SRS to the network device based on the transmission power of the SRS. In a case of performing resource mapping of the M SRS ports based on the first resource mapping scheme, the determining transmission power of the SRS based on the configuration information of the SRS resource includes at least one of the following items:

determining transmission power of the SRS ports of the M SRS ports based on at least one of the number M of the SRS ports and the group number N of the N groups of SRS ports;

determining transmission power of SRS ports of a first group of SRS ports based on a number of the SRS ports included in the first group of SRS ports, where the first group of SRS ports is one group of SRS ports of the N groups of SRS ports included in the M SRS ports; and

determining transmission power of each SRS port of the M SRS ports based on a maximum value of a number of the SRS ports of the N groups of SRS ports.

Alternatively, the determining transmission power of the SRS ports of the M SRS ports based on at least one of the number M of the SRS ports and the group number N of the N groups of SRS ports includes at least one of the following items:

determining the transmission power of each SRS port of the M SRS ports based on $\dfrac{N}{M}$; and

determining that the transmission power of each SRS port of the M SRS ports equals to M of transmission power computed based on an SRS power control process.

Alternatively, the transmitting SRS to the network device based on the configuration information of the SRS resource includes: determining transmission power of the SRS based on the configuration information of the SRS resource; and transmitting the SRS to the network device based on the transmission power. In a case of performing resource mapping of the M SRS ports based on the second resource mapping scheme, the determining transmission power of the SRS based on the configuration information of the SRS resource includes at least one of the following items:

determining transmission power of the SRS ports of the M SRS ports based on at least one of the number M of the SRS ports, the group number N of the N groups of SRS ports, and a number N1 of the time domain resource groups;

determining transmission power of SRS ports transmitted on a first time domain resource group based on a number of the SRS ports transmitted on the first time domain resource group, where the first time domain resource group is any one of the N1 time domain resource groups;

determining transmission power of each SRS port of the M SRS ports based on a maximum value of a number of the SRS ports included in each time domain resource group of the N1 time domain resource groups;

determining transmission power of SRS ports of a first group of SRS ports based on a number of the SRS ports included in the first group of SRS ports, where the first group of SRS ports is any one of the N groups of SRS ports; and

determining transmission power of each SRS port of the M SRS ports based on a maximum value of a number of the SRS ports of the N groups of SRS ports.

Alternatively, the determining transmission power of the SRS ports of the M SRS ports based on at least one of the number M of the SRS ports, the group number N of the N groups of SRS ports, and a number N1 of the time domain resource groups includes at least one of the following items:

determining the transmission power of each SRS port of the M SRS ports based on $\dfrac{N1}{M}$;

determining that the transmission power of each SRS port of the M SRS ports equals to $\dfrac{N1}{M}$ of transmission power computed based on an SRS power control process;

determining the transmission power of each SRS port of the M SRS ports based on $\dfrac{N}{M}$; and

determining that the transmission power of each SRS port of the M SRS ports equals to $\dfrac{N}{M}$ of transmission power computed based on an SRS power control process.

Alternatively, a value of N is 1, 2, 4, 6, or 8.

Alternatively, a value of N1 is 1, 2, 4, 6, or 8; and/or a value of N2 is 1, 2, 4, 6, or 8.

Alternatively, cyclic shifts corresponding to the sequences of the M SRS ports satisfy at least one of the following items conditions:

different SRS ports of the same group of SRS ports of the N groups of SRS ports correspond to different cyclic shifts;

and

different groups of SRS ports of the N groups of SRS ports correspond to a same cyclic shift.

A second aspect provides a method for transmitting a reference signal. The method includes:

transmitting configuration information of an SRS resource to a terminal; and
receiving SRS transmitted by the terminal based on the configuration information of the SRS resource. The SRS resource corresponds to M SRS ports. The M SRS ports include a first SRS port and a second SRS port. The first SRS port and the second SRS port are mapped to different time domain resources.

Alternatively, the M SRS ports include N groups of SRS ports. N is an integer greater than 1. The first SRS port and the second SRS port belong to different groups of SRS ports.

Alternatively, the M SRS ports are mapped to a time-frequency resource based on a first resource mapping scheme or a second resource mapping scheme.

In the first resource mapping scheme, different groups of SRS ports of the N groups of SRS ports are mapped to different time domain resources.

In the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, and at least two groups of SRS ports of the N groups of SRS ports are mapped to different frequency domain resource groups. Both N1 and N2 are integers greater than or equal to 1.

Alternatively, before the receiving SRS transmitted by the terminal based on the configuration information of the SRS resource, the method further includes: determining a resource mapping scheme of the SRS and/or a sequence corresponding to the SRS based on at least one of a number M of the SRS ports, a group number N of the N groups of SRS ports included in the M SRS ports, a number N1 of the time domain resource groups, a number N2 of the frequency domain resource groups, a transmission comb number, and an SRS sequence generation parameter.

Alternatively, the method further includes: transmitting indication information to the terminal. The indication information includes one or more of the following information: at least one of a group number N of the N groups of SRS ports included in the M SRS ports, a number N1 of time domain resource groups, and a number N2 of frequency domain resource groups;

an SRS sequence generation parameter; and
time domain resource mapping mode information of the SRS.

Alternatively, the SRS sequence generation parameter includes: a maximum number of cyclic shifts; and/or cyclic shift configuration.

Alternatively, the indication information is included in the configuration information of the SRS resource. Alternatively, the indication information is independent of the configuration information of the SRS resource.

Alternatively, the first resource mapping scheme includes at least one of the following items:

SRS ports of a same group of SRS ports of the N groups of SRS ports are mapped to a same time domain resource;
the M SRS ports are mapped to a same frequency domain resource;
SRS ports of at least one group of SRS ports of the N groups of SRS ports are mapped to a plurality of time domain units in one time slot, where the plurality of time domain units are continuous or discontinuous in time;
SRS ports of at least one group of SRS ports of the N groups of SRS ports are mapped to a plurality of frequency domain units, where the plurality of frequency domain units are continuous or discontinuous in frequency;
a number of frequency domain units mapped by each SRS port of the M SRS ports is the same;
SRS ports mapped onto adjacent time domain symbols are different;
a number of time domain units mapped by each SRS port of the M SRS ports is the same; and
serial numbers of the SRS ports of the same group of SRS ports of the N groups of SRS ports are adjacent to each other, or, an interval between serial numbers of the SRS ports of the same group of SRS ports of the N groups of SRS ports is K, where K is a multiple of 2 or 4.

Alternatively, the number of time domain units mapped by each SRS port of the M SRS ports is the same includes:

the number of the time domain units mapped by each SRS port of the M SRS ports equals to $\frac{1}{N}$ of a number of time domain units configured by the network device for the SRS resource.

Alternatively, the second resource mapping scheme includes at least one of the following items:

different groups of SRS ports of the N groups of SRS ports are mapped to different time domain resource groups and different frequency domain resource groups;

N1 groups of SRS ports of the N groups of SRS ports are mapped to different time domain resource groups and a same frequency domain resource group;

N2 groups of SRS ports of the N groups of SRS ports are mapped to different frequency domain resource groups and a same time domain resource group;

SRS ports of a same group of SRS ports of the N groups of SRS ports are mapped to a same time-frequency resource;

a number of time domain units mapped by each SRS port of the M SRS ports is the same;

a number of frequency domain units mapped by each SRS port of the M SRS ports is the same; and

serial numbers of the SRS ports of the same group of SRS ports of the N groups of SRS ports are adjacent to each other, or, an interval between serial numbers of the SRS ports of the same group of SRS ports of the N groups of SRS ports is K, where K is a multiple of 2 or 4.

Alternatively, in a case that the number of time domain units mapped by each SRS port of the M SRS ports is the same, the number of the time domain units to which each SRS port is mapped equals to $\frac{1}{N1}$ of a number of time domain units configured by the network device for the SRS resource.

Alternatively, in a case that the number of frequency domain units mapped by each SRS port of the M SRS ports is the same, the number of the frequency domain units to which each SRS port is mapped equals to $\frac{1}{N2}$ of a number of frequency domain units configured by the network device for the SRS resource.

Alternatively, in a case of performing resource mapping of the M SRS ports based on the first resource mapping scheme, transmission power of the SRS is determined through at least one of the following items:

determining transmission power of the SRS ports of the M SRS ports based on at least one of the number M of the SRS ports and the group number N of the N groups of SRS ports;

determining transmission power of SRS ports of a first group of SRS ports based on a number of the SRS ports included in the first group of SRS ports, where the first group of SRS ports is one group of SRS ports of the N groups of SRS ports included in the M SRS ports; and

determining transmission power of each SRS port of the M SRS ports based on a maximum value of a number of the SRS ports of the N groups of SRS ports.

Alternatively, the determining transmission power of the SRS ports of the M SRS ports based on at least one of the number M of the SRS ports and the group number N of the N groups of SRS ports includes at least one of the following items:

determining the transmission power of each SRS port of the M SRS ports based on $\frac{N}{M}$ ; and

determining that the transmission power of each SRS port of the M SRS ports equals to M of transmission power computed based on an SRS power control process.

Alternatively, in a case of performing resource mapping of the M SRS ports based on the second resource mapping scheme, transmission power of the SRS is determined through at least one of the following items:

determining transmission power of the SRS ports of the M SRS ports based on at least one of the number M of the SRS ports, the group number N of the N groups of SRS ports, and a number N1 of the time domain resource groups;

determining transmission power of SRS ports transmitted on a first time domain resource group based on a number of the SRS ports transmitted on the first time domain resource group, where the first time domain resource group is any one of the N1 time domain resource groups;

determining transmission power of each SRS port of the M SRS ports based on a maximum value of a number of the SRS ports included in each time domain resource group of the N1 time domain resource groups;

determining transmission power of SRS ports of a first group of SRS ports based on a number of the SRS ports included in the first group of SRS ports, where the first group of SRS ports is any one of the N groups of SRS ports; and

determining transmission power of each SRS port of the M SRS ports based on a maximum value of a number of the SRS ports of the N groups of SRS ports.

Alternatively, the determining transmission power of the SRS ports of the M SRS ports based on at least one of the number M of the SRS ports, the group number N of the N groups of SRS ports, and a number N1 of the time domain resource groups includes at least one of the following items:

determining the transmission power of each SRS port of the M SRS ports based on $\dfrac{N1}{M}$;

determining that the transmission power of each SRS port of the M SRS ports equals to $\dfrac{N1}{M}$ of transmission power computed based on an SRS power control process;

determining the transmission power of each SRS port of the M SRS ports based on $\dfrac{N}{M}$; and

determining that the transmission power of each SRS port of the M SRS ports equals to M of transmission power computed based on an SRS power control process.

Alternatively, a value of N is 1, 2, 4, 6, or 8.

Alternatively, a value of N1 is 1, 2, 4, 6, or 8; and/or a value of N2 is 1, 2, 4, 6, or 8.

Alternatively, cyclic shifts corresponding to the sequences of the M SRS ports satisfy at least one of the following items conditions:

different SRS ports of the same group of SRS ports of the N groups of SRS ports correspond to different cyclic shifts; and

different groups of SRS ports of the N groups of SRS ports correspond to a same cyclic shift.

A third aspect provides a terminal. The terminal includes: a processing unit, a receiving unit, and a transmitting unit.

The receiving unit is configured to receive configuration information of an SRS resource transmitted by a network device. The transmitting unit is configured to transmit SRS to the network device based on the configuration information of the SRS resource. The SRS resource corresponds to M SRS ports. The M SRS ports include a first SRS port and a second SRS port. The first SRS port and the second SRS port are mapped to different time domain resources.

A fourth aspect provides a network device. The network device includes: a processing unit, a receiving unit, and a transmitting unit.

The transmitting unit is configured to transmit configuration information of an SRS resource to a terminal. The receiving unit is configured to receive SRS transmitted by the terminal based on the configuration information of the SRS resource. The SRS resource corresponds to M SRS ports. The M SRS ports include a first SRS port and a second SRS port. The first SRS port and the second SRS port are mapped to different time domain resources.

A fifth aspect provides a communication apparatus. The communication apparatus includes: at least one processor; a memory communicatively connected to the at least one processor; and a transceiver communicatively connected to the at least one processor. The transceiver receives and transmits data under control of the at least one processor. The memory stores a computer instruction executable by the at least one processor. The at least one processor is configured to read the computer instruction and execute any one of the above methods according to the first aspect.

A sixth aspect provides a communication apparatus. The communication apparatus includes: at least one processor; a memory communicatively connected to the at least one processor; and a transceiver communicatively connected to the at least one processor. The transceiver receives and transmits data under control of the at least one processor. The memory stores a computer instruction executable by the at least one processor. The at least one processor is configured to read the computer instruction and execute any one of the above methods according to the second aspect.

A seventh aspect provides a computer-readable storage medium. The computer-readable storage medium stores an instruction executable by a computer. The instruction executable by the computer is configured to cause the computer to execute any one of the above methods according to the first aspect, or any one of the above methods according to the second aspect.

An eighth aspect provides a computer program product. When the computer program product is invoked by a computer, the computer is caused to execute any one of the above methods according to the first aspect, or any one of the above methods according to the second aspect.

In the examples of the disclosure, the M SRS ports corresponding to the SRS resource include the first SRS port and the second SRS port, and the first SRS port and the second SRS port are mapped to different time domain resources, such that large interference between a plurality of SRS ports of a same SRS resource can be avoided.

## BRIEF DESCRIPTION OF DRAWINGS

In order to more clearly illustrate technical solutions of examples of the disclosure, the drawings required for the examples of the disclosure will be described briefly below. Obviously, the drawings in the following description are merely some examples of the disclosure. Those of ordinary skill in the art can also obtain other drawings according to these drawings without creative efforts.

FIG. 1 is a schematic diagram of a network structure to which an example of the disclosure is applicable;

FIG. 2a is a schematic flow diagram of a method for transmitting sounding reference signaling (SRS) implemented by a terminal according to an example of the disclosure;

FIG. 2b is a schematic flow diagram of a method for transmitting SRS implemented by a network device according to an example of the disclosure;

FIG. 3 is a schematic flow diagram of a method for transmitting SRS based on a first resource mapping scheme according to an example of the disclosure;

FIG. 4 is a schematic flow diagram of a method for transmitting SRS based on a second resource mapping scheme according to an example of the disclosure;

FIG. 5 is a schematic structural diagram of a terminal according to an example of the disclosure;

FIG. 6 is a schematic structural diagram of a network device according to an example of the disclosure; and

FIG. 7 is a schematic structural diagram of a communication apparatus according to an example of the disclosure.

## DETAILED DESCRIPTION OF THE INVENTION

To make objectives, technical solutions, and advantages of the disclosure clearer, the disclosure will be further described in detail with reference to the accompanying drawings. Obviously, the described examples are merely some examples rather than all examples of the disclosure. based on the examples of the disclosure, all other examples obtained by those of ordinary skill in the art without making creative efforts fall within the protection scope of the disclosure.

To facilitate understanding of those skilled in the art, some terms in the example of the disclosure will be explained below.

(1) In the example of the disclosure, the terms "network" and "system" are generally used interchangeably, and their meanings can be understood by those skilled in the art.

(2) In the example of the disclosure, the term "a plurality of" refers to two or above, and the other quantifiers are understood in a similar way.

(3) When describing an association relation of associated objects, "and/or" indicates that there may be three relations, For example, A and/or B may indicate that A exists alone, both A and B exist, or B exists alone. The character "/" generally indicates an "or" relation between two associated context objects.

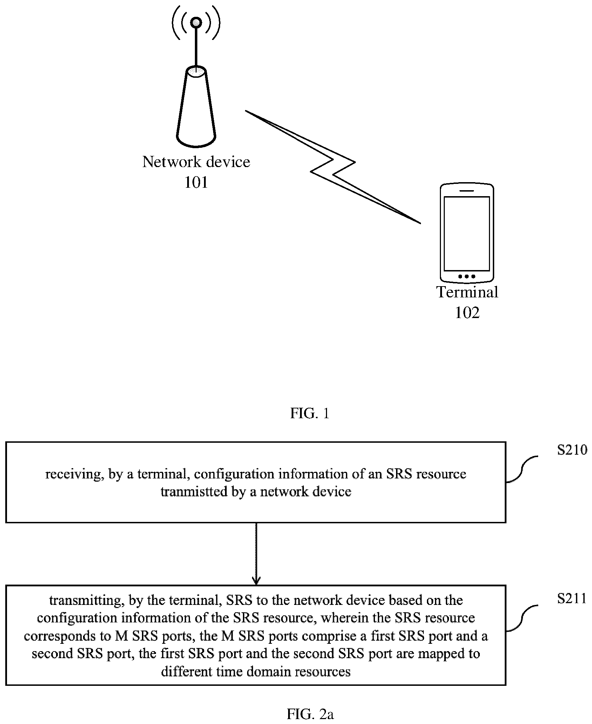

FIG. 1 illustratively shows a structure of a network system to which an example of the disclosure is applicable. A communication system shown in FIG. 1 includes a network device 101 and a terminal 102. The network device 101 may transmit configuration information of a sounding reference signaling (SRS) resource to the terminal 102. The terminal 102 may transmit SRS corresponding to the SRS resource to the network device 101 according to the configuration information of the SRS resource received. The terminal 102 may further transmit uplink data to the network device 101. The network device 101 may perform Uplink channel estimation according to the received SRS, obtain uplink channel state information (CSI), and further perform beam management.

The network device 101 is a device configured to provide a radio communication function for a terminal, and is configured to receive an uplink signal from the terminal 102 or transmit a downlink signal to the terminal 102. The network device 101 includes, but is not limited to, a g-node B (gNB) in the 5th-generation mobile communication technology (5G), a radio network controller (RNC), a node B (NB), a base station controller (BSC), a base transceiver station (BTS), a home base station (For example, a home evolved node B or a home node B (HNB)), a baseband unit (BBU), a transmitting and receiving point (TRP), a transmitting point (TP), a mobile switching center, etc. A base station of the disclosure may also be a device configured to provide a radio communication function for a terminal in other communication systems that may appear in the future.

The terminal 102 is an entity configured to receive or transmit signals at a user side, and is configured to transmit an uplink signal to the network device or receive a downlink signal from the network device. The terminal may also be referred to as user equipment (UE). The terminal 102 may be a device configured to provide voice and/or data connectivity for a user. For example, the terminal may include a handheld device having a radio connection function, a vehicular device, etc. At present, the terminal may be: a mobile phone, a tablet computer, a notebook computer, a handheld computer, a mobile Internet device (MID), a wearable device, a virtual reality (VR) device, an augmented reality (AR) device, a radio terminal in industrial control, a radio terminal in self-driving, a radio terminal in smart grid, a radio terminal in transportation safety, a radio terminal in smart city, a radio terminal in smart home, etc.

FIG. 1 is only an example, and does not limit a type of a communication system and a number and types of devices included in the communication system. A network structure and service scenes according to the examples of the disclosure are intended to describe the technical solution of the examples of the disclosure instead of limiting the technical solution according to the examples of the disclosure. Those of ordinary skill in the art may understand that the technical solution according to the examples of the disclosure is also applicable to similar technical problems with evolution of the network structure and emergence of new service scenes.

interference in a plurality of SRS having overlapping time-frequency domain resources can be reduced through sequences corresponding to different cyclic shifts. However, in a case that a large number of SRS ports (For example, 8 SRS ports), traditional SRS sequence generating and resource mapping methods can cause mutual interference and performance degradation since at least two of the SRS ports use a same cyclic shift on a same time-frequency resource.

In view of this, the examples of the disclosure provide a method for transmitting SRS, and an apparatus, so as to reduce interference between different SRS ports. The method and the apparatus are based on a same inventive concept. The method and the apparatus have similar problem-solving principles. Thus, mutual reference may be made to implementation of the apparatus and implementation of the method, which will not be repeated herein.

An antenna port according to the example of the disclosure is mainly an antenna port of SRS, or referred to as an SRS port or an SRS antenna port.

Meanings of an SRS port group, N groups of SRS ports and OFDM symbols involved in the example of the disclosure are equivalent.

The examples of the disclosure are applicable to various communication systems, including, but not limited to, a 5G system (For example, a new radio (NR) system), a 6th-generation (6G) system, or evolution systems thereof, other systems based on orthogonal frequency division multiplexing (OFDM), or other systems based on discrete fourier transform-spread OFDM (DFT-S-OFDM).

A flow of a method for transmitting a reference signal according to the example of the disclosure will be described in detail with reference to the accompanying drawings.

FIG. 2a is a schematic flow diagram of a method for transmitting a reference signal implemented by a terminal according to an example of the disclosure. As shown, the flow may include the following steps:

S210: the terminal receives configuration information of an SRS resource transmitted by a network device.

Alternatively, the configuration information of the SRS resource includes a number of SRS ports, a starting symbol, a number of time domain symbols occupied, etc.

S211: the terminal transmits SRS to the network device based on the configuration information of the SRS resource.

The SRS resource corresponds to M SRS ports. The M SRS ports include a first SRS port and a second SRS port. The first SRS port and the second SRS port are mapped to different time domain resources. The SRS resource corresponds to the M SRS ports, which may be understood as follows: the SRS resource is configured with a plurality of SRS ports, or, the SRS resource includes a plurality of SRS ports.

In the above flow, the M SRS ports corresponding to the SRS resource include the first SRS port and the second SRS port, and the first SRS port and the second SRS port are mapped to different time domain resources. In this way, interference between the first SRS port and the second SRS port cannot be caused through a same cyclic shift. Further, one SRS resource may include more SRS ports, and large mutual interference between the plurality of SRS ports cannot be caused. Alternatively, in S211, the terminal may determine a resource mapping scheme of the SRS and/or a cyclic shift corresponding to the SRS based on the configuration information of the SRS resource, and perform resource mapping on the M SRS ports according to the resource mapping scheme of the SRS.

Alternatively, the SRS ports may be grouped in the example of the disclosure. The M SRS ports include N groups of SRS ports. N is an integer greater than 1. The first SRS port and the second SRS port belong to different groups of SRS ports.

Alternatively, a value of N is 1, 2, 4, 6, 8, etc.

Alternatively, the SRS ports may be grouped in the example of the disclosure in the following modes.

In response to determining that the number of SRS ports configured for the SRS resource is M, assuming that serial numbers of the M SRS ports are: $p_i = 1000 + i$ and $i = 0, ..., M - 1$, $\{x_1, ..., x_m\}$ is used to indicate that SRS ports numbered $x_1, ..., x_m$ constitute one group of SRS ports.

Alternatively, each group of SRS ports includes a same number of SRS ports.

Alternatively, serial numbers of the SRS ports of each group of SRS ports satisfy one of the following conditions:

The serial numbers (that is, index or ID) of the SRS ports of each group of SRS ports are adjacent. That is, serial numbers of SRS ports of any group of SRS ports are adjacent.

An interval between the serial numbers of the SRS ports of each group of SRS ports is K (K is an integer greater than 1). Alternatively, K may be a multiple of 2 or 4. For example, odd-numbered SRS ports constitute one group, and even-numbered SRS ports constitute another group.

Alternatively, in some examples, each group of SRS ports of the N groups of SRS ports includes the same number of SRS ports.

Some possible modes of grouping the SRS ports will be introduced below:

For M=8, some possible modes of grouping the SRS ports (the following numbers indicate the serial numbers of the SRS ports, and the serial numbers of all SRS ports of one group of SRS ports are included in one pair of brackets) are as follows:

{1000, 1001, 1004, 1005}, and {1002, 1003, 1006, 1007}, where 1000, 1001, 1004 and 1005 constitute one group; and 1002, 1003, 1006 and 1007 constitute another group;

{1000, 1001, 1002, 1003}, and {1004, 1005, 1006, 1007}, where 1000, 1001, 1002 and 1003 constitute one group; and 1004, 1005, 1006 and 1007 constitute another group;

{1000, 1001}, {1002, 1003}, {1004, 1005}, and {1006, 1007}, where 1000 and 1001 constitute one group, and 1002 and 1003 constitute another group; and 1004 and 1005 constitute one group, and 1006 and 1007 constitute another group;

{1000}, {1001}, {1002}, {1003}, {1004}, {1005}, {1006}, and {1007} constitute 8 groups, and each SRS port constitutes one group;

{1006, 1007}, and {1001, 1003, 1004, 1005, 1000, 1002}, where 1006 and 1007 constitute one group, and 1001, 1003, 1004, 1005, 1000 and 1002 constitute another group;

{1000, 1002, 1004, 1006}, and {1001, 1003, 1005, 1007}, where 1000, 1002, 1004 and 1006 constitute one group; and 1001, 1003, 1005 and 1007 constitute another group;

{1000, 1002}, {1004, 1006}, {1001, 1003}, and {1005, 1007}, where 1000 and 1002 constitute one group, and 1004 and 1006 constitute another group; and 1001 and 1003 constitute one group, and 1005 and 1007 constitute another group;

{1000, 1004}, {1001, 1005}, {1002, 1006}, and {1003, 1007}, where 1000 and 1004 constitute one group, and 1001 and 1005 constitute another group; and 1002 and 1006 constitute one group, and 1003 and 1007 constitute another group;

{1000, 1002}, and {1001, 1003, 1004, 1005, 1006, 1007}, where 1000 and 1002 constitute one group, and 1001, 1003, 1004, 1005, 1006 and 1007 constitute another group;

{1000, 1004}, and {1001, 1003, 1002, 1005, 1006, 1007}, where 1000 and 1004 constitute one group, and 1001, 1003, 1002, 1005, 1006 and 1007 constitute another group; and

{1000, 1007}, and {1001, 1003, 1004, 1005, 1006, 1002}, where 1000 and 1007 constitute one group, and 1001, 1003, 1004, 1005, 1006 and 1002 constitute another group.

For M=4, some possible grouping modes (the following numbers indicate the serial numbers of the SRS ports, and the serial numbers of all SRS ports of one group of SRS ports are included in one pair of brackets) are as follows:

{1000, 1001}, and {1002, 1003}, where 1000 and 1001 constitute one group, and 1002 and 1003 constitute another group;

{1000, 1002}, and {1001, 1003}, where 1000 and 1002 constitute one group, and 1001 and 1003 constitute another group; and

{1000}, {1001}, {1002}, {1003} and {1004} constitute 4 groups, and each antenna port constitutes one group.

For M=2, possible grouping modes (the following numbers indicate the serial numbers of the SRS ports, and the serial numbers of all SRS ports of one group of SRS ports are included in one pair of brackets) are as follows:

{1000} and {1001} constitute 2 groups, and each SRS port constitutes one group.

Alternatively, in some examples, at least two groups of SRS ports of the N groups of SRS ports include different numbers of SRS ports.

For example, for M=8, some possible modes (the following numbers indicate the serial numbers of the SRS ports, and the serial numbers of all SRS ports of one group of SRS ports are included in one pair of brackets) are as follows:

{1000, 1001}, and {1002, 1003, 1004, 1005, 1006, 1007}, where 1000 and 1001 constitute one group, and 1002, 1003, 1004, 1005, 1006 and 1007 constitute another group;

{1000, 1002}, and {1001, 1003, 1004, 1005, 1006, 1007}, where 1000 and 1002 constitute one group, and 1001, 1003, 1004, 1005, 1006 and 1007 constitute another group;

{1000, 1004}, and {1001, 1003, 1002, 1005, 1006, 1007}, where 1000 and 1004 constitute one group, and 1001, 1003, 1002, 1005, 1006 and 1007 constitute another group; and

{1000, 1007}, and {1001, 1003, 1004, 1005, 1006, 1002}, where 1000 and 1007 constitute one group, and 1001, 1003, 1004, 1005, 1006 and 1002 constitute another group.

For M=4, some possible grouping modes (the following numbers indicate the serial numbers of the SRS ports, and the serial numbers of all SRS ports of one group of SRS ports are included in one pair of brackets) are as follows:

{1000}, and {1001, 1002, 1003}, where 1000 constitutes one group, and 1001, 1002 and 1003 constitute another group; and
{1003}, and {1001, 1002, 1000}, where 1003 constitutes one group, and 1001, 1002 and 1000 constitute another group.

Alternatively, after the network device receives the configuration information of the SRS resource transmitted, the terminal may determine one or more of the N groups of SRS ports included in the M SRS ports, resource mapping corresponding to the M SRS ports, and SRS sequences corresponding to the M SRS ports based on one or more of a number M of the SRS ports, an SRS sequence generation parameter corresponding to the SRS resource and a transmission comb number.

Alternatively, in some examples, cyclic shifts corresponding to the sequences of the M SRS ports satisfy the following condition: different SRS ports of a same group of SRS ports correspond to different cyclic shifts. In some other examples, cyclic shifts corresponding to the sequences of the M SRS ports satisfy the following condition: different groups of SRS ports correspond to a same cyclic shift. In some other examples, cyclic shifts corresponding to the sequences of the M SRS ports satisfy the following conditions: different SRS ports of a same group of SRS ports correspond to different cyclic shifts, and different groups of SRS ports correspond to a same cyclic shift.

based on grouping of the SRS ports, the example of the disclosure provides two resource mapping schemes (or resource mapping modes): a first resource mapping scheme and a second resource mapping scheme. The terminal may perform resource mapping of the M SRS ports through one of the resource mapping schemes.

In the first resource mapping scheme, different groups of SRS ports of the N groups of SRS ports are mapped to different time domain resources.

In the second resource mapping scheme, in the N groups of SRS ports, SRS ports of some groups of SRS ports are mapped to different time domain resources, and SRS ports of some groups of SRS ports are mapped to different frequency domain resources. The second resource mapping scheme may also be described as follows: the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, and at least two groups of SRS ports of the N groups of SRS ports are mapped to different frequency domain resource groups. Both N1 and N2 are integers greater than or equal to 1.

Alternatively, a value of N1 is 1, 2, 4, 6, or 8; and/or a value of N2 is 1, 2, 4, 6, or 8.

Alternatively, the product of N1 and N2 is smaller than or equal to N.

In a third resource mapping scheme, the M SRS ports are divided into N groups.

A first group of SRS ports are mapped to first R OFDM symbols, a second group of SRS ports are mapped to (R+1)th to 2Rth OFDM symbols, and so on, until all groups are mapped, and a same frequency hopping pattern continues to be used by remaining OFDM symbols. For example, a first group of SRS ports are mapped to first and second OFDM symbols, a second group of SRS resources are mapped to third and fourth OFDM symbols, and so on, until all SRS port groups are mapped. In response to existence of remaining OFDM symbols, a same pattern continues to be used by the remaining OFDM symbols.

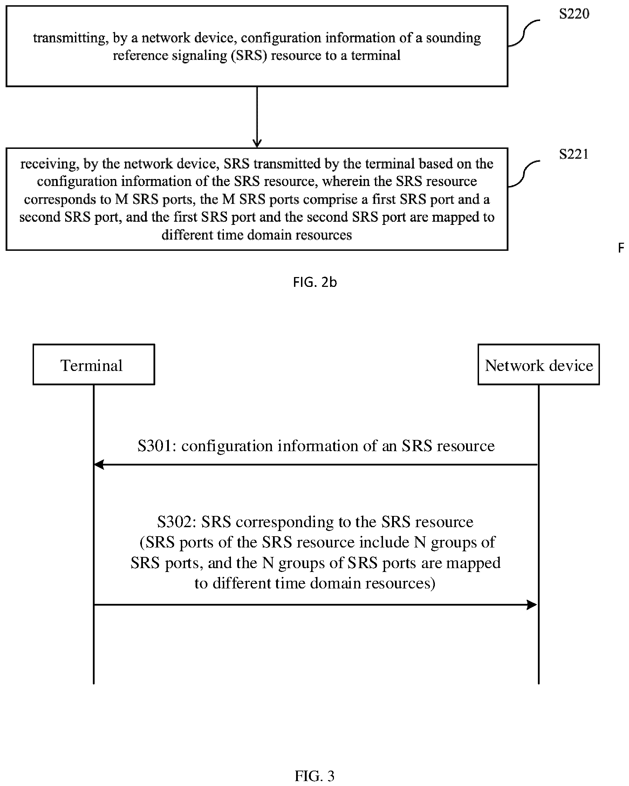

FIG. 2b is a schematic flow diagram of a method for transmitting a reference signal by a network device according to an example of the disclosure. As shown in the figure, the flow may include the following steps:

S220: the network device transmits configuration information of an SRS resource to a terminal.
S221: the network device receives SRS transmitted by the terminal based on the configuration information of the SRS resource.

The SRS resource corresponds to M SRS ports. The M SRS ports include a first SRS port and a second SRS port. The first SRS port and the second SRS port are mapped to different time domain resources. The network device may receive the SRS at a corresponding time-frequency resource position.

In one embodiment, the method may further include the following steps: the network device may determine a resource mapping scheme of the SRS based on at least one of a number M of the SRS ports, a group number N of the N groups of SRS ports included in the M SRS ports, a number N1 of time domain resource groups, a number N2 of frequency domain resource groups, a transmission comb number, and an SRS sequence generation parameter. It may be understood that an SRS receiving process of the network device may include the following steps: the resource mapping scheme of the SRS is determined, and the SRS is received according to the resource mapping scheme of the SRS.

In another embodiment, the method may further include the following steps: the network device may determine a sequence corresponding to the SRS is determined based on at least one of a number M of the SRS ports, a group number N of the N groups of SRS ports included in the M SRS ports, a number N1 of time domain resource groups, a number N2 of frequency domain resource groups, a transmission comb number, and an SRS sequence generation parameter. For example, the network device may determine the sequence by determining a cyclic shift corresponding to the sequence and determining the sequence based on the cyclic shift.

In another embodiment, the method may further include the following steps: the network device may determine a resource mapping scheme of the SRS and a sequence corresponding to the SRS based on at least one of a number M of the SRS ports, a group number N of the N groups of SRS ports included in the M SRS ports, a number N1 of time domain resource groups, a number N2 of frequency domain resource groups, a transmission comb number, and an SRS sequence generation parameter.

Alternatively, the network device may obtain uplink and/or downlink CSI based on the sequence corresponding to the SRS.

Alternatively, the network device may determine scheduling information of the terminal for uplink transmission and/or downlink transmission based on the sequence corresponding to the SRS.

In one embodiment, the M SRS ports include N groups of SRS ports. N is an integer greater than 1. The first SRS port and the second SRS port belong to different groups of SRS ports. Alternatively, a value of N is 1, 2, 4, 6, or 8.

The M SRS ports are mapped to a time-frequency resource according to one of a first resource mapping scheme and a second resource mapping scheme.

In the first resource mapping scheme, different groups of SRS ports of the N groups of SRS ports are mapped to different time domain resources.

In the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, and at least two groups of SRS ports of the N groups of SRS ports are mapped to different frequency domain resource groups. Both N1 and N2 are integers greater than or equal to 1. Alternatively, a value of N1 is 1, 2, 4, 6, or 8; and/or a value of N2 is 1, 2, 4, 6, or 8.

Alternatively, a method for determining power control scaling factors of some SRS ports is as follows:

Solution 1: based on a total number of SRS ports M=8 and a number $N_s^{ap}$ of OFDM symbols to which each SRS port is mapped, a power control scaling factor of SRS is determined as: $s = \dfrac{N_s^{ap}}{M}$.

Solution 2: based on a number $N_{ap}^{s}$ of SRS ports included in one OFDM symbol, s is determined. For example, $s = \dfrac{N_{ap}^{s}}{M}$.

Solution 3: based on a maximum value Mmax of a number of SRS ports included in one OFDM symbol, s is determined. For example, $s = \dfrac{M\max}{M}$.

Solution 4: based on a total number of SRS ports M=8 and the product of a number $N_s^{ap}$ of OFDM symbols to which each SRS port is mapped and a frequency domain comb offset number Nf, a power control scaling factor of SRS is determined as: $s = \dfrac{N_s^{ap} * Nf}{M}$.

In one embodiment, cyclic shifts corresponding to the sequences of the M SRS ports satisfy at least one of the following items conditions:

different SRS ports of the same group of SRS ports of the N groups of SRS ports correspond to different cyclic shifts; and

different groups of SRS ports of the N groups of SRS ports correspond to a same cyclic shift.

It should be noted that a specific embodiment of the method for transmitting SRS (including, For example, a resource mapping scheme) involved in the flow of FIG. 2b is the same as related contents in the flow of FIG. 2a, and will not be repeated herein.

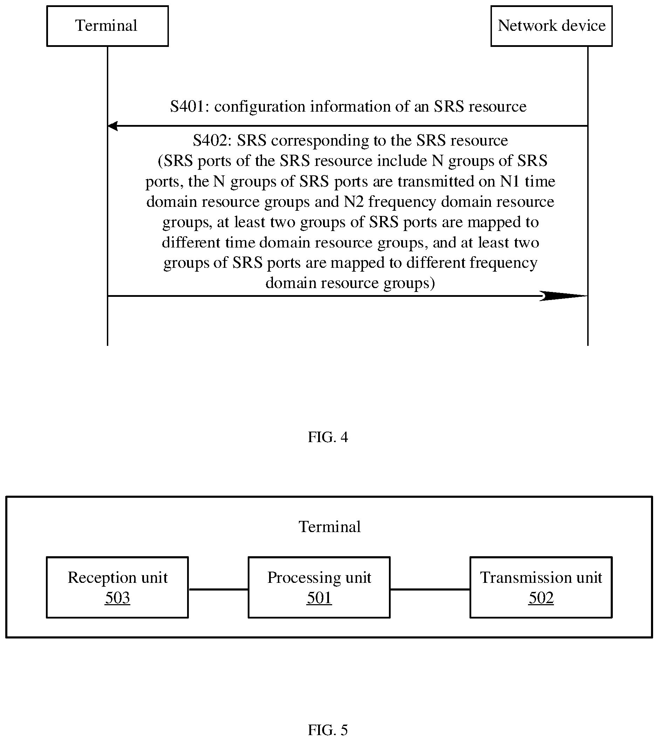

Reference may be made to the flow shown in FIG. 3 for a flow of transmitting a reference signal based on the first resource mapping scheme. Reference may be made to the flow shown in FIG. 4 for a flow of transmitting a reference signal based on the second resource mapping scheme. The flows of transmitting a reference signal based on the first resource mapping scheme and the second resource mapping scheme will be described below with reference to FIG. 3 and FIG. 4, respectively. One SRS port group in Figs. 3 and 4 is one group of SRS ports of the disclosure.

FIG. 3 illustratively shows a schematic diagram of a flow of transmitting a reference signal based on a first resource mapping scheme according to an example of the disclosure. The method may be applied to the network structure shown in FIG. 1, or may be applied to another network structure, which is not limited by the disclosure.

As shown in FIG. 3, the method may include the following processing flows:

S301: A network device may transmit configuration information of an SRS resource to a terminal.

S302: the terminal may receive the configuration information of the SRS resource transmitted by the network device and/or a cyclic shift corresponding to SRS, and transmit the SRS to the network device according to the configuration information of the SRS resource. The network device may receive the SRS at a corresponding time-frequency resource position according to a resource mapping scheme of the SRS.

Alternatively, in S302 of the method, the network device may determine the resource mapping scheme of the SRS and/or a sequence corresponding to the SRS based on at least one of a number M of SRS ports, a group number N of N groups of SRS ports included in the M SRS ports, a number N1 of time domain resource groups, a number N2 of frequency domain resource groups, a transmission comb number, and/or an SRS sequence generation parameter. For example, the network device may determine the sequence by determining a cyclic shift corresponding to the sequence and determining the sequence based on the cyclic shift.

The SRS resource corresponds to the M SRS ports, and M is an integer greater than or equal to 1. Alternatively, a value of M may be 2, 4, 6, 8, 16, etc.

Alternatively, a sequence of an SRS port $p_i$ ( $i \in \left\{0, ..., N_{ap}^{SRS} - 1\right\}$ ) is generated based on $n_{SRS}^{cs,i}$ .

Alternatively, a mode of generating an SRS sequence is as follows:

$$r^{(p_i)}(n, l') = r_{u,v}^{(\alpha_i, \delta)}(n)$$

$$0 \leq n \leq M_{sc,b}^{SRS} - 1$$

$$l' \in \left\{0, 1, ..., N_{symb}^{SRS} - 1\right\}$$

$M_{sc,b}^{SRS}$ denotes a length of the SRS sequence, and $r_{u,v}^{(\alpha,\delta)}(n)$ denotes a sequence generated based on $\delta$, a cyclic shift $\alpha$, and a base sequence. $\delta = \log_2(K_{TC})$, and a transmission comb number $K_{TC} \in \{2,4,8\}$ is configured according to high-level parameters. $M_{sc,b}^{SRS}$ denotes a number of OFDM symbols occupied by the SRS.

The M SRS ports include the N groups of SRS ports. N is an integer greater than or equal to 1. Alternatively, different groups of SRS ports include different numbers of SRS ports. Alternatively, a same SRS port is not included in a plurality of groups of SRS ports. The N groups of SRS ports are mapped to different time domain resources.

It may be understood that the N groups of SRS ports are mapped to different time-frequency resources. That is, in the N groups of SRS ports, SRS ports of any two groups of SRS ports are mapped to different time-frequency resources. For example, a first group of SRS ports and a second group of SRS ports are any two different groups of SRS ports of the N groups of SRS ports. SRS ports of the first group of SRS ports are mapped to a first time domain resource, and SRS ports of the second group of SRS ports are mapped to a second time domain resource. The first time domain resource is different from the second time domain resource. For example, the SRS ports of the first group of SRS ports are mapped to first symbols (a number of the first symbols may be one or more), and the SRS ports of the second group of SRS ports are mapped to second symbols (a number of the second symbols may be one or more). Serial numbers of the first symbols (For example, index or ID) are different from those of the second symbols.

Alternatively, a group number N of the N groups of SRS ports is smaller than or equal to a number of SRS ports configured according to the configuration information of the SRS resource. Alternatively, a value of N is 1, 2, 4, 6, or 8, such that the example of the disclosure may support more SRS ports.

Alternatively, different SRS ports of a same group of SRS ports of the N groups of SRS ports correspond to different cyclic shifts. For example, SRS ports of each group of SRS ports of the N groups of SRS ports have different cyclic shifts, such that mutual interference between different SRS ports can be reduced.

Alternatively, different groups of SRS ports of the N port groups correspond to a same cyclic shift. For example, the N groups of SRS ports may share a same cyclic shift set. A number of cyclic shifts included in the cyclic shift set equals to a number of SRS ports included in one group of SRS ports.

In the flow shown in FIG. 3, the SRS ports are divided into the N groups of SRS ports. During SRS resource mapping, the N groups of SRS ports are mapped to different time domain resources, and time domain resources of any two SRS ports of the SRS resource may be different, such that large interference between a plurality of antenna ports of a same SRS resource can be avoided.

In one embodiment, the configuration information of the SRS resource transmitted by the network device may further include indication information. In another embodiment, the indication information is transmitted independent of the configuration information of the SRS resource. For example, the network device may transmit the indication information to the terminal through an additional message or by multiplexing an existing message (the additional message or the existing message is different from a message configured to transmit the configuration information of the SRS resource). The terminal may receive the indication information transmitted by the network device.

Alternatively, the indication information may include at least one piece of the following information:

the group number N of the N groups of SRS ports, and
the number M of the SRS ports.

Alternatively, the number M of the SRS ports has an association relation to the group number N of the N groups of SRS ports.

Alternatively, the network device may transmit the association relation between the number M of the SRS ports and the group number N of the N groups of SRS ports to the terminal. The terminal may receive the association relation between the number M of the SRS ports and the group number N of the N groups of SRS ports transmitted by the network device. Alternatively, the association relation is included in the configuration information of the SRS resource.

Alternatively, a system may preset a correspondence between the number of the SRS ports and a number of SRS port groups. For example, one possible correspondence includes:

when M<8, N=1; and
when M=8, N=2.

After the terminal receives the configuration information of the SRS resource, the terminal may obtain the number of SRS ports configured by the network device for the terminal according to the configuration information, and the number of corresponding SRS port groups (that is, a group number of a plurality of SRS port groups) may be obtained through inquiry of the correspondence.

The indication information may further include an SRS sequence generation parameter.

Alternatively, the SRS sequence generation parameter corresponds to a time domain resource mapping mode of the SRS. For example, the system may preset a correspondence between the SRS sequence generation parameter and the time domain resource mapping mode of the SRS, and the terminal may query the correspondence according to the SRS sequence generation parameter to obtain a corresponding resource mapping mode of the SRS port.

Alternatively, the network device may transmit the correspondence between the SRS sequence generation parameter and the time domain resource mapping mode of the SRS to the terminal. The terminal may receive the correspondence between the SRS sequence generation parameter and the time domain resource mapping mode of the SRS transmitted by the network device. Alternatively, the correspondence is included in the configuration information of the SRS resource.

Alternatively, the SRS sequence generation parameter may include: a maximum number of cyclic shifts and/or cyclic shift configuration. For example, the sequence generation parameter includes a cyclic shift parameter $n_{SRS}^{cs,max}$, which is configured to indicate the maximum number of cyclic shifts. The terminal may determine frequency domain resource and/or a sequence of the SRS port based on $n_{SRS}^{cs,max}$,

For example, the network device indicates $n_{SRS}^{cs,max}$ through the transmission comb number $K_{TC}$. $K_{TC}$ has a mapping relation to $n_{SRS}^{cs,max}$. For example, a mapping relation shown in FIG. 1 exists.

| Table 1: Mapping relation table between $K_{TC}$ | $n_{SRS}^{cs,max}$ |
|---|---|
| $K_{TC}$ | $n_{SRS}^{cs,max}$ |
| 2 | 8 |
| 4 | 12 |
| 8 | 6 |

The terminal may obtain $n_{SRS}^{cs,max}$ based on $K_{TC}$, and determine the resource mapping mode of the SRS based on $n_{SRS}^{cs,max}$.

A possible correspondence between $n_{SRS}^{cs,max}$ and a time domain mapping mode (or a number of time domain resource groups) of the SRS port includes: when $n_{SRS}^{cs,max} = 6$, N=2; and when $n_{SRS}^{cs,max} = 8$ or 12, N=1.

Alternatively, the terminal may determine the resource mapping mode of the SRS based on the number of SRS port groups and $n_{SRS}^{cs,max}$. For example, when M = 8, $n_{SRS}^{cs,max} = 6$, N=4; and when M = 8, $n_{SRS}^{cs,max} = 8$ or 12, N=2. Alternatively, when M = 1 or 2 or 4, N=1.

Alternatively, the terminal may determine the resource mapping mode of the SRS based on the cyclic shift configuration $n_{SRS}^{cs}$. For example, when a value of $n_{SRS}^{cs}$ is within a first range, N is a first value; and when a value of $n_{SRS}^{cs}$ is within a second range, N is a second value.

For example, the terminal may determine the resource mapping mode of the SRS based on $n_{SRS}^{cs,max}$ and $n_{SRS}^{cs}$. For example, when a value of $n_{SRS}^{cs}$ is smaller than half of $n_{SRS}^{cs,max}$, the M SRS ports are divided into 2 groups (N=2); and when a value of $n_{SRS}^{cs}$ is greater than or equal to half of $n_{SRS}^{cs,max}$, the M SRS ports constitute one group (N=1).

For example, the terminal may determine the resource mapping mode of the SRS based on $n_{SRS}^{cs,max}$, $n_{SRS}^{cs}$, and the number M of the SRS ports. For example, in a case that M=8, when a value of $n_{SRS}^{cs}$ is smaller than half of $n_{SRS}^{cs,max}$, M SRSs are mapped to 2 groups of time domain or frequency domain resources (that is, N=2); and when a value of $n_{SRS}^{cs}$ is greater than or equal to half of $n_{SRS}^{cs,max}$, M SRSs are mapped to a same time-frequency resource (that is, N=1). When M=2, M SRSs are mapped to the same time-frequency resource (that is, N=1).

The indication information may further include time domain resource mapping mode information of the SRS.

Alternatively, the indication information may be configured to indicate whether a plurality of SRS ports are mapped to a plurality of time domain resources (or a time domain resource group, where time domain resources to which one group of SRS ports are mapped constitute one time domain resource group). Alternatively, in response to determining that the indication information indicates that a plurality of SRS ports are mapped to a plurality of time domain resources (or a time domain resource group), the terminal may map the plurality of SRS ports of the SRS resource a plurality of time domain resources (or a time domain resource group).

Alternatively, when the system supports a plurality of time domain mapping modes of the SRS resource, one of the plurality of time domain mapping modes of the SRS resource may be indicated by the indication information, such that the terminal can perform SRS time domain resource mapping using the time domain mapping mode of the SRS resource indicated by the indication information.

For example, the information may indicate one state. One alternative state indicates that all SRS ports are mapped to a same time-frequency resource; and another alternative state indicates that M SRS ports are mapped to 2 groups of time domain resources.

For example, the information may indicate one state. One alternative state indicates that all SRS ports are mapped to a same time-frequency resource; and another alternative state indicates that M SRS ports include 4 groups of SRS ports and are mapped to 2 groups of time domain resources and 2 groups of frequency domain resources, and time-frequency resources of the 4 groups of SRS ports do not overlap each other. For example, in a case of denoting the information by x, x=1 indicates that all SRS ports are mapped to a same time-frequency resource; and x=2 indicates that M SRS ports include 4 groups of SRS ports and are mapped to 2 groups of time domain resources and 2 groups of frequency domain resources, and time-frequency resources of the 4 groups of SRS ports do not overlap each other.

In one embodiment, before the terminal transmit the SRS, the method may further include the following step: the terminal may determine the resource mapping scheme of the SRS. In S302, the terminal may transmit the SRS to the network device according to the resource mapping scheme of the SRS. The network device may receive the SRS transmitted by the termina according to the resource mapping scheme of the SRS. The flow is described with the first resource mapping scheme as an example.

Alternatively, the terminal may determine the resource mapping scheme of the SRS according to the configuration information received of the SRS resource. For example, the terminal may determine the resource mapping scheme of the SRS according to the "time domain resource mapping mode information of the SRS" included in the configuration information of the SRS resource. Alternatively, when the information is transmitted independent of the configuration information of the SRS resource, the terminal may determine the resource mapping scheme of the SRS corresponding to the SRS resource based on the indication information and the configuration information of the SRS resource. For example, the N groups of SRS ports may be mapped to the time domain resource according to a value of the group number N of the N groups of SRS ports.

Alternatively, the first resource mapping scheme of the SRS may include at least one of the following items: SRS ports of a same group of SRS ports of the N groups of SRS ports are mapped to a same time domain resource.

For example, with M=8 as an example, in response to determining that the SRS ports are grouped into {1000, 1004}, {1001, 1005}, {1002, 1006}, and {1003, 1007}, SRS port 1000 and SRS port 1004 are mapped to a same time-frequency resource, SRS port 1001 and SRS port 1005 are mapped to a same time-frequency resource, SRS port 1002 and SRS port 1006 are mapped to a same time-frequency resource, and SRS port 1003 and SRS port 1007 are mapped to a same time-frequency resource. Time-frequency resources to which different groups of SRS ports are mapped are same or different.

For example, with M=8 as an example, in response to determining that the SRS ports are grouped into {1000, 1002, 1004, 1006} and {1001, 1003, 1005, 1007}, SRS ports {1000, 1002, 1004, 1006} are mapped to a same time-frequency resource, SRS ports {1001, 1003, 1005, 1007} are mapped to a same time-frequency resource, and the SRS ports {1000, 1002, 1004, 1006} and the SRS ports {1001, 1003, 1005, 1007} are mapped to different time-frequency resources.

The M SRS ports are mapped to a same frequency domain resource.

SRS ports of at least one group of SRS ports of the N groups of SRS ports are mapped to a plurality of time domain units in one time slot. For example, each SRS port of the M SRS ports is mapped to the plurality of time domain units (that is, the SRS ports of each group of SRS ports are mapped to a plurality of time slot units) in a designated (or given) time slot. Alternatively, the plurality of time domain units are continuous or discontinuous in time. The time domain unit has one example of a symbol, and another example of a subslot or mini-slot (one subslot may include one or a combination of OFDM symbols).

For example, assuming that the M SRS ports are divided into group 1, group 2, ..., and group N, if the SRS resource is configured with 2N OFDM symbols numbered l' = 0,1, ..., 2N-1, an OFDM symbol occupied by the group 1 is l' = {0, 1}, an OFDM symbol occupied by the group 2 is l' = {2, 3}, and similarly, an OFDM symbol occupied by the group N is l' = {2N - 2, 2N - 1}.

For example, assuming that the M SRS ports are divided into group 1 and group 2, if the SRS resource is configured with 8 OFDM symbols numbered l' = 0,1, ..., 7, For example, an OFDM symbol occupied by the group 1 is 1' = {0,2,4,6}, and an OFDM symbol occupied by the group 2 is l' = {1,3,5,7}.

Alternatively, in a plurality of time domain units to which one SRS port is mapped, some time domain units may be located in a first time slot, and the other time slot units may be located in a second time slot, that is, the plurality of time domain units may be distributed across time slots.

SRS ports mapped onto adjacent time domain symbols are different. For example, the SRS ports mapped onto the adjacent time domain symbols are different in the designated (or given) time slot.

For example, in response to determining that the SRS ports of the same group of SRS ports of the N groups of SRS ports are mapped to a plurality of time domain symbols and the plurality of time domain symbols are discontinuous in time, the SRS ports mapped onto the adjacent time domain symbols are different.

Each SRS port of the M SRS ports may be mapped to one or more time domain units (For example, time domain symbols), and a number of time domain units to which each SRS port is mapped is same.

Alternatively, a number of time domain symbols to which each SRS port is mapped equals to $\frac{1}{N}$ of a number of time domain symbols configured by the network device for the SRS resource.

SRS ports of at least one group of SRS ports of the N groups of SRS ports are mapped to a plurality of frequency domain units. The plurality of frequency domain units are continuous or discontinuous in frequency. For example, in response to determining that one group of SRS ports are mapped to a plurality of frequency domain units, the plurality of frequency domain units are discontinuous in time (that is, SRS ports of adjacent frequency domain units are different). The frequency domain unit has one example of a subcarrier, another example of a physical resource block (PRB), yet another example of a PRB group (PRG), and still another example of a subband.

A number of frequency domain units to which each SRS port of the M SRS ports is mapped is same.

Serial numbers of the SRS ports of the same group of SRS ports of the N groups of SRS ports have one of the following possible cases: case (1): the serial numbers of the SRS ports of the same group of SRS ports of the N groups of SRS ports are adjacent, where the serial numbers of the SRS ports are indexes (or IDs) of the SRS ports; case (2): an interval between the serial numbers of the SRS ports of the same group of SRS ports of the N groups of SRS ports is a multiple of 2; and case (3): an interval between the serial numbers of the SRS ports of the same group of SRS ports of the N groups of SRS ports is a multiple of 4.

In one possible embodiment, before the terminal transmits the SRS, the method further includes the following steps: the terminal may determine transmission power of the SRS port; the terminal may transmit the SRS according to the determined transmission power of the SRS port; and the network device may receive the SRS transmitted by the terminal with the transmission power of the SRS port.

Alternatively, the terminal may determine the transmission power of the SRS port in one or a combination of the following modes:

Mode 1: the terminal may determine transmission power of each SRS port of the M SRS ports based on at least one of the number M of the SRS ports and the group number N of the N groups of SRS ports.

Alternatively, the terminal may determine the transmission power of each SRS port of the M SRS ports based on $\frac{N}{M}$. Alternatively, it may be determined that the transmission power of each SRS port of the M SRS ports equals to $\frac{N}{M}$ of transmission power computed based on an SRS power control process.

For example, the terminal may compute first power corresponding to the SRS resource as $P_{SRS}$ based on a power control parameter configured for an SRS resource set where the SRS resource is located and/or the SRS resource by the network device, the transmission power of each SRS port of the SRS resource is: $\frac{N}{M}P_{SRS}$ .

For example, the terminal may compute first power corresponding to the SRS resource as $P_{SRS}$ based on a power control parameter and N configured for an SRS resource set where the SRS resource is located and/or the SRS resource by the network device, the transmission power of each SRS port of the SRS resource is: $\frac{1}{M}P_{SRS}$ .

Mode 2: the terminal may determine transmission power of SRS ports of a first group of SRS ports based on a number of the SRS ports included in the first group of SRS ports, where the first group of SRS ports is any one of the N groups of SRS ports.

The mode may also be described as follows: the terminal may determine transmission power of the SRS ports of each group of SRS ports based on a number of the SRS ports included in each group of SRS ports. For example, when a number of SRS ports included in one group of SRS ports is P, transmission power of each SRS port of the group of SRS ports is power obtained by dividing the transmission power computed in a certain computation mode equally by the P SRS ports. The certain computation mode may be based on the SRS power control process, or configuration of SRS resource set where the SRS resource is located, and/or the power control parameter for SRS resource configured by the network device.

For example, the terminal may compute first power corresponding to the SRS resource as $P_{SRS}$ based on the power control parameter configured for the SRS resource set where the SRS resource is located by the network device and/or the SRS resource by a base station, for each group of SRS ports, $P_{SRS}$ is divided equally by the SRS ports in the group. For example, for an SRS port group including 2 SRS ports, transmission power of each SRS port in the group is $\frac{P_{SRS}}{2}$ ; for an SRS port group including 4 SRS ports, transmission power of each SRS port in the group is $\frac{P_{SRS}}{4}$ ; and for an SRS port group including 1 SRS port, transmission power of the SRS port is $P_{SRS}$.

Mode 3: the terminal may determine transmission power of each SRS port of the M SRS ports based on a maximum value of a number of the SRS ports included in each of the N groups of SRS ports.

For example, when a number of the SRS ports included in the N groups of SRS ports is P1, ..., or PN (where a number of SRS ports included in SRS port group 1 equals to P1, a number of SRS ports included in SRS port group 2 equals to P2, and so on), a maximum value of P1, ..., PN is recorded as Pmax, and Pmax=max{P1, ..., PN}, where an operator max {.} indicates taking a maximum value, the transmission power of each group of SRS ports is one Pmax of the transmission power computed based on the SRS power control process.

For example, the terminal may determine the transmission power of each port of the M SRS ports by combining the mode 1 and the mode 2. For example, for an SRS port group including S SRS ports, transmission power of each SRS port included is $\frac{N}{S}$ of the transmission power computed based on the power control parameter corresponding to the SRS resource. S is a positive integer.

For example, the terminal may determine the transmission power of each port of the M SRS ports by combining the mode 1 and the mode 3. For example, when a maximum number of the number of SRS ports included in each of the N groups of SRS ports is Pmax, transmission power of each SRS port of the M SRS ports is $\frac{P_{max}}{S}$ of the transmission power computed based on the power control parameter corresponding to the SRS resource. S is a positive integer.

After determining the transmission power of each SRS port, the terminal may transmit the SRS according to the transmission power.

FIG. 4 illustratively shows a schematic diagram of a flow of transmitting a reference signal based on a second resource mapping scheme according to an example of the disclosure. The method may be applied to the network structure shown in FIG. 1, or may be applied to another network structure, which is not limited by the disclosure.

As shown in FIG. 4, the method may include the following processing flows:

S401: configuration information of an SRS resource is transmitted to a terminal by a network device.
S402: the terminal may receive the configuration information of the SRS resource transmitted by the network device and/or a cyclic shift corresponding to SRS, and transmit the SRS to the network device according to the configuration information of the SRS resource. The network device may receive the SRS at a corresponding time-frequency resource position according to a resource mapping scheme of the SRS.

Alternatively, in S402 of the method, the network device may determine the resource mapping scheme of the SRS and/or a sequence corresponding to the SRS based on at least one of a number M of SRS ports, a group number N of N groups of SRS ports included in the M SRS ports, a number N1 of time domain resource groups, a number N2 of frequency domain resource groups, a transmission comb number, and/or an SRS sequence generation parameter. For example, the network device may determine the sequence by determining a cyclic shift corresponding to the sequence and determining the sequence on the cyclic shift.

The SRS resource includes the M SRS ports, and M is an integer greater than or equal to 1. A value of M may be 2, 4, 8, 16, etc. Alternatively, a sequence of an SRS port p; (i G {0, ..., M - 1}) is generated based on $n_{SRS}^{cs,i}$.

Alternatively, a mode of generating an SRS sequence is as follows:

$$r^{(p_i)}(n, l') = r_{u,v}^{(\alpha_i, \delta)}(n)$$

$$0 \leq n \leq M_{sc,b}^{SRS} - 1$$

$$l' \in \left\{0, 1, ..., N_{symb}^{SRS} - 1\right\}$$

$M_{sc,b}^{SRS}$ denotes a length of the SRS sequence, and $r_{u,v}^{(\alpha, \delta)}(n)$ denotes a sequence generated based on $\delta$, a cyclic shift $\alpha$, and a base sequence. $\delta = \log_2(K_{TC})$, and a transmission comb number $K_{TC} \in \{2, 4, 8\}$ is configured according to high-level parameters. $M_{sc,b}^{SRS}$ denotes a number of OFDM symbols occupied by the SRS. u denotes a group number corresponding to the base sequence, and $\upsilon$ denotes a sequence number within the group.

The M SRS ports configured for a same SRS resource include N groups. N is an integer greater than or equal to 1. Alternatively, different SRS groups include different SRS ports. Alternatively, a same SRS port is not included in a plurality of groups of SRS ports. Some groups of SRS ports are mapped to different time domain resources, and some groups of SRS ports are mapped to different frequency domain resources.

The resource mapping mode of the SRS may also be described as follows: the SRS resource corresponds to the M SRS ports, the M SRS ports include the N groups of SRS ports, and N is an integer greater than or equal to 1. The N groups of SRS ports are transmitted on N1 time domain resource groups and N2 frequency domain resource groups. Any group of SRS ports of the N groups of SRS ports are mapped to one time domain resource group and one frequency domain resource group. At least two groups of SRS ports of the N groups of SRS ports are mapped to different time domain resource groups. At least two groups of SRS ports of the N groups of SRS ports are mapped to different frequency domain resource groups. Both N1 and N2 are smaller than or equal to N.

Time domain resources corresponding to one group of SRS ports may be referred to as one time domain resource group. Alternatively, one time domain resource group may include one or more time domain units. Alternatively, the plurality of frequency domain units are continuous in time. The time domain unit has one example of a symbol, and another example of a subslot or mini-slot (one subslot may include one or a combination of OFDM symbols).

Frequency domain resources corresponding to one group of SRS ports may be referred to as one frequency domain resource group. Alternatively, one frequency domain resource group may include one frequency domain unit or a plurality of frequency domain units. Alternatively, the plurality of frequency domain units are discontinuous in frequency. For example, in response to determining that one group of SRS ports are mapped to the plurality of frequency domain units, the plurality of frequency domain units are discontinuous in time (that is, SRS ports of adjacent frequency domain units are different). The frequency domain unit has one example of a subcarrier, another example of a physical resource block (PRB), yet another example of a PRB group (PRG), and still another example of a subband.

For example, assuming that the M SRS ports are divided into group 1, group 2, ..., and group N, if the SRS resource is configured with 2N subcarriers numbered $k = 0, 1, ..., 8N-1$, a subcarrier occupied by the group 1 is $k = \{0, ..., 7\}$, a subcarrier occupied by the group 2 is $k = \{8, ..., 15\}$, and similarly, a subcarrier occupied by the group N is $k = \{8N - 8, 8N - 1\}$.

Alternatively, the group number N of the N groups of SRS ports is smaller than or equal to the number of SRS ports configured according to the configuration information of the SRS resource. Alternatively, a value of N is 1, 2, 4, 6, or 8, such that the example of the disclosure may support more SRS ports.

Alternatively, a value of N1 is 1, 2, 4, 6, or 8. Alternatively, a value of N2 is 1, 2, 4, 6, or 8. For example, the values of N1 and N2 may include the following cases:

    case 1: N1=2, N2=2;
    case 2: N1=4, N2=2; and
    case 3: N1=2, N2=4.

Alternatively, cyclic shifts corresponding to the sequences of the M SRS ports satisfy at least one of the following items conditions: different SRS ports of the same group of SRS ports correspond to different cyclic shifts, and different groups of SRS ports correspond to a same cyclic shift. SRS ports of each group of SRS ports of the N groups of SRS ports have different cyclic shifts, such that mutual interference between different SRS ports can be reduced. Alternatively, the N groups of SRS ports may share a same cyclic shift set. A number of cyclic shifts included in the cyclic shift set equals to a number of SRS ports included in one group of SRS ports. Alternatively, the N groups of SRS ports may not share a same cyclic shift set, which is not limited by the example of the disclosure.

In the flow shown in FIG. 4, the SRS ports are divided into the N groups of SRS ports. During SRS resource mapping, the N groups of SRS ports are transmitted on the N1 time domain resource groups and the N2 frequency domain resource groups, at least two groups of SRS ports of the N groups of SRS ports are mapped to different time domain resource groups, and at least two groups of SRS ports of the N groups of SRS ports are mapped to different frequency domain resource groups, such that cyclic shifts of any two SRS ports of the SRS resource may be different, or time domain or frequency domain resources of any two SRS ports of the SRS resource may be different. In this way, large interference between a plurality of antenna ports of a same SRS resource can be avoided.

In one embodiment, the configuration information of the SRS resource transmitted by the network device may further include indication information. In another embodiment, the indication information is transmitted independent of the configuration information of the SRS resource. For example, the network device may transmit the indication information to the terminal through an additional message or by multiplexing an existing message (the additional message or the existing message is different from a message configured to transmit the configuration information of the SRS resource). The terminal may receive the indication information transmitted by the network device.

Alternatively, the indication information may include at least one piece of the following information:

    at least one of a group number N of the N groups of SRS ports, a number N1 of time domain resource groups, and a number N2 of frequency domain resource groups; and
    a number M of the SRS ports. The number M of the SRS ports corresponds to at least one of the following items: the group number N of the N groups of SRS ports, the number N1 of the time domain resource groups, and the number N2 of the frequency domain resource groups.

For example, the system may preset a correspondence between the number M of the SRS ports and the number N1 of the time domain resource groups as well as the number N2 of the frequency domain resource groups. For example, one possible correspondence includes:

    when M<8, N1=1, and N2=1; and

when M=8, N1=2, and N2=2.

After the terminal receives the configuration information of the SRS resource, the SRS ports configured by the network device for the terminal may be obtained according to the configuration information, and the number of corresponding SRS port groups may be obtained through inquiry of the correspondence according to the number of the SRS ports configured by the network device for the terminal.

The indication information may further include an SRS sequence generation parameter.

Alternatively, the SRS sequence generation parameter corresponds to a time domain and/or frequency domain resource mapping mode of the SRS. Alternatively, the SRS sequence generation parameter corresponds to the number N1 of the time domain resource groups and/or the number N2 of the frequency domain resource groups. The terminal may determine a resource mapping mode of the SRS ports of the SRS resource based on the correspondence.

Alternatively, the SRS sequence generation parameter may include: a maximum number of cyclic shifts and/or cyclic shift configuration. For example, the sequence generation parameter includes a cyclic shift parameter $n_{SRS}^{cs,max}$, which is configured to indicate the maximum number of cyclic shifts. The terminal may determine a frequency domain resource and/or a sequence of the SRS port based on $n_{SRS}^{cs,max}$.

For example, the network device indicates $n_{SRS}^{cs,max}$ through the transmission comb number $K_{TC}$. $K_{TC}$ has a mapping relation to $n_{SRS}^{cs,max}$. For example, a mapping relation shown in FIG. 2 exists.

| Table 2: Mapping relation table between $K_{TC}$ and $n_{SRS}^{cs,max}$ | |
|:---:|:---:|
| $K_{TC}$ | $n_{SRS}^{cs,max}$ |
| 2 | 8 |
| 4 | 12 |
| 8 | 6 |

The terminal may obtain $n_{SRS}^{cs,max}$ based on $K_{TC}$, and determine the resource mapping mode of the SRS based on $n_{SRS}^{cs,max}$. A possible correspondence between $n_{SRS}^{cs,max}$ and a time domain mapping mode (or a number of time domain resource groups) of the SRS antenna port includes: when $n_{SRS}^{cs,max} = 6$, N1=2, N2=2; and when $n_{SRS}^{cs,max} = 8$ or 12, N1=1, N2=2.

Alternatively, The terminal may determine the resource mapping mode of the SRS based on the number of SRS port groups and . For example, when M = 8, $n_{SRS}^{cs,max} = 6$, N1=2, and N2=2; and when M = 8, $n_{SRS}^{cs,max} = 8$ or 12, N1=1, and N2=2. Alternatively, when M = 1 or 2 or 4, N1=1, and N2=1.

The indication information may further include time domain resource and/or frequency domain resource mapping mode information of the SRS.

Alternatively, the indication information may be configured to indicate whether a plurality of groups of SRS ports are mapped to a plurality of time domain resource groups and/or frequency domain resource groups. Alternatively, in response to determining that the indication information indicates that the plurality of groups of SRS ports are mapped to the plurality of time domain resource groups and/or frequency domain resource groups, the terminal may map a plurality of SRS ports of the SRS resource to the plurality of time domain resource groups and/or frequency domain resource groups. For example the plurality of groups of SRS ports are mapped to 2 time domain resource groups and 2 frequency domain resource groups.

Alternatively, when the system supports a plurality of time domain and/or frequency domain mapping modes of the SRS resource, one of the plurality of time-frequency mapping modes of the SRS resource may be indicated by the indication information, such that the terminal may perform SRS time domain resource mapping in the time-frequency mapping mode of the SRS resource indicated by the indication information.

For example, the information may indicate one state. One alternative state indicates that all SRS ports are mapped to a same time-frequency resource; and another alternative state indicates that M SRS ports are mapped to 2 groups of time domain resources.

For example, the information may indicate one state. One alternative state indicates that all SRS ports are

EP 4 513 809 A1

mapped to a same time-frequency resource; and another alternative state indicates that M SRS ports include 4 groups of SRS ports and are mapped to 2 groups of time domain resources and 2 groups of frequency domain resources, and time-frequency resources of the 4 groups of SRS ports do not overlap each other. For example, in a case of denoting the information by x, x=1 indicates that all SRS ports are mapped to a same time-frequency resource; and x=2 indicates that M SRS ports include 4 groups of SRS ports and are mapped to 2 groups of time domain resources and 2 groups of frequency domain resources, and time-frequency resources of the 4 groups of SRS ports do not overlap each other.

In one embodiment, before the terminal transmits the SRS, the method may further include the following step: The terminal may determine a resource mapping scheme of the SRS. In S302, the terminal may transmit the SRS to the network device according to the resource mapping scheme of the SRS. The network may receive the SRS transmitted by the terminal according to the resource mapping scheme of the SRS. The flow is described with the second resource mapping scheme as an example.

Alternatively, The terminal may determine the resource mapping scheme of the SRS according to the configuration information received of the SRS resource. For example, The terminal may determine the resource mapping scheme of the SRS according to the "time domain resource mapping mode information of the SRS" included in the configuration information of the SRS resource. Alternatively, if the information is transmitted independent of the configuration information of the SRS resource, The terminal may determine the resource mapping scheme of the SRS corresponding to the SRS resource based on the indication information and the configuration information of the SRS resource. For example, the N groups of SRS ports may be mapped to the time domain resource according to a value of the group number N of the N groups of SRS ports.

Alternatively, the second resource mapping scheme of the SRS includes at least one of the following items:

SRS ports of different groups of SRS ports are mapped to different time domain resource groups and different frequency domain resource groups.

Alternatively, the time domain resources to which the SRS ports of different groups of SRS ports are mapped do not overlap each other, and the frequency domain resources to which the SRS ports of different groups of SRS ports are mapped do not overlap each other.

For example, if M=8 and the SRS ports are divided into 4 groups of {1000, 1004}, {1001, 1005}, {1002, 1006}, and {1003, 1007}, {1000, 1004}, {1001, 1005}, {1002, 1006} and {1003, 1007} are mapped to different time domain resources and different frequency domain resources.

For example, if M=8 and the SRS ports are divided into 2 groups of {1000, 1002, 1004, 1006} and {1001, 1003, 1005, 1007}, {1000, 1002, 1004, 1006} and {1001, 1003, 1005, 1007} are mapped to different time domain resources and different frequency domain resources.

SRS ports of some groups of SRS ports are mapped to different time domain resources and a same frequency domain resource. For example, SRS ports of N1 groups of SRS ports are mapped to different time domain resource groups and a same frequency domain resource group.

For example, if M=8 and the SRS ports are divided into 4 groups of {1000, 1004}, {1001, 1005}, {1002, 1006}, and {1003, 1007}, {1000, 1004} and {1002, 1006} correspond to different time domain resources and a same frequency domain resource; and {1001, 1005} and {1003, 1007} correspond to different time domain resources and a same frequency domain resource.

For example, if M=8 and the SRS ports are divided into 2 groups of {1000, 1002, 1004, 1006} and {1001, 1003, 1005, 1007}, SRS ports of {1000, 1002, 1004, 1006} are mapped to a same time-frequency resource, SRS ports of {1001, 1003, 1005, 1007} are mapped to a same time-frequency resource, and {1000, 1002, 1004, 1006} and {1001, 1003, 1005, 1007} are mapped to different time-frequency resources and a same frequency domain resource.

SRS ports of some groups of SRS ports are mapped to different frequency domain resources and a same time domain resource. For example, SRS ports of N2 groups of SRS ports are mapped to different frequency domain resource groups and a same time domain resource group.

For example, if M=8 and the SRS ports are divided into 4 groups of {1000, 1004}, {1001, 1005}, {1002, 1006}, and {1003, 1007}, {1000, 1004} and {1001, 1005} correspond to a same time domain resource and different frequency domain resources; and {1002, 1006} and {1003, 1007} correspond to a same time domain resource and different frequency domain resources.

SRS ports of a same group of SRS ports are mapped to a same time-frequency resource. That is, the SRS ports of the same group of SRS ports are mapped to a same time domain resource and a same frequency domain resource.

The same time domain resources constitute one time domain resource group. Alternatively, in the given time slot, one time domain resource group include a plurality of time domain units, and the plurality of time domain units are continuous in time. Alternatively, in the given time slot, SRS ports of adjacent time domain symbols are different (that is, when one time domain resource group include a plurality of time domain units, the plurality of time domain units are discontinuous in time).

The same frequency domain resources constitute one frequency domain resource group. Alternatively, one frequency domain resource group include a plurality of frequency domain units, and the plurality of frequency domain units are continuous in frequency. Alternatively, SRS ports of adjacent frequency domain units are different (that is, when one group of frequency domain resource include a plurality of frequency domain units, the plurality of frequency domain units are discontinuous in frequency).

For example, with M=8 as an example, in response to determining that the SRS ports are grouped into {1000, 1004}, {1001, 1005}, {1002, 1006}, and {1003, 1007}, SRS port 1000 and SRS port 1004 are mapped to a same time-frequency resource, SRS port 1001 and SRS port 1005 are mapped to a same time-frequency resource, SRS port 1002 and SRS port 1006 are mapped to a same time-frequency resource, and SRS port 1003 and SRS port 1007 are mapped to a same time-frequency resource. Time-frequency resources to which different groups of SRS ports are mapped are same or different.

For example, with M=8 as an example, in response to determining that the SRS ports are grouped into {1000, 1002, 1004, 1006} and {1001, 1003, 1005, 1007}, SRS ports {1000, 1002, 1004, 1006} are mapped to a same time-frequency resource, SRS ports {1001, 1003, 1005, 1007} are mapped to a same time-frequency resource, and the SRS ports {1000, 1002, 1004, 1006} and the SRS ports {1001, 1003, 1005, 1007} are mapped to different time-frequency resources.

Each SRS port of the M SRS ports may be mapped to one or more time domain units (For example, time domain symbols), and a number of time domain units to which each SRS port is mapped is same.

Alternatively, in the given time slot, a number of time domain symbols to which the SRS ports of each group of SRS ports are mapped equals to $\frac{1}{N1}$ of a number of time domain symbols configured by the network device for the SRS resource.

Each SRS port of the M SRS ports may be mapped to one or more frequency domain units (For example, subcarriers), and a number of frequency domain units to which each SRS port is mapped is same.

Alternatively, a number of subcarriers to which the SRS ports of each group of SRS ports are mapped equals to $\frac{1}{N2}$ of a number of subcarriers configured by the network device for the SRS resource.

Serial numbers of the SRS ports of the same group of SRS ports of the N groups of SRS ports have one of the following possible cases: case (1): the serial numbers of the SRS ports of the same group of SRS ports of the N groups of SRS ports are adjacent, where the serial numbers of the SRS ports are indexes (or IDs) of the SRS ports; case (2): an interval between the serial numbers of the SRS ports of the same group of SRS ports of the N groups of SRS ports is a multiple of 2; and case (3): an interval between the serial numbers of the SRS ports of the same group of SRS ports of the N groups of SRS ports is a multiple of 4.

In one possible embodiment, before the terminal transmits the SRS, the method further includes the following steps: The terminal may determine transmission power of the SRS port; the terminal may transmit the SRS according to the transmission power determined of the SRS port; and the network device may receive the SRS transmitted by the terminal with the transmission power of the SRS port.

Alternatively, the terminal may determine the transmission power of the SRS port in the following modes:
Mode 1: the terminal may determine transmission power of each SRS port of the M SRS ports according to at least one of the number M of the SRS ports, the group number N of the N groups of SRS ports, and the number N1 of the time domain resource groups.

Alternatively, the terminal may determine the transmission power of the SRS port through at least one of the following items:

determining the transmission power of each SRS port of the M SRS ports based on $\frac{N}{M}$ ;

determining that the transmission power of each SRS port of the M SRS ports equals to $\frac{N1}{M}$ of transmission power computed based on an SRS power control process;

determining the transmission power of each SRS port of the M SRS ports based on $\frac{N}{M}$ ; and

determining that the transmission power of each SRS port of the M SRS ports equals to M of transmission power computed based on an SRS power control process.

For example, the terminal may compute first power corresponding to the SRS resource as $P_{SRS}$ based on a power control parameter configured for an SRS resource set where the SRS resource is located and/or the SRS resource by the network device, the transmission power of each SRS port of the SRS resource is: $\frac{N}{M}P_{SRS}$ .

For example, the terminal may compute first power corresponding to the SRS resource as $P_{SRS}$ based on a power control parameter and a number N of one group of SRS ports configured for an SRS resource set where the SRS resource is located and/or the SRS resource by the network device, the transmission power of each SRS port of the SRS resource is: $\frac{1}{M}P_{SRS}$.

For example, the terminal may compute first power corresponding to the SRS resource as $P_{SRS}$ based on a power control parameter configured for an SRS resource set where the SRS resource is located and/or the SRS resource by the network device, the transmission power of each SRS port of the SRS resource is: $\frac{N1}{M}P_{SRS}$.

For example, the terminal may compute first power corresponding to the SRS resource as $P_{SRS}$ based on a power control parameter and a number N1 of time domain resource groups configured for an SRS resource, where the SRS resource is located by the network device, the transmission power of each SRS port of the SRS resource is: $\frac{1}{M}P_{SRS}$.

Mode 2: the terminal may determine transmission power of SRS ports transmitted on a first time domain resource group according to a number of the SRS ports transmitted on the first time domain resource group, where the first time domain resource group is any one of the N1 time domain resource groups.

For example, when a number of SRS ports transmitted on one time domain resource group is W (W denotes the sum of the number of the SRS ports included in one or more groups of SRS ports transmitted on the time domain resource group), the transmission power of each SRS port on the time domain resource group is power obtained by dividing the transmission power computed based on the SRS power control process equally by W SRS ports (alternatively, the transmission power of each SRS port equals to power obtained based on W).

Mode 3: the terminal may determine transmission power of each SRS port of the M SRS ports based on a maximum value of a number of the SRS ports included in each time domain resource group of the N1 time domain resource groups.

Alternatively, the terminal may determine the transmission power of each SRS port of the SRS resource based on the maximum value of the number of the SRS ports transmitted on each time domain resource group. For example, when the number of the SRS ports transmitted on the N1 time domain resource groups is P1, ..., or PN, a maximum value of P1, ..., PN is recorded as Pmax, and Pmax=max{P1, ..., PN}, where an operator max{.} indicates taking a maximum value, the transmission power of each SRS port is one-Pmax of the transmission power computed based on the SRS power control process.

Mode 4: the terminal may determine transmission power of SRS ports of a first group of SRS ports according to a number of the SRS ports included in the first group of SRS ports, where the first group of SRS ports is any one of the N groups of SRS ports.

The mode may also be described as follows: the terminal may determine transmission power of the SRS ports of each group of SRS ports according to a number of the SRS ports included in each group of SRS ports. For example, when a number of SRS ports included in one group of SRS ports is P, transmission power of each SRS port of the group of SRS ports is power obtained by dividing the transmission power computed in a certain computation mode equally by the P SRS ports (alternatively, the transmission power of each antenna port of the SRS group equals to power obtained based on $\frac{1}{P}$). The certain computation mode may be based on the SRS power control process, or configuration of SRS resource set where the SRS resource is located, and/or the power control parameter for SRS resource configured by the network device.

For example, the terminal may compute first power corresponding to the SRS resource as $P_{SRS}$ based on the power control parameter configured for the SRS resource set where the SRS resource is located by the network device and/or the SRS resource by a base station, for each group of SRS ports, $P_{SRS}$ is divided equally by the SRS ports in the group. For example, for one group of SRS ports including 2 SRS ports, transmission power of each SRS port in the group is $\frac{P_{SRS}}{2}$; for one group of SRS ports including 4 SRS ports, transmission power of each SRS port in the group is $\frac{P_{SRS}}{4}$; and for one group of SRS port including 1 SRS port, transmission power of the SRS port is $P_{SRS}$.

Mode 5: the terminal may determine transmission power of each SRS port of the M SRS ports based on a maximum value of a number of the SRS ports of the N groups of SRS ports.

For example, when the number of the SRS ports included in the N groups of SRS ports is P1, ..., or PN, a maximum value of P1, ..., PN is recorded as Pmax, and Pmax=max{P1, ..., PN}, where an operator max{.} indicates taking a maximum value, the transmission power of each SRS port is one-Pmax of the transmission power computed based on the SRS power control process.

Some examples of the disclosure further provide an $n_{SRS}^{cs,i}$ generation formula when M=8, and gives a time domain mapping solution by combining the $n_{SRS}^{cs,i}$ generation formula.

In some examples of the disclosure, the sequence of the SRS port is generated based on the cyclic shift of the base sequence.

Alternatively, for each group of SRS ports, the cyclic shift of each SRS port in the group is different.

Alternatively, all groups of SRS ports share a same cyclic shift set. A number of cyclic shifts included in the cyclic shift set equals to a number of SRS ports included in one group of SRS ports.

Alternatively, a sequence of an SRS ports $p_i$ (i is an integer smaller than or equal to $N_{ap}^{SRS} - 1$) is generated based on $n_{SRS}^{cs,i}$, and $n_{SRS}^{cs,i}$ is one of the following formulas (where $N_{ap}^{SRS}$ denotes the number of SRS ports, that is, M in the above description):

$$n_{SRS}^{cs,i} = \left( n_{SRS}^{cs} + \frac{n_{SRS}^{cs,max} \lfloor (p_i - 1000)/4 \rfloor}{N_{ap}^{SRS}/4} \right) \bmod n_{SRS}^{cs,max}$$

or:

$$n_{SRS}^{cs,i} = \left( n_{SRS}^{cs} + \frac{n_{SRS}^{cs,max} \lfloor (p_i - 1000)/2 \rfloor}{N_{ap}^{SRS}/2} \right) \bmod n_{SRS}^{cs,max}$$

or:

$$\left( n_{SRS}^{cs} + \frac{n_{SRS}^{cs,max}(p_i - 1000)}{N_{ap}^{SRS}} \right) \bmod n_{SRS}^{cs,max}$$

or:

$$n_{SRS}^{cs,i} = \left( n_{SRS}^{cs} + \left\lfloor \frac{n_{SRS}^{cs,max}}{N_{ap}^{SRS}} \right\rfloor (p_i - 1000) \right) \bmod n_{SRS}^{cs,max}$$

or:

$$n_{SRS}^{cs,i} = (n_{SRS}^{cs} + p_i - 1000) \bmod n_{SRS}^{cs,max}$$

or:

$$n_{SRS}^{cs,i} = (n_{SRS}^{cs} + i) \bmod n_{SRS}^{cs,max}$$

or:

$$n_{SRS}^{cs,i} = \left( n_{SRS}^{cs} + 2 \left\lfloor \frac{n_{SRS}^{cs,max}}{N_{ap}^{SRS}} \right\rfloor (p_i - 1000) \right) \bmod n_{SRS}^{cs,max}$$

or:

$$n_{SRS}^{cs,i} = (n_{SRS}^{cs} + 2(p_i - 1000)) \bmod n_{SRS}^{cs,max}$$

or:

$$n_{SRS}^{cs,i} = (n_{SRS}^{cs} + 2i) \bmod n_{SRS}^{cs,max}$$

or:

$$n_{SRS}^{cs,i} = \left( n_{SRS}^{cs} + 4 \left\lfloor \frac{n_{SRS}^{cs,max}}{N_{ap}^{SRS}} \right\rfloor (p_i - 1000) \right) \bmod n_{SRS}^{cs,max}$$

or:

$$n_{SRS}^{cs,i} = (n_{SRS}^{cs} + 4(p_i - 1000)) \bmod n_{SRS}^{cs,max}$$

or:

$$n_{SRS}^{cs,i} = (n_{SRS}^{cs} + 4i) \bmod n_{SRS}^{cs,max}$$

or:

$$n_{SRS}^{cs,i} = \left( n_{SRS}^{cs} + 3 \left\lfloor \frac{n_{SRS}^{cs,max}}{N_{ap}^{SRS}} \right\rfloor (p_i - 1000) \right) \bmod n_{SRS}^{cs,max}$$

or:

$$n_{SRS}^{cs,i} = (n_{SRS}^{cs} + 3(p_i - 1000)) \bmod n_{SRS}^{cs,max}$$

or:

$$n_{SRS}^{cs,i} = (n_{SRS}^{cs} + 3i) \bmod n_{SRS}^{cs,max}$$

$n_{SRS}^{cs,max}$ and $n_{SRS}^{cs}$ are determined based on the configuration information of the SRS resource.

Alternatively, $n_{SRS}^{cs,max}$ is determined based on parameters configured to determine $K_{TC}$ in the configuration information of the SRS resource. Alternatively, $n_{SRS}^{cs,max}$ may be determined based on $K_{TC}$; and $K_{TC}$ denotes a comb value during SRS resource frequency domain mapping.

Alternatively, nsRS of the plurality of SRS ports of the SRS resource is computed in a same mode. For example, $n_{SRS}^{cs,i}$ of the SRS ports of the same group of SRS ports is computed in a same mode. For example, all $N_{ap}^{SRS}$ (that is, M) SRS ports are computed in a same mode.

Alternatively, nsRS of some SRS ports of the plurality of SRS ports of the SRS resource is computed in different modes.

Alternatively, a computation mode of $n_{SRS}^{cs,i}$ of the SRS resource is determined based on one or more of

$n_{SRS}^{cs,max}$, $n_{SRS}^{cs,i}$, and $N_{ap}^{SRS}$.

Assuming that a base station allocates $N_{symb}^{SRS}$ time domain symbols numbered $0, 1, \ldots, N_{symb}^{SRS} - 1$ to the SRS resource, a total number of frequency domain units occupied by the SRS resource is $M_{sc}^{SRS}$, which are numbered from 0 to $M_{sc}^{SRS} - 1$. Some possible combinations of cyclic shift generation and SRS port resource mapping include the following examples:

For convenience of explanation, one SRS port group may be used to denote one group of SRS ports. The examples of a resource mapping mode are as follows:

Example 1:

$$N_{ap}^{SRS} = 8, \ n_{SRS}^{cs,max} = 6, \ \text{and} \ n_{SRS}^{cs,i} = \left( n_{SRS}^{cs} + \frac{n_{SRS}^{cs,max} \lfloor (p_i - 1000)/4 \rfloor}{N_{ap}^{SRS}/4} \right) \bmod n_{SRS}^{cs,max}.$$

One resource mapping mode is as follows: SRS port group 1 {1000, 1004} is mapped to a first frequency domain resource and a first time domain resource, SRS port group 2 {1001, 1005} is mapped to a second frequency domain resource and the first time domain resource, SRS port group 3 {1002, 1006} is mapped to the first frequency domain resource and a second time domain resource, and SRS port group 4 {1003, 1007} is mapped to the first frequency domain resource and the second time domain resource.

Another mapping mode is as follows: SRS port group 1 {1000, 1004}, SRS port group 2 {1001, 1005}, SRS port group 3 {1002, 1006} and SRS port group 4 {1003, 1007} are mapped to different frequency domain resources, respectively.

Example 2:

$$N_{ap}^{SRS} = 8, \ n_{SRS}^{cs,max} = 6, \ \text{and} \ n_{SRS}^{cs,i} = \left( n_{SRS}^{cs} + \frac{n_{SRS}^{cs,max} \lfloor (p_i - 1000)/4 \rfloor}{N_{ap}^{SRS}/4} \right) \bmod n_{SRS}^{cs,max}.$$

One resource mapping mode is as follows: SRS port group 1 {1000, 1004} is mapped to a first frequency domain resource and a first time domain resource, SRS port group 3 {1002, 1006} is mapped to a second frequency domain resource and the first time domain resource, SRS port group 2 {1001, 1005} is mapped to the first frequency domain resource and a second time domain resource, and SRS port group 4 {1003, 1007} is mapped to the first frequency domain resource and the second time domain resource.

Example 3:

$$N_{ap}^{SRS} = 8, \ n_{SRS}^{cs,max} = 6, \ \text{and} \ n_{SRS}^{cs,i} = \left( n_{SRS}^{cs} + \frac{n_{SRS}^{cs,max} \lfloor (p_i - 1000)/4 \rfloor}{N_{ap}^{SRS}/4} \right) \bmod n_{SRS}^{cs,max}.$$

One resource mapping mode is as follows: SRS port group 1 {1000, 1002, 1004, 1006} is mapped to all frequency domain resources and a first time domain resource, and SRS port group 2 {1001, 1003, 1005, 1007} is mapped to all frequency domain resources and a second time domain resource.

Example 4:

$$N_{ap}^{SRS} = 8 \ , \ n_{SRS}^{cs,max} = 12 \ , \ n_{SRS}^{cs,i} = \left( n_{SRS}^{cs} + \frac{n_{SRS}^{cs,max} \lfloor (p_i - 1000)/4 \rfloor}{N_{ap}^{SRS}/4} \right) \bmod n_{SRS}^{cs,max} \ , \ \text{or} \ n_{SRS}^{cs,i} = \left( n_{SRS}^{cs} + \right.$$

$$\left. \frac{n_{SRS}^{cs,max} \lfloor (p_i - 1000)/2 \rfloor}{N_{ap}^{SRS}/2} \right) \bmod n_{SRS}^{cs,max}, \ \text{or} \ n_{SRS}^{cs,i} = \left( n_{SRS}^{cs} + \left\lfloor \frac{n_{SRS}^{cs,max}}{N_{ap}^{SRS}} \right\rfloor (p_i - 1000) \right) \bmod n_{SRS}^{cs,max}, \ \text{or} \ n_{SRS}^{cs,i} = (n_{SRS}^{cs} +$$

$$p_i - 1000) \bmod n_{SRS}^{cs,max}, \ \text{or} \ n_{SRS}^{cs,i} = (n_{SRS}^{cs} + i) \bmod n_{SRS}^{cs,max}.$$

One resource mapping mode is as follows: SRS port group 1 {1000, 1004} is mapped to a first frequency domain resource and a first time domain resource, SRS port group 2 {1001, 1005} is mapped to a second frequency domain resource and the first time domain resource, SRS port group 3 {1002, 1006} is mapped to the first frequency domain resource and a second time domain resource, and SRS port group 4 {1003, 1007} is mapped to the first frequency domain resource and the second time domain resource.

Example 5:

$$N_{ap}^{SRS} = 8 \ , \ n_{SRS}^{cs,max} = 12 \ , \ n_{SRS}^{cs,i} = \left( n_{SRS}^{cs} + \frac{n_{SRS}^{cs,max} \lfloor (p_i - 1000)/4 \rfloor}{N_{ap}^{SRS}/4} \right) \bmod n_{SRS}^{cs,max} \ , \ \text{or} \ n_{SRS}^{cs,i} = \left( n_{SRS}^{cs} + \right.$$

$$\left. \frac{n_{SRS}^{cs,max} \lfloor (p_i - 1000)/2 \rfloor}{N_{ap}^{SRS}/2} \right) \bmod n_{SRS}^{cs,max}, \ \text{or} \ n_{SRS}^{cs,i} = \left( n_{SRS}^{cs} + \left\lfloor \frac{n_{SRS}^{cs,max}}{N_{ap}^{SRS}} \right\rfloor (p_i - 1000) \right) \bmod n_{SRS}^{cs,max}, \ \text{or} \ n_{SRS}^{cs,i} = (n_{SRS}^{cs} +$$

$$p_i - 1000) \bmod n_{SRS}^{cs,max}, \ \text{or} \ n_{SRS}^{cs,i} = (n_{SRS}^{cs} + i) \bmod n_{SRS}^{cs,max}.$$

One resource mapping mode is as follows: SRS port group 1 {1000, 1004} is mapped to a first frequency domain resource and a first time domain resource, SRS port group 3 {1002, 1006} is mapped to a second frequency domain resource and the first time domain resource, SRS port group 2 {1001, 1005} is mapped to the first frequency domain resource and a second time domain resource, and SRS port group 4 {1003, 1007} is mapped to the first frequency domain resource and the second time domain resource.

Another resource mapping mode is as follows: 4 groups of SRS ports {1000, 1004}, {1001, 1005}, {1002, 1006} and {1003, 1007} are mapped to different frequency domain resources, respectively.

Example 5:

$$N_{ap}^{SRS} = 8, \ n_{SRS}^{cs,max} = 12, \ \text{and} \ n_{SRS}^{cs,i} = \left( n_{SRS}^{cs} + \frac{n_{SRS}^{cs,max} \lfloor (p_i - 1000)/2 \rfloor}{N_{ap}^{SRS}/2} \right) \bmod n_{SRS}^{cs,max}. \ \{1000, 1002, 1004,$$

1006} is mapped to all frequency domain resources and a first time domain resource, and {1001, 1003, 1005, 1007} is mapped to all frequency domain resources and a second time domain resource.

Example 6:

$$N_{ap}^{SRS} = 8 \ , \ n_{SRS}^{cs,max} = 8 \ , \ n_{SRS}^{cs,i} = \left( n_{SRS}^{cs} + \frac{n_{SRS}^{cs,max} \lfloor (p_i - 1000)/4 \rfloor}{N_{ap}^{SRS}/4} \right) \bmod n_{SRS}^{cs,max} \ , \ \text{or} \ n_{SRS}^{cs,i} = \left( n_{SRS}^{cs} + \right.$$

$$\left. \frac{n_{SRS}^{cs,max} \lfloor (p_i - 1000)/2 \rfloor}{N_{ap}^{SRS}/2} \right) \bmod n_{SRS}^{cs,max}, \ \text{or} \ \left( n_{SRS}^{cs} + \frac{n_{SRS}^{cs,max} (p_i - 1000)}{N_{ap}^{SRS}} \right) \bmod n_{SRS}^{cs,max}, \ \text{or} \ n_{SRS}^{cs,i} = \left( n_{SRS}^{cs} + \left\lfloor \frac{n_{SRS}^{cs,max}}{N_{ap}^{SRS}} \right\rfloor (p_i - \right.$$

$$\left. 1000) \right) \bmod n_{SRS}^{cs,max}, \ \text{or} \ n_{SRS}^{cs,i} = (n_{SRS}^{cs} + p_i - 1000) \bmod n_{SRS}^{cs,max}, \ \text{or} \ n_{SRS}^{cs,i} = (n_{SRS}^{cs} + i) \bmod n_{SRS}^{cs,max}.$$

One mapping mode is as follows: SRS port group 1 {1000, 1004} is mapped to a first frequency domain resource and a first time domain resource, SRS port group 2 {1001, 1005} is mapped to a second frequency domain resource and the first time domain resource, SRS port group 3 {1002, 1006} is mapped to the first frequency domain resource and a second time domain resource, and SRS port group 4 {1003, 1007} is mapped to the first frequency domain resource and the second time domain resource.

Another mapping mode is as follows: 4 groups of SRS ports {1000, 1004}, {1001, 1005}, {1002, 1006} and {1003, 1007} are mapped to different frequency domain resources, respectively.

Example 7:

$$N_{ap}^{SRS} = 8 \ , \quad n_{SRS}^{cs,max} = 8 \ , \quad n_{SRS}^{cs,i} = \left( n_{SRS}^{cs} + \frac{n_{SRS}^{cs,max} \lfloor (p_i - 1000)/2 \rfloor}{N_{ap}^{SRS}/2} \right) \bmod n_{SRS}^{cs,max} \ , \quad \text{or} \quad \left( n_{SRS}^{cs} + \frac{n_{SRS}^{cs,max}(p_i - 1000)}{N_{ap}^{SRS}} \right) \bmod n_{SRS}^{cs,max}, \text{or } n_{SRS}^{cs,i} = \left( n_{SRS}^{cs} + \left\lceil \frac{n_{SRS}^{cs,max}}{N_{ap}^{SRS}} \right\rceil (p_i - 1000) \right) \bmod n_{SRS}^{cs,max}, \text{or } n_{SRS}^{cs,i} = (n_{SRS}^{cs} + p_i - 1000) \bmod n_{SRS}^{cs,max}, \text{or } n_{SRS}^{cs,i} = (n_{SRS}^{cs} + i) \bmod n_{SRS}^{cs,max}.$$

One mapping mode is as follows: SRS port group 1 {1000, 1002, 1004, 1006} is mapped to all frequency domain resources and a first time domain resource, and SRS port group 2 {1001, 1003, 1005, 1007} is mapped to all frequency domain resources and a second time domain resource.

Example 8:

$N_{ap}^{SRS} = 8$ , and $n_{SRS}^{cs,i} = \left( n_{SRS}^{cs} + \frac{n_{SRS}^{cs,max} \lfloor (p_i - 1000)/8 \rfloor}{N_{ap}^{SRS}/8} \right) \bmod n_{SRS}^{cs,max}$ . 8 SRS ports are mapped to different time domain resources, respectively.

Example 9:

$N_{ap}^{SRS} = 4$ , and $n_{SRS}^{cs,i} = \left( n_{SRS}^{cs} + \frac{n_{SRS}^{cs,max} \lfloor (p_i - 1000)/2 \rfloor}{N_{ap}^{SRS}/2} \right) \bmod n_{SRS}^{cs,max}$ . {1000, 1002} is mapped to a first time domain resource, and {1001, 1003} is mapped to a second time domain resource.

Example 10:

$N_{ap}^{SRS} = 4$ , and $n_{SRS}^{cs,i} = \left( n_{SRS}^{cs} + \frac{n_{SRS}^{cs,max} \lfloor (p_i - 1000)/4 \rfloor}{N_{ap}^{SRS}/4} \right) \bmod n_{SRS}^{cs,max}$ . 4 SRS ports are mapped to different time domain resources, respectively.

Example 11:

$$N_{ap}^{SRS} = 2 \ , \quad \left( n_{SRS}^{cs} + \frac{n_{SRS}^{cs,max}(p_i - 1000)}{N_{ap}^{SRS}} \right) \bmod n_{SRS}^{cs,max}$$ , or $n_{SRS}^{cs,i} = \left( n_{SRS}^{cs} + \frac{n_{SRS}^{cs,max} \lfloor (p_i - 1000)/2 \rfloor}{N_{ap}^{SRS}/2} \right) \bmod n_{SRS}^{cs,max}$ . {1000} is mapped to a first time domain resource, and {1001} is mapped to a second time domain resource.

Example 12:

in a case that $N_{ap}^{SRS} = 8, n_{SRS}^{cs,max} = 8$ or 12, and $n_{SRS}^{cs,i} = \left( n_{SRS}^{cs} + \frac{n_{SRS}^{cs,max} \lfloor (p_i - 1000)/2 \rfloor}{N_{ap}^{SRS}/2} \right) \bmod n_{SRS}^{cs,max}$ , according to a value of $n_{SRS}^{cs}$ , the following mapping modes may exist:

(1) When $n_{SRS}^{cs} \in \{n_{SRS}^{cs,max}/2, ..., n_{SRS}^{cs,max} - 1\}$, the following mapping modes may be included:

One possible mode is as follows: SRS port group 1 {1000, 1004} is mapped to a first frequency domain resource and a first time domain resource, SRS port group 2 {1001, 1005} is mapped to a second frequency domain resource and the first time domain resource, SRS port group 3 {1002, 1006} is mapped to the first frequency domain resource and a second time domain resource, and SRS port group 4 {1003, 1007} is mapped to the first frequency domain resource and the second time domain resource.

Another possible mode is as follows: SRS port group 1 {1000, 1004} is mapped to a first frequency domain resource and a first time domain resource, SRS port group 3 {1002, 1006} is mapped to a second frequency domain resource and the first time domain resource, SRS port group 2 {1001, 1005} is mapped to the first frequency domain resource and a second time domain resource, and SRS port group 4 {1003, 1007} is mapped to the first frequency domain resource and the second time domain resource.

(2) When $n_{SRS}^{cs} \in \{0, ..., n_{SRS}^{cs,max}/2 - 1\}$, the following mapping modes may be included:

One possible mode is as follows: SRS port group 1 {1000, 1002, 1004, 1006} is mapped to all frequency domain resources and a first time domain resource, and SRS port group 2 {1001, 1003, 1005, 1007} is mapped to all frequency domain resources and a second time domain resource.

Another possible mode is as follows: SRS port group 1 {1000, 1002, 1004, 1006} is mapped to all time domain resources and a first frequency domain resource, and SRS port group 2 {1001, 1003, 1005, 1007} is mapped to all time domain resources and a second frequency domain resource.

Example 13:

in a case that $N_{ap}^{SRS} = 8$, $n_{SRS}^{cs,max} = 6$ or 8 or 12, and $n_{SRS}^{cs,i} = \left( n_{SRS}^{cs} + \frac{n_{SRS}^{cs,max} \lfloor (p_i - 1000)/4 \rfloor}{N_{ap}^{SRS}/4} \right) \bmod n_{SRS}^{cs,max}$, according to a value of $n_{SRS}^{cs}$, the following mapping modes may exist:

(1) When $n_{SRS}^{cs} \in \{n_{SRS}^{cs,max}/2, ..., n_{SRS}^{cs,max} - 1\}$, the following mapping modes may be included:

One possible mode is as follows: SRS port group 1 {1000, 1004} is mapped to a first frequency domain resource and a first time domain resource, SRS port group 2 {1001, 1005} is mapped to a second frequency domain resource and the first time domain resource, SRS port group 3 {1002, 1006} is mapped to the first frequency domain resource and a second time domain resource, and SRS port group 4 {1003, 1007} is mapped to the first frequency domain resource and the second time domain resource.

Another possible mode is as follows: SRS port group 1 {1000, 1004} is mapped to a first frequency domain resource and a first time domain resource, SRS port group 3 {1002, 1006} is mapped to a second frequency domain resource and the first time domain resource, SRS port group 2 {1001, 1005} is mapped to the first frequency domain resource and a second time domain resource, and SRS port group 4 {1003, 1007} is mapped to the first frequency domain resource and the second time domain resource.

(2) When $n_{SRS}^{cs} \in \{0, ..., n_{SRS}^{cs,max}/2 - 1\}$, the following mapping modes may be included:

One possible mode is as follows: SRS port group 1 {1000, 1002, 1004, 1006} is mapped to all frequency domain resources and a first time domain resource, and SRS port group 2 {1001, 1003, 1005, 1007} is mapped to all frequency domain resources and a second time domain resource.

Another possible mode is as follows: SRS port group 1 {1000, 1002, 1004, 1006} is mapped to all time domain resources and a first frequency domain resource, and SRS port group 2 {1001, 1003, 1005, 1007} is mapped to all time domain resources and a second frequency domain resource.

In order to better describe the above method, the following symbols are introduced:

Nap: a number of antenna ports included in the SRS resource; and $N_{ap}^{s}$: a number of SRS ports included in one OFDM symbol, or a positive integer agreed by a protocol (For example, 1, 2, 4, 8, etc.).

Alternatively, a number of OFDM symbols to which each SRS port of the SRS resource is mapped in one time slot is same. A number of OFDM symbols to which one SRS port of the SRS resource is mapped in one time slot is a number of OFDM symbols to which each SRS port of the SRS resource is mapped in one time slot.

Alternatively, a number of OFDM symbols to which one SRS port of the SRS resource is mapped in one time slot is a minimum value or a maximum value of a number of OFDM symbols to which each SRS port of the SRS resource is mapped in one time slot.

It should be noted that the "positive integer agreed by a protocol" is used to express that a specific meaning may not be written in the protocol, one symbol is not defined, and a numerical value is directly specified. For example, for the solution including $N_{ap}^{s}$ in the disclosure, a number may be written directly instead of $N_{ap}^{s}$ in the protocol. The protocol may have different provisions in different cases. For example, in a case that a number of antenna ports included in the SRS resource is 8, if comb = 2 and Ns=4, a position corresponding to $N_{ap}^{s}$ in the example is written as 4. When comb = 8 and Ns=2, the position is 2, and so on. Several other "positive integers agreed by a protocol" may also be processed in a similar mode.

The following symbols are further introduced: Ns: a number of OFDM symbols configured by a base station for the SRS resource (a number of OFDM symbols occupied by the SRS resource in one time slot); and $N_{s}^{ap}$ : a number of OFDM symbols to which one SRS port is mapped in one time slot, or a positive integer agreed by a protocol (For example, 1, 2, 4, 8, etc.). It should be noted that the "positive integer agreed by a protocol" indicates that a specific meaning may not be written in the protocol, one symbol is not defined, and a numerical value is directly specified. For example, for the solution including $\frac{N_{s}}{N_{s}^{ap}}$ in the disclosure, $\frac{N_{s}}{2}$ may be written directly instead of $\frac{N_{s}}{N_{s}^{ap}}$ in the protocol. The protocol may have different provisions in different cases. For example, when comb = 2, the position is $\frac{N_{s}}{2}$; when comb = 8, the position is $\frac{N_{s}}{4}$; and so on.

Alternatively, a number of OFDM symbols to which each SRS port of the SRS resource is mapped in one time slot is same. A number of OFDM symbols to which one SRS port of the SRS resource is mapped in one time slot is a number of OFDM symbols to which each SRS port of the SRS resource is mapped in one time slot.

Alternatively, a number of OFDM symbols to which one SRS port of the SRS resource is mapped in one time slot is a minimum value or a maximum value of a number of OFDM symbols to which each SRS port of the SRS resource is mapped in one time slot.

R denotes a repetition factor, that is, a number of repetitions, or a number of OFDM symbols occupied by each hop of each SRS port during frequency hopping. Alternatively, when the base station is configured with a parameter denoting R, the number of repetitions of SRS transmission is determined based on the parameter configured by the base station. Otherwise, the number of repetitions of the SRS satisfies R = Ns.

N denotes a positive integer (For example, 1, 2, 4, 8, etc.) agreed by the protocol, or a number of SRS port groups included in the SRS resource (SRS resources mapped to a same OFDM symbol constitute one group, and SRS ports of different groups are mapped to different OFDM symbols). That is, the SRS resources mapped to the same OFDM symbol constitute one group, and a number of the OFDM symbols to which each group is mapped is counted only once. When R=1 (that is, non-repetitive transmission), M denotes a number of OFDM symbols to which antenna ports of the SRS resource are mapped, that is, Ns. Alternatively, two SRS ports mapped to the same OFDM symbol are considered to belong to the same group of SRS ports, and two SRS ports mapped to different OFDM symbols belong to different groups of SRS ports. Alternatively, two SRS ports mapped to the same time-frequency resource are considered to belong to the same group of SRS ports, and two SRS ports mapped to different time-frequency resources belong to different groups of SRS ports.

It should be noted that the "positive integer agreed by a protocol" indicates that a specific meaning may not be written in the protocol, one symbol is not defined, and a numerical value is directly specified. For example, for the solution including $\frac{N_{s}}{M}$ in the disclosure, $\frac{N_{s}}{2}$ may be written directly instead of $\frac{N_{s}}{M}$ in the protocol. The protocol may have different provisions in different cases. For example, in a case that a number of antenna ports included in the SRS resource is 8, if comb = 2, the position is $\frac{N_{s}}{2}$ ; if comb = 8, the position is $N_{s}$; and so on.

Nhop denotes a number of times of frequency hopping, which may be a number (that is, a hop number) of times of frequency hopping of one SRS port of the SRS resource in one time slot; or
a number (that is, a hop number) of times of frequency hopping included in one frequency hopping cycle.

Alternatively, for frequency hopping of the SRS resource in the time slot, Nhop denotes a number of times of frequency hopping of each SRS port of the SRS resource in one time slot. For frequency hopping of the SRS resource between time slots, Nhop denotes a number of times of frequency hopping included in one frequency hopping cycle.

Alternatively, a number of times of frequency hopping of each SRS port of the SRS resource in one time slot is same. A number of times of frequency hopping of one SRS port of the SRS resource in one time slot is a number of times of frequency hopping of each SRS port of the SRS resource in one time slot.

Alternatively, a number of times of frequency hopping of one SRS port of the SRS resource in one time slot is a minimum value or a maximum value of a number of times of frequency hopping of each SRS port of the SRS resource in one time slot.

Alternatively, transmission power of an antenna port of the SRS resource is determined as N based on at least one of the following items:

a number $N_{ap}^{s}$ of SRS ports included in one OFDM symbol (or a positive integer agreed by a protocol);
an OFDM symbol Ns occupied by the SRS resource in one time slot;
a repetition factor R of the SRS resource;

a number $N_{s}^{ap}$ of OFDM symbols to which one SRS port is mapped in one time slot (or a positive integer agreed by a protocol);
an OFDM symbol Ns occupied by the SRS resource in one time slot; and
a number Nhop of times of frequency hopping of the SRS port in one time slot.

Alternatively, the transmission power of the antenna port of the SRS resource is further determined based on a number Nap of ports included in the SRS resource.

Alternatively, the transmission power of the antenna port of the SRS resource is determined based on the number Nap of ports included in the SRS resource and an agreed value (For example, N is a value agreed by a protocol).

Some specific formulas are as follows:

Alternatively, transmission power of each antenna port of the SRS is power obtained based on $\frac{N}{N_{ap}}$, or $\frac{N_s}{N_{ap}*R*N_{hop}}$, or $\frac{N_s}{N_{ap}*N_s^{ap}}$, or $\frac{N_s}{N_{ap}*R}$, or $N_{ap}^{s}$.

example 1: the terminal may compute first power corresponding to the SRS resource as $P_{SRS}$ based on a power control parameter configured for an SRS resource set where the SRS resource is located and/or the SRS resource by the base station, the transmission power of each SRS port of the SRS resource is: $\frac{N}{N_{ap}}P_{SRS}$, or $\frac{N_s}{N_{ap}*R*N_{hop}}P_{SRS}$, or $\frac{N_s}{N_{ap}*N_s^{ap}}P_{SRS}$, or $\frac{N_s}{N_{ap}*R}P_{SRS}$.

example 2: the terminal may compute first power corresponding to the SRS resource as $P_{SRS}$ based on a power control parameter configured for an SRS resource set where the SRS resource is located and/or the SRS resource by the base station, the transmission power of each SRS port of the SRS resource is: $\frac{1}{N_{ap}^{s}}P_{SRS}$.

Alternatively, the transmission power of each SRS port in the OFDM symbols is determined based on the number of the SRS ports included in the OFDM symbols. For example, if a number of SRS ports included in one OFDM symbol is P, transmission power of the SRS ports of the OFDM symbol is power obtained by dividing the transmission power computed based on the SRS power control process (or based on the power control parameter configured for the SRS resource set where the SRS resource is located and/or configured by the base station for the SRS resource) equally by the P ports.

example 1: the terminal may compute first power corresponding to the SRS resource as $P_{SRS}$ based on a power control parameter configured for an SRS resource set where the SRS resource is located and/or configured by the base station for the SRS resource, for each OFDM symbol, $P_{SRS}$ is divided equally by the SRS ports in the OFDM symbol. For example, for OFDM symbols including 2 OFDM symbols, transmission power of each SRS port is $P_{SRS}$. For an OFDM symbol including 4 SRS ports, transmission power of each SRS port is $\frac{P_{SRS}}{4}$. For an OFDM symbol including 1 SRS port, transmission power of each SRS port is $P_{SRS}$.

Alternatively, the transmission power of each SRS port of the SRS resource is determined based on the number of the SRS ports included in each OFDM symbol.

Alternatively, the transmission power of each SRS port of the SRS resource is determined based on the maximum value of the number of the SRS ports included in each OFDM symbol. For example, if a number of SRS ports included in N OFDM symbols is P1, ..., or PN, the transmission power of each SRS port is one Pmax of transmission power $P_{SRS}$ computed based on the power control parameter configured for the SRS resource set where the SRS resource is located and/or configured by the base station for the SRS resource, and Pmax=max{P1, ..., PN}. An operator max{.} indicates taking a maximum value.

The example further provides another solution as follows:

Transmission power of SRS is determined based on SRS power control indication information transmitted by a network device.

Alternatively, the SRS power control indication information indicates a power control scaling factor of transmission of the SRS.

For example, one power control scaling factor is configured for an SRS resource through RRC signaling by a base station. Transmission power of the SRS resource is scaled based on the scaling factor.

based on the same technical concept, an example of the disclosure further provides a terminal. The terminal may be a terminal in the above example.

FIG. 5 illustratively shows a terminal according to an example of the disclosure. The terminal may include: a processing unit 501, a transmitting unit 502, and a receiving unit 503.

The receiving unit 503 is configured to receive configuration information of an SRS resource transmitted by a network device.

The transmitting unit 502 is configured to transmit SRS to the network device based on the configuration information of the SRS resource. The SRS resource corresponds to M SRS ports. The M SRS ports include a first SRS port and a second SRS port. The first SRS port and the second SRS port are mapped to different time domain resources.

Alternatively, the M SRS ports include N groups of SRS ports. N is an integer greater than 1. The first SRS port and the second SRS port belong to different groups of SRS ports.

Alternatively, the transmitting unit 502 is specifically configured to:

determine a resource mapping scheme of the SRS and/or a cyclic shift corresponding to the SRS based on the configuration information of the SRS resource; and
perform resource mapping of the M SRS ports according to the resource mapping scheme of the SRS.

The resource mapping scheme includes one of a first resource mapping scheme and a second resource mapping scheme.

In the first resource mapping scheme, different groups of SRS ports of the N groups of SRS ports are mapped to different time domain resources.

In the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, and at least two groups of SRS ports of the N groups of SRS ports are mapped to different frequency domain resource groups. Both N1 and N2 are integers greater than or equal to 1.

Alternatively, after the receiving unit receives the configuration information of the SRS resource transmitted by the network device, the processing unit 501 is configured to:

determine one or more of the N groups of SRS ports included in the M SRS ports, resource mapping corresponding to the M SRS ports, and SRS sequences corresponding to the M SRS ports based on one or more of a number M of the SRS ports, an SRS sequence generation parameter corresponding to the SRS resource and a transmission comb number.

Alternatively, before the SRS is transmitted to the network device by the transmitting unit, the receiving unit 503 is further configured to:

receive indication information transmitted by the network device. The indication information includes one or more of the following information:
at least one of a group number N of the N groups of SRS ports included in the M SRS ports, a number N1 of time domain resource groups, and a number N2 of frequency domain resource groups;
an SRS sequence generation parameter; and
time domain resource mapping mode information of the SRS.

Alternatively, the SRS sequence generation parameter includes:

a maximum number of cyclic shifts; and/or,
cyclic shift configuration.

Alternatively, the indication information is included in the configuration information of the SRS resource. Alternatively, the indication information is independent of the configuration information of the SRS resource.

Alternatively, the first resource mapping scheme includes at least one of the following items:

SRS ports of a same group of SRS ports of the N groups of SRS ports are mapped to a same time domain resource;
the M SRS ports are mapped to a same frequency domain resource;
SRS ports of at least one group of SRS ports of the N groups of SRS ports are mapped to a plurality of time domain units in one time slot, where the plurality of time domain units are continuous or discontinuous in time;
SRS ports of at least one group of SRS ports of the N groups of SRS ports are mapped to a plurality of frequency domain units, where the plurality of frequency domain units are continuous or discontinuous in frequency;
a number of frequency domain units to which each SRS port of the M SRS ports is mapped is same;
SRS ports mapped onto adjacent time domain symbols are different;
a number of time domain units to which each SRS port of the M SRS ports is mapped is same;
serial numbers of the SRS ports of the same group of SRS ports of the N groups of SRS ports are adjacent, or, an interval between serial numbers of the SRS ports of the same group of SRS ports of the N groups of SRS ports is K, where K is a multiple of 2 or 4; and
the N groups of SRS ports are sequentially mapped to R OFDM symbols, and in response to existence of remaining OFDM symbols after mapping of the N groups of SRS ports, frequency hopping pattern used for the remaining OFDM symbols may be the same as frequency hopping pattern used for a last group of SRS ports.

Alternatively, the number of the time domain units to which each SRS port of the M SRS ports is mapped is the same as follows: the number of the time domain units to which each SRS port of the M SRS ports is mapped equals to $\frac{1}{N}$ of a number of time domain units configured by the network device for the SRS resource.

Alternatively, the second resource mapping scheme includes at least one of the following items:

different groups of SRS ports of the N groups of SRS ports are mapped to different time domain resource groups and different frequency domain resource groups;
N1 groups of SRS ports of the N groups of SRS ports are mapped to different time domain resource groups and a same frequency domain resource group;
N2 groups of SRS ports of the N groups of SRS ports are mapped to different frequency domain resource groups and a same time domain resource group;
SRS ports of a same group of SRS ports of the N groups of SRS ports are mapped to a same time-frequency resource;
a number of time domain units to which each SRS port of the M SRS ports is mapped is same;
a number of frequency domain units to which each SRS port of the M SRS ports is mapped is same; and
serial numbers of the SRS ports of the same group of SRS ports of the N groups of SRS ports are adjacent, or, an interval between serial numbers of the SRS ports of the same group of SRS ports of the N groups of SRS ports is K, where K is a multiple of 2 or 4.

Alternatively, in a case that the number of the time domain units to which each SRS port of the M SRS ports is mapped is the same, the number of the time domain units to which each SRS port is mapped equals to $\frac{1}{N1}$ of a number of time domain units configured by the network device for the SRS resource.

Alternatively, in a case that the number of the frequency domain units to which each SRS port of the M SRS ports is mapped is the same, the number of the frequency domain units to which each SRS port is mapped equals to $\frac{1}{N2}$ of a number of frequency domain units configured by the network device for the SRS resource.

Alternatively, the transmitting unit 502 is configured to:

determine transmission power of the SRS based on the configuration information of the SRS resource or power control indication information transmitted by the network device; and
transmit the SRS to the network device based on the transmission power of the SRS.

In a case of performing resource mapping on the M SRS ports based on the first resource mapping scheme, the transmission power of the SRS is determined based on the configuration information of the SRS resource through at least one of the following items:

transmission power of the SRS ports of the M SRS ports is determined based on at least one of the number M of the SRS ports and the group number N of the N groups of SRS ports;
transmission power of the SRS ports of the M SRS ports is determined based on at least one of the number M of the SRS ports and a preset parameter, where the preset parameter is configured to determine the group number N of the N groups of SRS ports;

transmission power of the SRS ports of the M SRS ports is determined based on a number of OFDM symbols of the SRS resource, where the number of the OFDM symbols indicates a number of groups into which the OFDM symbols of the SRS resource are divided, SRS ports corresponding to a same group of OFDM symbols are same, and SRS ports corresponding to different groups of OFDM symbols are different;

transmission power of SRS ports in the OFDM symbols is determined based on a number of the SRS ports of the M SRS ports included in the OFDM symbols;

transmission power of each SRS port of the M SRS ports is determined based on a number of the SRS ports of the M SRS ports included in each OFDM symbol;

transmission power of SRS ports of a first group of SRS ports is determined based on a number of the SRS ports included in the first group of SRS ports, where the first group of SRS ports is one group of the N groups of SRS ports included in the M SRS ports;

transmission power of each SRS port of the M SRS ports is determined based on a maximum value of a number of the SRS ports of the N groups of SRS ports;

the transmission power of the SRS is determined based on a frequency domain transmission comb number offset to which the SRS resource is mapped; and

the transmission power of the SRS is determined based on a frequency domain transmission comb number offset included in one OFDM symbol.

Alternatively, the transmission power of the SRS ports of the M SRS ports is determined based on at least one of the number M of the SRS ports and the group number N of the N groups of SRS ports through at least one of the following items:

determining the transmission power of each SRS port of the M SRS ports based on $\dfrac{N}{M}$; and

determining that the transmission power of each SRS port of the M SRS ports equals to M of transmission power computed based on an SRS power control process.

Alternatively, the preset parameter includes any one or more of the following parameters:

a number $N_{ap}^{s}$ of the SRS ports included in the OFDM symbols, or a positive integer $N_{ap}^{s}$ of a first agreement;

a number Ns of OFDM symbols occupied by the SRS resource in one time slot;

a repetition factor R1 of the SRS resource;

a number $N_{s}^{ap}$ of OFDM symbols to which the SRS ports are mapped in one time slot, or a positive integer $N_{s}^{ap}$ of a second agreement;

a number Nhop of times of frequency hopping of the SRS ports in one time slot; and

a positive integer of a third agreement.

The transmission power of the SRS ports of the M SRS ports is determined based on at least one of the number M of the SRS ports and the preset parameter as follows:

in response to determining that the preset parameters include Ns, R1 and Nhop, the transmission power of the SRS ports of the M SRS ports is determined according to $\dfrac{N_{s}}{M*R1*N_{hop}}$;

in response to determining that the preset parameters include Ns and $N_{s}^{ap}$, the transmission power of the SRS ports of the M SRS ports is determined according to $\dfrac{N_{s}}{M*N_{s}^{ap}}$;

in response to determining that the preset parameters include Ns and R1, the transmission power of the SRS ports of the M SRS ports is determined according to $\dfrac{N_{s}}{M*R}$; and

in response to determining that the preset parameter includes the positive integer of the third agreement, the transmission power of the SRS ports of the M SRS ports is determined according to M and the positive integer of the third agreement.

Alternatively, a number of OFDM symbols to which each SRS port corresponding to the SRS resource is mapped in one time slot is same; or,

a number of OFDM symbols to which one SRS port corresponding to the SRS resource is mapped in one time slot is a minimum value or a maximum value of a number of OFDM symbols to which each SRS port corresponding to the SRS resource is mapped in one time slot.

Alternatively, the transmitting unit 502 determines the transmission power of the SRS ports in the OFDM symbols based on the number of the SRS ports of the M SRS ports included in the OFDM symbols, and is specifically configured to:

determine first power corresponding to the SRS resource based on a power control parameter configured for an SRS resource set where the SRS resource is located and/or the SRS resource; and

determine the transmission power of the SRS ports in the OFDM symbols according to a ratio of the first power to the number of the SRS ports of the M SRS ports included in the OFDM symbols.

Alternatively, the transmitting unit 502 determines the transmission power of each SRS port of the M SRS ports based on the number of the SRS ports of the M SRS ports included in each OFDM symbol, and is specifically configured to:

determine first power corresponding to the SRS resource based on a power control parameter configured for an SRS resource set where the SRS resource is located and/or the SRS resource; and

determine a maximum value of the number of the SRS ports of the M SRS ports included in each OFDM symbol; and

determine the transmission power of each SRS port of the M SRS ports according to a ratio of the first power to the maximum value.

Alternatively, the SRS power control indication information is configured to indicate a power control scaling factor of transmission of the SRS resource.

Alternatively, the transmitting unit 502 is specifically configured to:

determine transmission power of the SRS based on the configuration information of the SRS resource; and

transmit the SRS to the network device based on the transmission power.

In a case of performing resource mapping on the M SRS ports based on the second resource mapping scheme, the transmission power of the SRS is determined based on the configuration information of the SRS resource through at least one of the following items:

transmission power of the SRS ports of the M SRS ports is determined based on at least one of the number M of the SRS ports, the group number N of the N groups of SRS ports, and a number N1 of the time domain resource groups;

transmission power of SRS ports transmitted on a first time domain resource group is determined based on a number of the SRS ports transmitted on the first time domain resource group, where the first time domain resource group is any one of the N1 time domain resource groups;

transmission power of each SRS port of the M SRS ports is determined based on a maximum value of a number of the SRS ports included in each time domain resource group of the N1 time domain resource groups;

transmission power of SRS ports of a first group of SRS ports is determined based on a number of the SRS ports included in the first group of SRS ports, where the first group of SRS ports is any one of the N groups of SRS ports; and

transmission power of each SRS port of the M SRS ports is determined based on a maximum value of a number of the SRS ports of the N groups of SRS ports.

Alternatively, the transmission power of the SRS ports of the M SRS ports is determined based on at least one of the number M of the SRS ports, the group number N of the N groups of SRS ports, and the number N1 of the time domain resource groups through at least one of the following items:

determining the transmission power of each SRS port of the M SRS ports based on $\dfrac{N1}{M}$ ;

determining that the transmission power of each SRS port of the M SRS ports equals to $\dfrac{N1}{M}$ of transmission power computed based on an SRS power control process;

determining the transmission power of each SRS port of the M SRS ports based on $\dfrac{N}{M}$ ; and

determining that the transmission power of each SRS port of the M SRS ports equals to M of transmission power computed based on an SRS power control process.

Alternatively, a value of N is 1, 2, 4, 6, or 8.

Alternatively, a value of N1 is 1, 2, 4, 6, or 8; and/or a value of N2 is 1, 2, 4, 6, or 8.

Alternatively, cyclic shifts corresponding to the sequences of the M SRS ports satisfy at least one of the following items conditions:

different SRS ports of the same group of SRS ports of the N groups of SRS ports correspond to different cyclic shifts; and

different groups of SRS ports of the N groups of SRS ports correspond to a same cyclic shift.

It should be noted herein that the terminal according to the example of the disclosure can implement all the steps of the methods implemented by the terminal in FIG. 2a, 3, or 4 in the above method example, and can achieve same technical effects, and same parts and beneficial effects of the example as those of the method example will not be repeated herein.

based on the same technical concept, an example of the disclosure further provides a network device. The network device may be the network device (including a base station, For example) of the example.

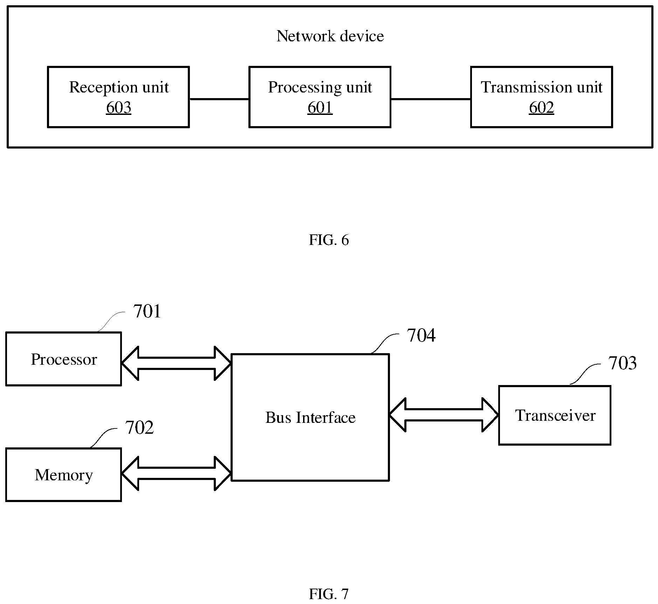

FIG. 6 illustratively shows a network device according to an example of the disclosure. The network device may include: a processing unit 601, a transmitting unit 602, and a receiving unit 603.

The transmitting unit 602 is configured to transmit configuration information of an SRS resource to a terminal.

The receiving unit 603 is configured to receive SRS transmitted by the terminal based on the configuration information of the SRS resource. The SRS resource corresponds to M SRS ports. The M SRS ports include a first SRS port and a second SRS port. The first SRS port and the second SRS port are mapped to different time domain resources.

Alternatively, the M SRS ports include N groups of SRS ports. N is an integer greater than 1. The first SRS port and the second SRS port belong to different groups of SRS ports.

Alternatively, the M SRS ports are mapped to a time-frequency resource according to one of a first resource mapping scheme and a second resource mapping scheme.

In the first resource mapping scheme, different groups of SRS ports of the N groups of SRS ports are mapped to different time domain resources.

In the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, and at least two groups of SRS ports of the N groups of SRS ports are mapped to different frequency domain resource groups. Both N1 and N2 are integers greater than or equal to 1.

Alternatively, the processing unit 601 is configured to:

determine a resource mapping scheme of the SRS and/or a sequence corresponding to the SRS based on at least one of a number M of the SRS ports, a group number N of the N groups of SRS ports included in the M SRS ports, a number N1 of the time domain resource groups, a number N2 of the frequency domain resource groups, a transmission comb number, and an SRS sequence generation parameter.

Alternatively, the processing unit 601 is configured to:

transmit indication information to the terminal, where the indication information includes one or more of the following information:

at least one of a group number N of the N groups of SRS ports included in the M SRS ports, a number N1 of time domain resource groups, and a number N2 of frequency domain resource groups;
an SRS sequence generation parameter; and
time domain resource mapping mode information of the SRS.

Alternatively, the SRS sequence generation parameter includes:

a maximum number of cyclic shifts; and/or,
cyclic shift configuration.

Alternatively, the indication information is included in the configuration information of the SRS resource. Alternatively, the indication information is independent of the configuration information of the SRS resource.

Alternatively, the first resource mapping scheme includes at least one of the following items:

SRS ports of a same group of SRS ports of the N groups of SRS ports are mapped to a same time domain resource;

the M SRS ports are mapped to a same frequency domain resource;

SRS ports of at least one group of SRS ports of the N groups of SRS ports are mapped to a plurality of time domain units in one time slot, where the plurality of time domain units are continuous or discontinuous in time;

SRS ports of at least one group of SRS ports of the N groups of SRS ports are mapped to a plurality of frequency domain units, where the plurality of frequency domain units are continuous or discontinuous in frequency;

a number of frequency domain units to which each SRS port of the M SRS ports is mapped is same;

SRS ports mapped onto adjacent time domain symbols are different;

a number of time domain units to which each SRS port of the M SRS ports is mapped is same;

serial numbers of the SRS ports of the same group of SRS ports of the N groups of SRS ports are adjacent, or, an interval between serial numbers of the SRS ports of the same group of SRS ports of the N groups of SRS ports is K, where K is a multiple of 2 or 4; and

the N groups of SRS ports are sequentially mapped to R OFDM symbols, and in response to existence of remaining OFDM symbols after mapping of the N groups of SRS ports, frequency hopping pattern used for the remaining OFDM symbols may be the same as frequency hopping pattern used for a last group of SRS ports.

Alternatively, the number of the time domain units to which each SRS port of the M SRS ports is mapped is the same as follows: the number of the time domain units to which each SRS port of the M SRS ports is mapped equals to $\frac{1}{N}$ of a number of time domain units configured by the network device for the SRS resource.

Alternatively, the second resource mapping scheme includes at least one of the following items:

different groups of SRS ports of the N groups of SRS ports are mapped to different time domain resource groups and different frequency domain resource groups;

N1 groups of SRS ports of the N groups of SRS ports are mapped to different time domain resource groups and a same frequency domain resource group;

N2 groups of SRS ports of the N groups of SRS ports are mapped to different frequency domain resource groups and a same time domain resource group;

SRS ports of a same group of SRS ports of the N groups of SRS ports are mapped to a same time-frequency resource;

a number of time domain units to which each SRS port of the M SRS ports is mapped is same;

a number of frequency domain units to which each SRS port of the M SRS ports is mapped is same; and

serial numbers of the SRS ports of the same group of SRS ports of the N groups of SRS ports are adjacent, or, an interval between serial numbers of the SRS ports of the same group of SRS ports of the N groups of SRS ports is K, where K is a multiple of 2 or 4.

Alternatively, in a case that the number of the time domain units to which each SRS port of the M SRS ports is mapped is the same, the number of the time domain units to which each SRS port is mapped equals to $\frac{1}{N1}$ of a number of time domain units configured by the network device for the SRS resource.

Alternatively, in a case that the number of the frequency domain units to which each SRS port of the M SRS ports is mapped is the same, the number of the frequency domain units to which each SRS port is mapped equals to $\frac{1}{N2}$ of a number of frequency domain units configured by the network device for the SRS resource.

Alternatively, in a case of performing resource mapping on the M SRS ports based on the first resource mapping scheme, transmission power of the SRS is determined through at least one of the following items:

transmission power of the SRS ports of the M SRS ports is determined based on at least one of the number M of the SRS ports and the group number N of the N groups of SRS ports;

transmission power of the SRS ports of the M SRS ports is determined based on at least one of the number M of the SRS ports and a preset parameter, where the preset parameter is configured to determine the group number N of the N groups of SRS ports;

transmission power of the SRS ports of the M SRS ports is determined based on a number of OFDM symbols of the SRS resource, where the number of the OFDM symbols indicates a number of groups into which the OFDM symbols of the SRS resource are divided, SRS ports corresponding to a same group of OFDM symbols are same, and SRS ports corresponding to different groups of OFDM symbols are different;

transmission power of SRS ports in the OFDM symbols is determined based on a number of the SRS ports of the M SRS ports included in the OFDM symbols;

transmission power of each SRS port of the M SRS ports is determined based on a number of the SRS ports of the M SRS ports included in each OFDM symbol;

transmission power of SRS ports of a first group of SRS ports is determined based on a number of the SRS ports included in the first group of SRS ports, where the first group of SRS ports is one group of SRS ports of the N groups of SRS ports included in the M SRS ports;

transmission power of each SRS port of the M SRS ports is determined based on a maximum value of a number of the SRS ports of the N groups of SRS ports;

the transmission power of the SRS is determined based on a frequency domain transmission comb number offset to which the SRS resource is mapped; and

the transmission power of the SRS is determined based on a frequency domain transmission comb number offset included in one OFDM symbol.

Alternatively, the transmission power of the SRS ports of the M SRS ports is determined based on at least one of the number M of the SRS ports and the group number N of the N groups of SRS ports through at least one of the following items:

determining the transmission power of each SRS port of the M SRS ports based on $\frac{N}{M}$ and

determining that the transmission power of each SRS port of the M SRS ports equals to $\frac{N}{M}$ of transmission power computed based on an SRS power control process.

Alternatively, the preset parameter includes any one or more of the following parameters:

a number $N_{ap}^{s}$ of the SRS ports included in the OFDM symbols, or a positive integer $N_{ap}^{s}$ of a first agreement;
a number Ns of OFDM symbols occupied by the SRS resource in one time slot;
a repetition factor R1 of the SRS resource;

a number $N_{s}^{ap}$ of OFDM symbols to which the SRS ports are mapped in one time slot, or a positive integer $N_{s}^{ap}$ of a second agreement;
a number Nhop of times of frequency hopping of the SRS ports in one time slot; and
a positive integer of a third agreement.

The transmission power of the SRS ports of the M SRS ports is determined based on at least one of the number M of the SRS ports and the preset parameter as follows:

in response to determining that the preset parameters include Ns, R1 and Nhop, the transmission power of the SRS ports of the M SRS ports is determined according to $\frac{N_{s}}{M*R1*N_{hop}}$;

in response to determining that the preset parameters include Ns and $N_{s}^{ap}$, the transmission power of the SRS ports of the M SRS ports is determined according to $\frac{N_{s}}{M*N_{s}^{ap}}$;

in response to determining that the preset parameters include Ns and R1, the transmission power of the SRS ports of the M SRS ports is determined according to $\frac{N_{s}}{M*R}$; and

in response to determining that the preset parameter includes the positive integer of the third agreement, the transmission power of the SRS ports of the M SRS ports is determined according to M and the positive integer of the third agreement.

Alternatively, a number of OFDM symbols to which each SRS port corresponding to the SRS resource is mapped in one time slot is same; or,

a number of OFDM symbols to which one SRS port corresponding to the SRS resource is mapped in one time slot is a minimum value or a maximum value of a number of OFDM symbols to which each SRS port corresponding to the SRS resource is mapped in one time slot.

Alternatively, in a case that the transmission power of the SRS ports in the OFDM symbols is determined based on the number of the SRS ports of the M SRS ports included in the OFDM symbols, the processing unit 601 is configured to:

determine first power corresponding to the SRS resource based on a power control parameter configured for an SRS resource set where the SRS resource is located and/or the SRS resource; and
determine the transmission power of the SRS ports in the OFDM symbols according to a ratio of the first power to the number of the SRS ports of the M SRS ports included in the OFDM symbols.

Alternatively, in a case that the transmission power of each SRS port of the M SRS ports is determined based on the number of the SRS ports of the M SRS ports included in each OFDM symbol, the processing unit 601 is configured to:

determine first power corresponding to the SRS resource based on a power control parameter configured for an SRS resource set where the SRS resource is located and/or the SRS resource; and
determine a maximum value of the number of the SRS ports of the M SRS ports included in each OFDM symbol; and
determine the transmission power of each SRS port of the M SRS ports according to a ratio of the first power to the maximum value.

Alternatively, the SRS power control indication information is configured to indicate a power control scaling factor of transmission of the SRS resource.

Alternatively, in a case of performing resource mappingon the M SRS ports based on the second resource mapping scheme, transmission power of the SRS is determined through at least one of the following items:

transmission power of the SRS ports of the M SRS ports is determined based on at least one of the number M of the SRS ports, the group number N of the N groups of SRS ports, and a number N1 of the time domain resource groups;
transmission power of SRS ports transmitted on a first time domain resource group is determined based on a number of the SRS ports transmitted on the first time domain resource group, where the first time domain resource group is any one of the N1 time domain resource groups;
transmission power of each SRS port of the M SRS ports is determined based on a maximum value of a number of the SRS ports included in each time domain resource group of the N1 time domain resource groups;
transmission power of SRS ports of a first group of SRS ports is determined based on a number of the SRS ports included in the first group of SRS ports, where the first group of SRS ports is any one of the N groups of SRS ports; and
transmission power of each SRS port of the M SRS ports is determined based on a maximum value of a number of the SRS ports of the N groups of SRS ports.

Alternatively, the transmission power of the SRS ports of the M SRS ports is determined based on at least one of the number M of the SRS ports, the group number N of the N groups of SRS ports, and the number N1 of the time domain resource groups through at least one of the following items:

determining the transmission power of each SRS port of the M SRS ports based on $\dfrac{N1}{M}$;

determining that the transmission power of each SRS port of the M SRS ports equals to $\dfrac{N1}{M}$ of transmission power computed based on an SRS power control process;

determining the transmission power of each SRS port of the M SRS ports based on $\dfrac{N}{M}$; and

determining that the transmission power of each SRS port of the M SRS ports equals to $\dfrac{N}{M}$ of transmission power computed based on an SRS power control process.

Alternatively, a value of N is 1, 2, 4, 6, or 8.
Alternatively, a value of N1 is 1, 2, 4, 6, or 8; and/or a value of N2 is 1, 2, 4, 6, or 8.
Alternatively, cyclic shifts corresponding to the sequences of the M SRS ports satisfy at least one of the following items conditions:

different SRS ports of the same group of SRS ports of the N groups of SRS ports correspond to different cyclic shifts; and
different groups of SRS ports of the N groups of SRS ports correspond to a same cyclic shift.

It should be noted herein that the network device according to the example of the disclosure can implement all the steps of the methods implemented by the network device in FIG. 2b, 3, or 4 in the above method example, and can achieve same technical effects, and same parts and beneficial effects of the example as those of the method example will not be repeated herein.

based on the same technical concept, an example of the disclosure further provides a communication apparatus, so as to achieve functions of the corresponding device of the example.

FIG. 7 illustratively shows a schematic structural diagram of a communication apparatus according to an example of the disclosure. As shown in the figure, the communication apparatus may include: at least one processor 701, a memory 702 communicatively connected to the at least one processor, a transceiver 703 communicatively connected to the at least one processor, and a bus interface 704.

The at least one processor 701 is responsible for bus structure management and general processing. The memory 702 may store data used by the processor 701 during operation execution. The transceiver 703 is configured to receive and transmit data under control of the processor 701.

In response to determining that the communication apparatus is a terminal, the at least one processor 701 may execute the following operations:

receiving configuration information of a sounding reference signaling (SRS) resource transmitted by a network device; and

transmitting SRS to the network device based on the configuration information of the SRS resource, where the SRS resource corresponds to M SRS ports, the M SRS ports include a first SRS port and a second SRS port, the first SRS port and the second SRS port are mapped to different time domain resources, and M is an integer greater than 1.

Alternatively, the M SRS ports include N groups of SRS ports. N is an integer greater than 1. The first SRS port and the second SRS port belong to different groups of SRS ports.

Alternatively, in a case that the SRS is transmitted to the network device based on the configuration information of the SRS resource, the at least one processor 701 is configured to:

determine a resource mapping scheme of the SRS and/or a cyclic shift corresponding to the SRS based on the configuration information of the SRS resource; and

perform resource mapping of the M SRS ports according to the resource mapping scheme of the SRS.

The resource mapping scheme includes one of a first resource mapping scheme and a second resource mapping scheme.

In the first resource mapping scheme, different groups of SRS ports of the N groups of SRS ports are mapped to different time domain resources.

In the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, and at least two groups of SRS ports of the N groups of SRS ports are mapped to different frequency domain resource groups. Both N1 and N2 are integers greater than or equal to 1.

Alternatively, after the configuration information of the SRS resource transmitted by the network device is received, the at least one processor 701 is configured to:
determine one or more of the N groups of SRS ports included in the M SRS ports, resource mapping corresponding to the M SRS ports, and SRS sequences corresponding to the M SRS ports based on one or more of a number M of the SRS ports, an SRS sequence generation parameter corresponding to the SRS resource and a transmission comb number.

Alternatively, before the SRS is transmitted to the network device, the at least one processor 701 is configured to:

receive indication information transmitted by the network device. The indication information includes one or more of the following information:
at least one of a group number N of the N groups of SRS ports included in the M SRS ports, a number N1 of time domain resource groups, and a number N2 of frequency domain resource groups;
an SRS sequence generation parameter; and
time domain resource mapping mode information of the SRS.

Alternatively, the SRS sequence generation parameter includes:

a maximum number of cyclic shifts; and/or,

cyclic shift configuration.

Alternatively, the indication information is included in the configuration information of the SRS resource. Alternatively, the indication information is independent of the configuration information of the SRS resource.

Alternatively, the first resource mapping scheme includes at least one of the following items:

SRS ports of a same group of SRS ports of the N groups of SRS ports are mapped to a same time domain resource;
the M SRS ports are mapped to a same frequency domain resource;
SRS ports of at least one group of SRS ports of the N groups of SRS ports are mapped to a plurality of time domain units in one time slot, where the plurality of time domain units are continuous or discontinuous in time;
SRS ports of at least one group of SRS ports of the N groups of SRS ports are mapped to a plurality of frequency domain units, where the plurality of frequency domain units are continuous or discontinuous in frequency;
a number of frequency domain units to which each SRS port of the M SRS ports is mapped is same;
SRS ports mapped onto adjacent time domain symbols are different;
a number of time domain units to which each SRS port of the M SRS ports is mapped is same;
serial numbers of the SRS ports of the same group of SRS ports of the N groups of SRS ports are adjacent, or, an interval between serial numbers of the SRS ports of the same group of SRS ports of the N groups of SRS ports is K, where K is a multiple of 2 or 4; and
the N groups of SRS ports are sequentially mapped to R OFDM symbols, and in response to existence of remaining OFDM symbols after mapping of the N groups of SRS ports, frequency hopping pattern used for the remaining OFDM symbols may be the same as frequency hopping pattern used for a last group of SRS ports.

Alternatively, the number of the time domain units to which each SRS port of the M SRS ports is mapped is the same as follows: the number of the time domain units to which each SRS port of the M SRS ports is mapped equals to $\frac{1}{N}$ of a number of time domain units configured by the network device for the SRS resource.

Alternatively, the second resource mapping scheme includes at least one of the following items:

different groups of SRS ports of the N groups of SRS ports are mapped to different time domain resource groups and different frequency domain resource groups;
N1 groups of SRS ports of the N groups of SRS ports are mapped to different time domain resource groups and a same frequency domain resource group;
N2 groups of SRS ports of the N groups of SRS ports are mapped to different frequency domain resource groups and a same time domain resource group;
SRS ports of a same group of SRS ports of the N groups of SRS ports are mapped to a same time-frequency resource;
a number of time domain units to which each SRS port of the M SRS ports is mapped is same;
a number of frequency domain units to which each SRS port of the M SRS ports is mapped is same; and
serial numbers of the SRS ports of the same group of SRS ports of the N groups of SRS ports are adjacent, or, an interval between serial numbers of the SRS ports of the same group of SRS ports of the N groups of SRS ports is K, where K is a multiple of 2 or 4.

Alternatively, in a case that the number of the time domain units to which each SRS port of the M SRS ports is mapped is the same, the number of the time domain units to which each SRS port is mapped equals to $\frac{1}{N1}$ of a number of time domain units configured by the network device for the SRS resource.

Alternatively, in a case that the number of the frequency domain units to which each SRS port of the M SRS ports is mapped is the same, the number of the frequency domain units to which each SRS port is mapped equals to $\frac{1}{N2}$ of a number of frequency domain units configured by the network device for the SRS resource.

Alternatively, in a case that the SRS is transmitted to the network device based on the configuration information of the SRS resource, the at least one processor 701 is configured to:

determine transmission power of the SRS based on the configuration information of the SRS resource or power control indication information transmitted by the network device; and
transmit the SRS to the network device based on the transmission power of the SRS.

In a case of performing resource mapping on the M SRS ports based on the first resource mapping scheme, the transmission power of the SRS is determined based on the configuration information of the SRS resource through at least one of the following items:

transmission power of the SRS ports of the M SRS ports is determined based on at least one of the number M of the SRS ports and the group number N of the N groups of SRS ports;

transmission power of the SRS ports of the M SRS ports is determined based on at least one of the number M of the SRS ports and a preset parameter, where the preset parameter is configured to determine the group number N of the N groups of SRS ports;

transmission power of the SRS ports of the M SRS ports is determined based on a number of OFDM symbols of the SRS resource, where the number of the OFDM symbols indicates a number of groups into which the OFDM symbols of the SRS resource are divided, SRS ports corresponding to a same group of OFDM symbols are same, and SRS ports corresponding to different groups of OFDM symbols are different;

transmission power of SRS ports in the OFDM symbols is determined based on a number of the SRS ports of the M SRS ports included in the OFDM symbols;

transmission power of each SRS port of the M SRS ports is determined based on a number of the SRS ports of the M SRS ports included in each OFDM symbol;

transmission power of SRS ports of a first group of SRS ports is determined based on a number of the SRS ports included in the first group of SRS ports, where the first group of SRS ports is one group of the N groups of SRS ports included in the M SRS ports;

transmission power of each SRS port of the M SRS ports is determined based on a maximum value of a number of the SRS ports of the N groups of SRS ports;

the transmission power of the SRS is determined based on a frequency domain transmission comb number offset to which the SRS resource is mapped; and

the transmission power of the SRS is determined based on a frequency domain transmission comb number offset included in one OFDM symbol.

Alternatively, the transmission power of the SRS ports of the M SRS ports is determined based on at least one of the number M of the SRS ports and the group number N of the N groups of SRS ports through at least one of the following items:

determining the transmission power of each SRS port of the M SRS ports based on $\frac{N}{M}$; and

determining that the transmission power of each SRS port of the M SRS ports equals to $\frac{N}{M}$ of transmission power computed based on an SRS power control process.

Alternatively, the preset parameter includes any one or more of the following parameters:

a number $N_{ap}^{s}$ of the SRS ports included in the OFDM symbols, or a positive integer $N_{ap}^{s}$ of a first agreement; a number Ns of OFDM symbols occupied by the SRS resource in one time slot; a repetition factor R1 of the SRS resource;

a number $N_{s}^{ap}$ of OFDM symbols to which the SRS ports are mapped in one time slot, or a positive integer $N_{s}^{ap}$ of a second agreement; a number Nhop of times of frequency hopping of the SRS ports in one time slot; and a positive integer of a third agreement.

The transmission power of the SRS ports of the M SRS ports is determined based on at least one of the number M of the SRS ports and the preset parameter as follows:

in response to determining that the preset parameters include Ns, R1 and Nhop, the transmission power of the SRS ports of the M SRS ports is determined according to $\frac{N_{s}}{M*R1*N_{hop}}$;

in response to determining that the preset parameters include Ns and $N_{s}^{ap}$, the transmission power of the SRS ports of the M SRS ports is determined according to $\frac{N_s}{M*N_s^{ap.}}$;

in response to determining that the preset parameters include Ns and R1, the transmission power of the SRS ports of the M SRS ports is determined according to $\frac{N_s}{M*R}$; and

in response to determining that the preset parameter includes the positive integer of the third agreement, the transmission power of the SRS ports of the M SRS ports is determined according to M and the positive integer of the third agreement.

Alternatively, a number of OFDM symbols to which each SRS port corresponding to the SRS resource is mapped in one time slot is same; or,

a number of OFDM symbols to which one SRS port corresponding to the SRS resource is mapped in one time slot is a minimum value or a maximum value of a number of OFDM symbols to which each SRS port corresponding to the SRS resource is mapped in one time slot.

Alternatively, in a case that the transmission power of the SRS ports in the OFDM symbols is determined based on the number of the SRS ports of the M SRS ports included in the OFDM symbols, the at least one processor 701 is configured to:

determine first power corresponding to the SRS resource based on a power control parameter configured for an SRS resource set where the SRS resource is located and/or the SRS resource; and
determine the transmission power of the SRS ports in the OFDM symbols according to a ratio of the first power to the number of the SRS ports of the M SRS ports included in the OFDM symbols.

Alternatively, in a case that the transmission power of each SRS port of the M SRS ports is determined based on the number of the SRS ports of the M SRS ports included in each OFDM symbol, the at least one processor 701 is configured to:

determine first power corresponding to the SRS resource based on a power control parameter configured for an SRS resource set where the SRS resource is located and/or the SRS resource;
determine a maximum value of the number of the SRS ports of the M SRS ports included in each OFDM symbol; and
determine the transmission power of each SRS port of the M SRS ports according to a ratio of the first power to the maximum value.

Alternatively, the SRS power control indication information is configured to indicate a power control scaling factor of transmission of the SRS resource.

Alternatively, in a case that the SRS is transmitted to the network device based on the configuration information of the SRS resource, the at least one processor 701 is configured to:

determine transmission power of the SRS based on the configuration information of the SRS resource; and
transmit the SRS to the network device based on the transmission power.

In a case of performing resource mapping on the M SRS ports based on the second resource mapping scheme, the transmission power of the SRS is determined based on the configuration information of the SRS resource through at least one of the following items:

transmission power of the SRS ports of the M SRS ports is determined based on at least one of the number M of the SRS ports, the group number N of the N groups of SRS ports, and a number N1 of the time domain resource groups;
transmission power of SRS ports transmitted on a first time domain resource group is determined based on a number of the SRS ports transmitted on the first time domain resource group, where the first time domain resource group is any one of the N1 time domain resource groups;
transmission power of each SRS port of the M SRS ports is determined based on a maximum value of a number of the SRS ports included in each time domain resource group of the N1 time domain resource groups;
transmission power of SRS ports of a first group of SRS ports is determined based on a number of the SRS ports included in the first group of SRS ports, where the first group of SRS ports is any one of the N groups of SRS ports; and
transmission power of each SRS port of the M SRS ports is determined based on a maximum value of a number of the SRS ports of the N groups of SRS ports.

Alternatively, the transmission power of the SRS ports of the M SRS ports is determined based on at least one of the number M of the SRS ports, the group number N of the N groups of SRS ports, and the number N1 of the time domain resource groups through at least one of the following items:

determining the transmission power of each SRS port of the M SRS ports based on $\dfrac{N1}{M}$;

determining that the transmission power of each SRS port of the M SRS ports equals to $\dfrac{N1}{M}$ of transmission power computed based on an SRS power control process;

determining the transmission power of each SRS port of the M SRS ports based on $\dfrac{N}{M}$; and

determining that the transmission power of each SRS port of the M SRS ports equals to M of transmission power computed based on an SRS power control process.

Alternatively, a value of N is 1, 2, 4, 6, or 8.

Alternatively, a value of N1 is 1, 2, 4, 6, or 8; and/or a value of N2 is 1, 2, 4, 6, or 8.

Alternatively, cyclic shifts corresponding to the sequences of the M SRS ports satisfy at least one of the following items conditions:

different SRS ports of the same group of SRS ports of the N groups of SRS ports correspond to different cyclic shifts; and

different groups of SRS ports of the N groups of SRS ports correspond to a same cyclic shift.

In response to determining that the communication apparatus is a network device, the at least one processor 701 may execute the following operations:

transmitting configuration information of a sounding reference signaling (SRS) resource to a terminal; and receiving SRS transmitted by the terminal based on the configuration information of the SRS resource. The SRS resource corresponds to M SRS ports. The M SRS ports include a first SRS port and a second SRS port. The first SRS port and the second SRS port are mapped to different time domain resources.

Alternatively, the M SRS ports include N groups of SRS ports. N is an integer greater than 1. The first SRS port and the second SRS port belong to different groups of SRS ports.

Alternatively, the M SRS ports are mapped to a time-frequency resource according to one of a first resource mapping scheme and a second resource mapping scheme.

In the first resource mapping scheme, different groups of SRS ports of the N groups of SRS ports are mapped to different time domain resources.

In the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, and at least two groups of SRS ports of the N groups of SRS ports are mapped to different frequency domain resource groups. Both N1 and N2 are integers greater than or equal to 1.

Alternatively, the at least one processor 701 is further configured to:
determine a resource mapping scheme of the SRS and/or a sequence corresponding to the SRS based on at least one of a number M of the SRS ports, a group number N of the N groups of SRS ports included in the M SRS ports, a number N1 of the time domain resource groups, a number N2 of the frequency domain resource groups, a transmission comb number, and an SRS sequence generation parameter.

Alternatively, the at least one processor 701 is further configured to:

transmit indication information to the terminal. The indication information includes one or more of the following information:
at least one of a group number N of the N groups of SRS ports included in the M SRS ports, a number N1 of time domain resource groups, and a number N2 of frequency domain resource groups;
an SRS sequence generation parameter; and
time domain resource mapping mode information of the SRS.

Alternatively, the SRS sequence generation parameter includes:

a maximum number of cyclic shifts; and/or,
cyclic shift configuration.

Alternatively, the indication information is included in the configuration information of the SRS resource. Alternatively, the indication information is independent of the configuration information of the SRS resource.

Alternatively, the first resource mapping scheme includes at least one of the following items:

SRS ports of a same group of SRS ports of the N groups of SRS ports are mapped to a same time domain resource;

the M SRS ports are mapped to a same frequency domain resource;
SRS ports of at least one group of SRS ports of the N groups of SRS ports are mapped to a plurality of time domain units in one time slot, where the plurality of time domain units are continuous or discontinuous in time;
SRS ports of at least one group of SRS ports of the N groups of SRS ports are mapped to a plurality of frequency domain units, where the plurality of frequency domain units are continuous or discontinuous in frequency;
a number of frequency domain units to which each SRS port of the M SRS ports is mapped is same;
SRS ports mapped onto adjacent time domain symbols are different;
a number of time domain units to which each SRS port of the M SRS ports is mapped is same;
serial numbers of the SRS ports of the same group of SRS ports of the N groups of SRS ports are adjacent, or, an interval between serial numbers of the SRS ports of the same group of SRS ports of the N groups of SRS ports is K, where K is a multiple of 2 or 4; and
the N groups of SRS ports are sequentially mapped to R OFDM symbols, and in response to existence of remaining OFDM symbols after mapping of the N groups of SRS ports, frequency hopping pattern used for the remaining OFDM symbols may be the same as frequency hopping pattern used for a last group of SRS ports.

Alternatively, the number of the time domain units to which each SRS port of the M SRS ports is mapped is the same as follows: the number of the time domain units to which each SRS port of the M SRS ports is mapped equals to $\frac{1}{N}$ of a number of time domain units configured by the network device for the SRS resource.

Alternatively, the second resource mapping scheme includes at least one of the following items:

different groups of SRS ports of the N groups of SRS ports are mapped to different time domain resource groups and different frequency domain resource groups;
N1 groups of SRS ports of the N groups of SRS ports are mapped to different time domain resource groups and a same frequency domain resource group;
N2 groups of SRS ports of the N groups of SRS ports are mapped to different frequency domain resource groups and a same time domain resource group;
SRS ports of a same group of SRS ports of the N groups of SRS ports are mapped to a same time-frequency resource;
a number of time domain units to which each SRS port of the M SRS ports is mapped is same;
a number of frequency domain units to which each SRS port of the M SRS ports is mapped is same; and
serial numbers of the SRS ports of the same group of SRS ports of the N groups of SRS ports are adjacent, or, an interval between serial numbers of the SRS ports of the same group of SRS ports of the N groups of SRS ports is K, where K is a multiple of 2 or 4.

Alternatively, in a case that the number of the time domain units to which each SRS port of the M SRS ports is mapped is the same, the number of the time domain units to which each SRS port is mapped equals to $\frac{1}{N1}$ of a number of time domain units configured by the network device for the SRS resource.

Alternatively, in a case that the number of the frequency domain units to which each SRS port of the M SRS ports is mapped is the same, the number of the frequency domain units to which each SRS port is mapped equals to $\frac{1}{N2}$ of a number of frequency domain units configured by the network device for the SRS resource.

Alternatively, in a case of performing resource mapping on the M SRS ports based on the first resource mapping scheme, transmission power of the SRS is determined through at least one of the following items:

transmission power of the SRS ports of the M SRS ports is determined based on at least one of the number M of the SRS ports and the group number N of the N groups of SRS ports;

transmission power of the SRS ports of the M SRS ports is determined based on at least one of the number M of the SRS ports and a preset parameter, where the preset parameter is configured to determine the group number N of the N groups of SRS ports;

transmission power of the SRS ports of the M SRS ports is determined based on a number of OFDM symbols of the SRS resource, where the number of the OFDM symbols indicates a number of groups into which the OFDM symbols of the SRS resource are divided, SRS ports corresponding to a same group of OFDM symbols are same, and SRS ports corresponding to different groups of OFDM symbols are different;

transmission power of SRS ports in the OFDM symbols is determined based on a number of the SRS ports of the M SRS ports included in the OFDM symbols;

transmission power of each SRS port of the M SRS ports is determined based on a number of the SRS ports of the M SRS ports included in each OFDM symbol;

transmission power of SRS ports of a first group of SRS ports is determined based on a number of the SRS ports included in the first group of SRS ports, where the first group of SRS ports is one group of SRS ports of the N groups of SRS ports included in the M SRS ports;

transmission power of each SRS port of the M SRS ports is determined based on a maximum value of a number of the SRS ports of the N groups of SRS ports;

transmission power of the SRS is determined based on a frequency domain transmission comb number offset to which the SRS resource is mapped; and

transmission power of the SRS is determined based on a frequency domain transmission comb number offset included in one OFDM symbol.

Alternatively, the transmission power of the SRS ports of the M SRS ports is determined based on at least one of the number M of the SRS ports and the group number N of the N groups of SRS ports through at least one of the following items:

determining the transmission power of each SRS port of the M SRS ports based on $\frac{N}{M}$; and

determining that the transmission power of each SRS port of the M SRS ports equals to M of transmission power computed based on an SRS power control process.

Alternatively, the preset parameter includes any one or more of the following parameters:

a number $N_{ap}^s$ of the SRS ports included in the OFDM symbols, or a positive integer $N_{ap}^s$ of a first agreement;

a number Ns of OFDM symbols occupied by the SRS resource in one time slot;

a repetition factor R1 of the SRS resource;

a number $N_s^{ap}$ of OFDM symbols to which the SRS ports are mapped in one time slot, or a positive integer $N_s^{ap}$ of a second agreement;

a number Nhop of times of frequency hopping of the SRS ports in one time slot; and

a positive integer of a third agreement.

The transmission power of the SRS ports of the M SRS ports is determined based on at least one of the number M of the SRS ports and the preset parameter as follows:

in response to determining that the preset parameters include Ns, R1 and Nhop, the transmission power of the SRS ports of the M SRS ports is determined according to $\frac{N_s}{M*R1*N_{hop}}$;

in response to determining that the preset parameters include Ns and $N_s^{ap}$, the transmission power of the SRS ports of the M SRS ports is determined according to $\frac{N_s}{M*N_s^{ap}}$;

in response to determining that the preset parameters include Ns and R1, the transmission power of the SRS ports of the M SRS ports is determined according to $\frac{N_s}{M*R}$; and

in response to determining that the preset parameter includes the positive integer of the third agreement, the transmission power of the SRS ports of the M SRS ports is determined according to M and the positive integer of the third agreement.

Alternatively, a number of OFDM symbols to which each SRS port corresponding to the SRS resource is mapped in one time slot is same; or,
a number of OFDM symbols to which one SRS port corresponding to the SRS resource is mapped in one time slot is a minimum value or a maximum value of a number of OFDM symbols to which each SRS port corresponding to the SRS resource is mapped in one time slot.

Alternatively, in a case that the transmission power of the SRS ports in the OFDM symbols is determined based on the number of the SRS ports of the M SRS ports included in the OFDM symbols, the at least one processor 701 is configured to:

determine first power corresponding to the SRS resource based on a power control parameter configured for an SRS resource set where the SRS resource is located and/or the SRS resource; and
determine the transmission power of the SRS ports in the OFDM symbols according to a ratio of the first power to the number of the SRS ports of the M SRS ports included in the OFDM symbols.

Alternatively, in a case that the transmission power of each SRS port of the M SRS ports is determined based on the number of the SRS ports of the M SRS ports included in each OFDM symbol, the at least one processor 701 is configured to:

determine first power corresponding to the SRS resource based on a power control parameter configured for an SRS resource set where the SRS resource is located and/or the SRS resource;
determine a maximum value of the number of the SRS ports of the M SRS ports included in each OFDM symbol; and
determine the transmission power of each SRS port of the M SRS ports according to a ratio of the first power to the maximum value.

Alternatively, the SRS power control indication information is configured to indicate a power control scaling factor of transmission of the SRS resource.

Alternatively, in a case of performing resource mapping on the M SRS ports based on the second resource mapping scheme, transmission power of the SRS is determined through at least one of the following items:

transmission power of the SRS ports of the M SRS ports is determined based on at least one of the number M of the SRS ports, the group number N of the N groups of SRS ports, and a number N1 of the time domain resource groups;
transmission power of SRS ports transmitted on a first time domain resource group is determined based on a number of the SRS ports transmitted on the first time domain resource group, where the first time domain resource group is any one of the N1 time domain resource groups;
transmission power of each SRS port of the M SRS ports is determined based on a maximum value of a number of the SRS ports included in each time domain resource group of the N1 time domain resource groups;
transmission power of SRS ports of a first group of SRS ports is determined based on a number of the SRS ports included in the first group of SRS ports, where the first group of SRS ports is any one of the N groups of SRS ports; and
transmission power of each SRS port of the M SRS ports is determined based on a maximum value of a number of the SRS ports of the N groups of SRS ports.

Alternatively, the transmission power of the SRS ports of the M SRS ports is determined based on at least one of the number M of the SRS ports, the group number N of the N groups of SRS ports, and the number N1 of the time domain resource groups through at least one of the following items:

determining the transmission power of each SRS port of the M SRS ports based on $\frac{N1}{M}$;

determining that the transmission power of each SRS port of the M SRS ports equals to $\frac{N1}{M}$ of transmission power computed based on an SRS power control process;

determining the transmission power of each SRS port of the M SRS ports based on $\frac{N}{M}$; and
determining that the transmission power of each SRS port of the M SRS ports equals to M of transmission power computed based on an SRS power control process.

Alternatively, a value of N is 1, 2, 4, 6, or 8.

Alternatively, a value of N1 is 1, 2, 4, 6, or 8; and/or a value of N2 is 1, 2, 4, 6, or 8.

Alternatively, cyclic shifts corresponding to the sequences of the M SRS ports satisfy at least one of the following items conditions:

different SRS ports of the same group of SRS ports of the N groups of SRS ports correspond to different cyclic shifts; and

different groups of SRS ports of the N groups of SRS ports correspond to a same cyclic shift.

A bus structure may include any number of interconnected buses and bridges. Specifically, various circuits of one or more processors represented by the at least one processor 701 and a memory represented by the memory 702 are linked together. The bus structure may also link various other circuits, such as peripheral device, voltage regulator and power management circuits, which are well known in the art and will not be further described herein. A bus interface is used as an interface. The processor 701 is responsible for bus structure management and general processing. The memory 702 may store data used by the processor 701 during operation execution.

A flow disclosed in the example of the disclosure may be applied to the at least one processor 701 or implemented by the at least one processor 701. In an implementation process, each step of a signal processing flow may be completed by an integrated logic circuit of hardware in the at least one processor 701 or an instruction in a form of software. The processor 701 may be a general-purpose processor, a digital signal processor, an application-specific integrated circuit, a field programmable gate array or other programmable logic devices, a discrete gate or transistor logic device, or a discrete hardware component, and may implement or execute the methods, steps and logic block diagrams disclosed in the examples of the disclosure. The general-purpose processor may be a microprocessor, or any conventional processor. The steps of the method disclosed in connection with the example of the disclosure may be directly implemented by a hardware processor, or by a combination of hardware and software modules in the processor. The software module may be located in a random access memory, a flash memory, a read-only memory, a programmable read-only memory or an electrically erasable programmable memory, a register, and other mature storage media in the art. The storage medium is located in the memory 702. The at least one processor 701 reads information in the memory 702 and completes the steps of the signal processing flow in combination with hardware.

Specifically, the at least one processor 701 is configured to read a computer instruction in the memory 702 and execute functions achieved by the corresponding devices in the flow shown in FIG. 2a, 2b, 3, or 4.

It should be noted herein that the communication apparatus according to the example of the disclosure can implement all the steps of the methods implemented by the above method example, and can achieve same technical effects, and same parts and beneficial effects of the example as those of the method example will not be repeated herein.

An example of the disclosure further provides a computer-readable storage medium. The computer-readable storage medium stores an instruction executable by a computer. The instruction executable by the computer is configured to cause the computer to execute the method executed by the corresponding device of the example.

Those skilled in the art should understand that the examples of the disclosure may be provided as methods, systems, or computer program products. Therefore, the disclosure may employ full hardware examples, full software examples, or software and hardware combined examples. Moreover, the disclosure may take a form of a computer program product implemented on one or more computer usable storage media (including, but not limited to, a disk memory, a compact disc read-only memory (CD-ROM), an optical memory, etc.) including computer usable program codes.

The disclosure is described with reference to flow diagrams and/or block diagrams of methods, devices (systems), and computer program products according to the disclosure. It should be understood that each flow and/or block in the flow diagrams and/or block diagrams and combinations of the flows and/or blocks in the flow diagrams and/or block diagrams may be implemented by computer program instructions. The computer program instructions may be provided for a processor of a general-purpose computer, a special-purpose computer, an embedded processor, or other programmable data processing devices, to produce a machine, such that instructions executed by the processor of the computer or other programmable data processing devices produce an apparatus configured to achieve functions specified in one or more flows of each flow diagram and/or one or more blocks of each block diagram.

The computer program instructions can also be stored in a computer-readable memory that may guide a computer or other programmable data processing devices to work in a specific manner, such that the instructions stored in the computer-readable memory produce an article of manufacture including an instruction apparatus. The instruction apparatus achieves functions specified in one or more flows of each flow diagram and/or one or more blocks in each block diagram.

The computer program instructions may be loaded onto a computer or another programmable data processing device, such that a series of operations and steps are performed on the computer or the another programmable device, thereby generating computer-implemented processing. Therefore, the instructions executed on the computer or the another programmable device provide steps for implementing a specific function in one or more flows in the flow diagrams and/or in one or more blocks in the block diagrams.

Obviously, those skilled in the art may make various modifications and variations to the disclosure without departing from the spirit and scope of the disclosure. In this way, if these modifications and variations of the disclosure fall within the scope of the claims of the disclosure and their equivalent technologies, the disclosure is also intended to include these modifications and variations.

**Claims**

1. A method for transmitting a reference signal, **characterized in that**, comprising:

    receiving configuration information of a sounding reference signaling (SRS) resource transmitted by a network device; and
    transmitting SRS to the network device based on the configuration information of the SRS resource, wherein the SRS resource corresponds to M SRS ports, the M SRS ports comprise a first SRS port and a second SRS port, the first SRS port and the second SRS port are mapped to different time domain resources, and M is an integer greater than 1.

2. The method according to claim 1, **characterized in that** the M SRS ports comprise N groups of SRS ports, N is an integer greater than 1, and the first SRS port and the second SRS port belong to different groups of SRS ports.

3. The method according to claim 2, **characterized in that** the transmitting SRS to the network device based on the configuration information of the SRS resource comprises:

    determining a resource mapping scheme of the SRS and/or a cyclic shift corresponding to the SRS based on the configuration information of the SRS resource; and
    performing resource mapping of the M SRS ports according to the resource mapping scheme of the SRS, wherein the resource mapping scheme comprises one of a first resource mapping scheme and a second resource mapping scheme;
    in the first resource mapping scheme, different groups of SRS ports of the N groups of SRS ports are mapped to different time domain resources; and
    in the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, at least two groups of SRS ports of the N groups of SRS ports are mapped to different frequency domain resource groups, and both N1 and N2 are integers greater than or equal to 1.

4. The method according to any one of claims 1-3, **characterized in that** after receiving configuration information of an SRS resource transmitted by the network device, the method further comprises:
    determining one or more of the N groups of SRS ports included in the M SRS ports, resource mapping corresponding to the M SRS ports, and SRS sequences corresponding to the M SRS ports based on one or more of a number M of the SRS ports, an SRS sequence generation parameter corresponding to the SRS resource and a transmission comb number.

5. The method according to claim 1 or 2, **characterized in that** before transmitting SRS to the network device, the method further comprises:
    receiving indication information transmitted by the network device, wherein the indication information comprises one or more of the following information:

    at least one of a group number N of the N groups of SRS ports included in the M SRS ports, a number N1 of time domain resource groups, and a number N2 of frequency domain resource groups;
    an SRS sequence generation parameter; and
    time domain resource mapping mode information of the SRS.

6. The method according to claim 4 or 5, **characterized in that** the SRS sequence generation parameter comprises:

    a maximum number of cyclic shifts; and/or,

cyclic shift configuration.

7. The method according to claim 5, **characterized in that** the indication information is included in the configuration information of the SRS resource; or
the indication information is independent of the configuration information of the SRS resource.

8. The method according to any one of claims 2-7, **characterized in that** the first resource mapping scheme comprises at least one of the following items:

SRS ports of a same group of SRS ports of the N groups of SRS ports are mapped to a same time domain resource;
the M SRS ports are mapped to a same frequency domain resource;
SRS ports of at least one group of SRS ports of the N groups of SRS ports are mapped to a plurality of time domain units in one time slot, wherein the plurality of time domain units are continuous or discontinuous in time;
SRS ports of at least one group of SRS ports of the N groups of SRS ports are mapped to a plurality of frequency domain units, wherein the plurality of frequency domain units are continuous or discontinuous in frequency;
a number of frequency domain units mapped by each SRS port of the M SRS ports is the same;
SRS ports mapped onto adjacent time domain symbols are different;
a number of time domain units mapped by each SRS port of the M SRS ports is the same;
serial numbers of the SRS ports of the same group of SRS ports of the N groups of SRS ports are adjacent to each other, or,,an interval between serial numbers of the SRS ports of the same group of SRS ports of the N groups of SRS ports is K, wherein K is a multiple of 2 or 4; and
the N groups of SRS ports are sequentially mapped to R orthogonal frequency division multiplexing (OFDM) symbols, and in response to existence of remaining OFDM symbols after mapping of the N groups of SRS ports, frequency hopping pattern used for the remaining OFDM symbols is the same as frequency hopping pattern used for a last group of SRS ports.

9. The method according to claim 8, **characterized in that** the number of time domain units mapped by each SRS port of the M SRS ports is the same comprises: the number of the time domain units mapped by each SRS port of the M SRS ports equals to $\frac{1}{N}$ of a number of time domain units configured by the network device for the SRS resource.

10. The method according to any one of claims 2-7, **characterized in that** the second resource mapping scheme comprises at least one of the following items:

different groups of SRS ports of the N groups of SRS ports are mapped to different time domain resource groups and different frequency domain resource groups;
N1 groups of SRS ports of the N groups of SRS ports are mapped to different time domain resource groups and a same frequency domain resource group;
N2 groups of SRS ports of the N groups of SRS ports are mapped to different frequency domain resource groups and a same time domain resource group;
SRS ports of a same group of SRS ports of the N groups of SRS ports are mapped to a same time-frequency resource;
a number of time domain units mapped by each SRS port of the M SRS ports is the same;
a number of frequency domain units mapped by each SRS port of the M SRS ports is the same; and
serial numbers of the SRS ports of the same group of SRS ports of the N groups of SRS ports are adjacent to each other, or, an interval between serial numbers of the SRS ports of the same group of SRS ports of the N groups of SRS ports is K, wherein K is a multiple of 2 or 4.

11. The method according to claim 10, **characterized in that** in a case that a number of time domain units mapped by each SRS port of the M SRS ports is the same, the number of the time domain units mapped by each SRS port equals to $\frac{1}{N1}$ of a number of time domain units configured by the network device for the SRS resource.

12. The method according to claim 10, **characterized in that** in a case that the number of frequency domain units mapped by each SRS port of the M SRS ports is the same, the number of the frequency domain units to which each SRS port is mapped equals to $\frac{1}{N2}$ of a number of frequency domain units configured by the network device for the SRS resource.

13. The method according to any one of claims 2-12, **characterized in that** the transmitting SRS to the network device based on the configuration information of the SRS resource comprises:

determining transmission power of the SRS based on the configuration information of the SRS resource or power control indication information transmitted by the network device; and

transmitting the SRS to the network device based on the transmission power of the SRS;

wherein in a case of performing resource mapping of the M SRS ports based on the first resource mapping scheme, determining transmission power of the SRS based on the configuration information of the SRS resource comprises at least one of the following items:

determining transmission power of the SRS ports of the M SRS ports based on at least one of the number M of the SRS ports and the group number N of the N groups of SRS ports;

determining transmission power of the SRS ports of the M SRS ports based on at least one of the number M of the SRS ports and a preset parameter, wherein the preset parameter is configured to determine the group number N of the N groups of SRS ports;

determining transmission power of the SRS ports of the M SRS ports based on a number of OFDM symbols of the SRS resource, wherein the number of the OFDM symbols indicates a number of groups into which the OFDM symbols of the SRS resource are divided, SRS ports corresponding to a same group of OFDM symbols are same, and SRS ports corresponding to different groups of OFDM symbols are different;

determining transmission power of SRS ports in the OFDM symbols based on a number of the SRS ports of the M SRS ports included in the OFDM symbols;

determining transmission power of each SRS port of the M SRS ports based on a number of the SRS ports of the M SRS ports included in each OFDM symbol;

determining transmission power of SRS ports of a first group of SRS ports based on a number of the SRS ports included in the first group of SRS ports, wherein the first group of SRS ports is one group of the N groups of SRS ports included in the M SRS ports;

determining transmission power of each SRS port of the M SRS ports based on a maximum value of a number of the SRS ports of the N groups of SRS ports;

determining transmission power of the SRS based on a frequency domain transmission comb number offset to which the SRS resource is mapped; and

determining transmission power of the SRS based on a frequency domain transmission comb number offset included in one OFDM symbol.

14. The method according to claim 13, **characterized in that** the determining transmission power of the SRS ports of the M SRS ports based on at least one of the number M of the SRS ports and the group number N of the N groups of SRS ports comprises at least one of the following items:

determining the transmission power of each SRS port of the M SRS ports based on $\dfrac{N}{M}$ ; and

determining that the transmission power of each SRS port of the M SRS ports equals to $\dfrac{N}{M}$ of transmission power computed based on an SRS power control process.

15. The method according to claim 13, **characterized in that** the preset parameter comprises any one or more of the following parameters:

a number $N_{ap}^{s}$ of the SRS ports included in the OFDM symbols, or a positive integer $N_{ap}^{s}$ of a first agreement;

a number $N_s$ of OFDM symbols occupied by the SRS resource in one time slot;

a repetition factor R1 of the SRS resource;

a number $N_s^{ap}$ of OFDM symbols to which the SRS ports are mapped in one time slot, or a positive integer $N_s^{ap}$ of a second agreement;

a number $N_{hop}$ of times of frequency hopping of the SRS ports in one time slot; and

a positive integer of a third agreement; and

the determining transmission power of the SRS ports of the M SRS ports based on at least one of the number M of the SRS ports and the preset parameter comprises:

determining, in response to determining that the preset parameters comprise $N_s$, R1 and $N_{hop}$, the transmission power of the SRS ports of the M SRS ports according to $\dfrac{N_s}{M*R1*N_{hop}}$;

determining, in response to determining that the preset parameters comprise $N_s$ and $N_s^{ap}$, the transmission power of the SRS ports of the M SRS ports according to $\dfrac{N_s}{M*N_s^{ap}}$;

determining, in response to determining that the preset parameters comprise $N_s$ and R1, the transmission power of the SRS ports of the M SRS ports according to $\dfrac{N_s}{M*R}$; and

determining, in response to determining that the preset parameter comprises the positive integer of the third agreement, the transmission power of the SRS ports of the M SRS ports according to M and the positive integer of the third agreement.

16. The method according to claim 15, **characterized in that** a number of OFDM symbols to which each SRS port corresponding to the SRS resource is mapped in one time slot is same; or
a number of OFDM symbols to which one SRS port corresponding to the SRS resource is mapped in one time slot is a minimum value or a maximum value of a number of OFDM symbols to which each SRS port corresponding to the SRS resource is mapped in one time slot.

17. The method according to claim 13, **characterized in that** the determining transmission power of SRS ports in the OFDM symbols based on a number of the SRS ports of the M SRS ports included in the OFDM symbols comprises:

determining first power corresponding to the SRS resource based on a power control parameter configured for an SRS resource set where the SRS resource is located and/or the SRS resource; and
determining the transmission power of the SRS ports in the OFDM symbols according to a ratio of the first power to the number of the SRS ports of the M SRS ports included in the OFDM symbols.

18. The method according to claim 13, **characterized in that** the determining transmission power of each SRS port of the M SRS ports based on the number of the SRS ports of the M SRS ports included in each OFDM symbol comprises:

determining first power corresponding to the SRS resource based on a power control parameter configured for an SRS resource set where the SRS resource is located and/or the SRS resource;
determining a maximum value of the number of the SRS ports of the M SRS ports included in each OFDM symbol; and
determining the transmission power of each SRS port of the M SRS ports according to a ratio of the first power to the maximum value.

19. The method according to claim 13, **characterized in that** the SRS power control indication information is configured to indicate a power control scaling factor of transmission of the SRS resource.

20. The method according to any one of claims 2-12, **characterized in that** the transmitting SRS to the network device based on the configuration information of the SRS resource comprises:

determining transmission power of the SRS based on the configuration information of the SRS resource; and
transmitting the SRS to the network device based on the transmission power,
wherein in a case of performing resource mapping of the M SRS ports based on the second resource mapping scheme, the determining transmission power of the SRS based on the configuration information of the SRS resource comprises at least one of the following items:

determining transmission power of the SRS ports of the M SRS ports based on at least one of the number M of the SRS ports, the group number N of the N groups of SRS ports, and a number N1 of the time domain resource groups;
determining transmission power of SRS ports transmitted on a first time domain resource group based on a number of the SRS ports transmitted on the first time domain resource group, wherein the first time domain resource group is any one of the N1 time domain resource groups;
determining transmission power of each SRS port of the M SRS ports based on a maximum value of a number of the SRS ports included in each time domain resource group of the N1 time domain resource groups;
determining transmission power of SRS ports of a first group of SRS ports based on a number of the SRS ports included in the first group of SRS ports, wherein the first group of SRS ports is any one of the N groups of SRS ports;
determining transmission power of each SRS port of the M SRS ports based on a maximum value of a number of the SRS ports of the N groups of SRS ports.

21. The method according to claim 20, **characterized in that** the determining transmission power of the SRS ports of the M SRS ports based on at least one of the number M of the SRS ports, the group number N of the N groups of SRS ports, and a number N1 of the time domain resource groups comprises at least one of the following items:

determining the transmission power of each SRS port of the M SRS ports based on $\frac{N1}{M}$;

determining that the transmission power of each SRS port of the M SRS ports equals to $\frac{N1}{M}$ of transmission power computed based on an SRS power control process;

determining the transmission power of each SRS port of the M SRS ports based on $\frac{N}{M}$; and

determining that the transmission power of each SRS port of the M SRS ports equals to $\frac{N}{M}$ of transmission power computed based on an SRS power control process.

22. The method according to any one of claims 2-21, **characterized in that** a value of N is 1, 2, 4, 6, or 8.

23. The method according to any one of claims 2-22, **characterized in that** a value of N1 is 1, 2, 4, 6, or 8; and/or a value of N2 is 1, 2, 4, 6, or 8.

24. The method according to any one of claims 2-23, **characterized in that** cyclic shifts corresponding to the sequences of the M SRS ports satisfy at least one of the following items:

different SRS ports of the same group of SRS ports of the N groups of SRS ports correspond to different cyclic shifts; and
different groups of SRS ports of the N groups of SRS ports correspond to a same cyclic shift.

25. A method for transmitting a reference signal, **characterized in that**, comprising:

transmitting configuration information of a sounding reference signaling (SRS) resource to a terminal; and
receiving SRS transmitted by the terminal based on the configuration information of the SRS resource, wherein the SRS resource corresponds to M SRS ports, the M SRS ports comprise a first SRS port and a second SRS port, and the first SRS port and the second SRS port are mapped to different time domain resources.

26. The method according to claim 25, **characterized in that** the M SRS ports comprise N groups of SRS ports, N is an integer greater than 1, and the first SRS port and the second SRS port belong to different groups of SRS ports.

27. The method according to claims 26, **characterized in that** the M SRS ports are mapped to a time-frequency resource according to one of a first resource mapping scheme and a second resource mapping scheme;

in the first resource mapping scheme, different groups of SRS ports of the N groups of SRS ports are mapped to different time domain resources; and
in the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, at least two groups of SRS ports of the N groups of SRS ports are mapped to different frequency domain resource groups, and both N1 and N2 are integers greater than or equal to 1.

28. The method according to claim 27, **characterized in that**, the method further comprises:

determining a resource mapping scheme of the SRS and/or a sequence corresponding to the SRS based on at least one of a number M of the SRS ports, a group number N of the N groups of SRS ports included in the M SRS ports, a number N1 of the time domain resource groups, a number N2 of the frequency domain resource groups, a transmission comb number, and an SRS sequence generation parameter.

29. The method according to claim 26, **characterized in that** the method further comprises:
transmitting indication information to the terminal, wherein the indication information comprises one or more of the following information:

at least one of a group number N of the N groups of SRS ports included in the M SRS ports, a number N1 of time domain resource groups, and a number N2 of frequency domain resource groups;
an SRS sequence generation parameter; and
time domain resource mapping mode information of the SRS.

30. The method according to claim 28 or 29, **characterized in that** the SRS sequence generation parameter comprises:

a maximum number of cyclic shifts; and/or,
cyclic shift configuration.

31. The method according to claim 29, **characterized in that** the indication information is included in the configuration information of the SRS resource; or, the indication information is independent of the configuration information of the SRS resource.

32. The method according to any one of claims 26-31, **characterized in that** the first resource mapping scheme comprises at least one of the following items:

SRS ports of a same group of SRS ports of the N groups of SRS ports are mapped to a same time domain resource;
the M SRS ports are mapped to a same frequency domain resource;
SRS ports of at least one group of SRS ports of the N groups of SRS ports are mapped to a plurality of time domain units in one time slot, wherein the plurality of time domain units are continuous or discontinuous in time;
SRS ports of at least one group of SRS ports of the N groups of SRS ports are mapped to a plurality of frequency domain units, wherein the plurality of frequency domain units are continuous or discontinuous in frequency;
a number of frequency domain units mapped by each SRS port of the M SRS ports is the same;
SRS ports mapped onto adjacent time domain symbols are different;
a number of time domain units mapped by each SRS port of the M SRS ports is the same;
serial numbers of the SRS ports of the same group of SRS ports of the N groups of SRS ports are adjacent to each other, or, an interval between serial numbers of the SRS ports of the same group of SRS ports of the N groups of SRS ports is K, wherein K is a multiple of 2 or 4; and
the N groups of SRS ports are sequentially mapped to R OFDM symbols, and in response to existence of remaining OFDM symbols after mapping of the N groups of SRS ports, frequency hopping pattern used for the remaining OFDM symbols is the same as frequency hopping pattern used for a last group of SRS ports.

33. The method according to claim 32, **characterized in that** the number of time domain units mapped by each SRS port of the M SRS ports is the same comprises: the number of the time domain units mapped by each SRS port of the M SRS ports equals to $\frac{1}{N}$ of a number of time domain units configured by the network device for the SRS resource.

34. The method according to any one of claims 26-31, **characterized in that** the second resource mapping scheme comprises at least one of the following items:

different groups of SRS ports of the N groups of SRS ports are mapped to different time domain resource groups and different frequency domain resource groups;
N1 groups of SRS ports of the N groups of SRS ports are mapped to different time domain resource groups and a same frequency domain resource group;
N2 groups of SRS ports of the N groups of SRS ports are mapped to different frequency domain resource groups and a same time domain resource group;
SRS ports of a same group of SRS ports of the N groups of SRS ports are mapped to a same time-frequency resource;

a number of time domain units mapped by each SRS port of the M SRS ports is the same;

a number of frequency domain units mapped by each SRS port of the M SRS ports is the same; and

serial numbers of the SRS ports of the same group of SRS ports of the N groups of SRS ports are adjacent to each other, or, an interval between serial numbers of the SRS ports of the same group of SRS ports of the N groups of SRS ports is K, wherein K is a multiple of 2 or 4.

35. The method according to claim 34, **characterized in that** in a case that the number of time domain units mapped by each SRS port of the M SRS ports is the same, the number of the time domain units to which each SRS port is mapped equals to $\frac{1}{N1}$ of a number of time domain units configured by the network device for the SRS resource.

36. The method according to claim 34, **characterized in that** in a case that the number of frequency domain units mapped by each SRS port of the M SRS ports is the same, the number of the frequency domain units to which each SRS port is mapped equals to $\frac{1}{N2}$ of a number of frequency domain units configured by the network device for the SRS resource.

37. The method according to any one of claims 26-36, **characterized in that** in a case of performing resource mapping of the M SRS ports based on the first resource mapping scheme, transmission power of the SRS is determined through at least one of the following items:

determining transmission power of the SRS ports of the M SRS ports based on at least one of the number M of the SRS ports and the group number N of the N groups of SRS ports;

determining transmission power of the SRS ports of the M SRS ports based on at least one of the number M of the SRS ports and a preset parameter, wherein the preset parameter is configured to determine the group number N of the N groups of SRS ports;

determining transmission power of the SRS ports of the M SRS ports based on a number of OFDM symbols of the SRS resource, wherein the number of the OFDM symbols indicates a number of groups into which the OFDM symbols of the SRS resource are divided, SRS ports corresponding to a same group of OFDM symbols are same, and SRS ports corresponding to different groups of OFDM symbols are different;

determining transmission power of SRS ports in the OFDM symbols based on a number of the SRS ports of the M SRS ports included in the OFDM symbols;

determining transmission power of each SRS port of the M SRS ports based on a number of the SRS ports of the M SRS ports included in each OFDM symbol;

determining transmission power of SRS ports of a first group of SRS ports based on a number of the SRS ports included in the first group of SRS ports, wherein the first group of SRS ports is one group of SRS ports of the N groups of SRS ports included in the M SRS ports;

determining transmission power of each SRS port of the M SRS ports based on a maximum value of a number of the SRS ports of the N groups of SRS ports;

determining transmission power of the SRS based on a frequency domain transmission comb number offset to which the SRS resource is mapped; and

determining transmission power of the SRS based on a frequency domain transmission comb number offset included in one OFDM symbol.

38. The method according to claim 37, **characterized in that** the determining transmission power of the SRS ports of the M SRS ports based on at least one of the number M of the SRS ports and the group number N of the N groups of SRS ports comprises at least one of the following items:

determining the transmission power of each SRS port of the M SRS ports based on $\frac{N}{M}$ ; and

determining that the transmission power of each SRS port of the M SRS ports equals to $\frac{N}{M}$ of transmission power computed based on an SRS power control process.

39. The method according to claim 37, **characterized in that** the preset parameter comprises any one or more of the following parameters:

a number $N_{ap}^s$ of the SRS ports included in the OFDM symbols, or a positive integer $N_{ap}^s$ of a first agreement;
a number $N_s$ of OFDM symbols occupied by the SRS resource in one time slot;
a repetition factor R1 of the SRS resource;

a number $N_s^{ap}$ of OFDM symbols to which the SRS ports are mapped in one time slot, or a positive integer $N_s^{ap}$ of a second agreement;
a number $N_{hop}$ of times of frequency hopping of the SRS ports in one time slot; and
a positive integer of a third agreement; and
the determining transmission power of the SRS ports of the M SRS ports based on at least one of the number M of the SRS ports and the preset parameter comprises:

determining, in response to determining that the preset parameters comprise $N_s$, R1 and $N_{hop}$, the transmission power of the SRS ports of the M SRS ports according to $\dfrac{N_s}{M*R1*N_{hop}}$;

determining, in response to determining that the preset parameters comprise $N_s$ and $N_s^{ap}$, the transmission power of the SRS ports of the M SRS ports according to $\dfrac{N_s}{M*N_s^{ap}}$;

determining, in response to determining that the preset parameters comprise $N_s$ and R1, the transmission power of the SRS ports of the M SRS ports according to $\dfrac{N_s}{M*R}$; and

determining, in response to determining that the preset parameter comprises the positive integer of the third agreement, the transmission power of the SRS ports of the M SRS ports according to M and the positive integer of the third agreement.

40. The method according to claim 39, **characterized in that** a number of OFDM symbols to which each SRS port corresponding to the SRS resource is mapped in one time slot is same; or,
a number of OFDM symbols to which one SRS port corresponding to the SRS resource is mapped in one time slot is a minimum value or a maximum value of a number of OFDM symbols to which each SRS port corresponding to the SRS resource is mapped in one time slot.

41. The method according to claim 37, **characterized in that** the determining transmission power of SRS ports in the OFDM symbols based on a number of the SRS ports of the M SRS ports included in the OFDM symbols comprises:

determining first power corresponding to the SRS resource based on a power control parameter configured for an SRS resource set where the SRS resource is located and/or the SRS resource; and
determining the transmission power of the SRS ports in the OFDM symbols according to a ratio of the first power to the number of the SRS ports of the M SRS ports included in the OFDM symbols.

42. The method according to claim 37, **characterized in that** the determining transmission power of each SRS port of the M SRS ports based on a number of the SRS ports of the M SRS ports included in each OFDM symbol comprises:

determining first power corresponding to the SRS resource based on a power control parameter configured for an SRS resource set where the SRS resource is located and/or the SRS resource;
determining a maximum value of the number of the SRS ports of the M SRS ports included in each OFDM symbol; and
determining the transmission power of each SRS port of the M SRS ports according to a ratio of the first power to the maximum value.

43. The method according to claim 37, **characterized in that** the SRS power control indication information is configured to indicate a power control scaling factor of transmission of the SRS resource.

44. The method according to any one of claims 26-43, **characterized in that** in a case of performing resource mapping of the M SRS ports based on the second resource mapping scheme, transmission power of the SRS is determined through at least one of the following items:

determining transmission power of the SRS ports of the M SRS ports based on at least one of the number M of the SRS ports, the group number N of the N groups of SRS ports, and a number N1 of the time domain resource groups;

determining transmission power of SRS ports transmitted on a first time domain resource group based on a number of the SRS ports transmitted on the first time domain resource group, wherein the first time domain resource group is any one of the N1 time domain resource groups;

determining transmission power of each SRS port of the M SRS ports based on a maximum value of a number of the SRS ports included in each time domain resource group of the N1 time domain resource groups;

determining transmission power of SRS ports of a first group of SRS ports based on a number of the SRS ports included in the first group of SRS ports, wherein the first group of SRS ports is any one of the N groups of SRS ports; and

determining transmission power of each SRS port of the M SRS ports based on a maximum value of a number of the SRS ports of the N groups of SRS ports.

45. The method according to claim 44, **characterized in that** the determining transmission power of the SRS ports of the M SRS ports based on at least one of the number M of the SRS ports, the group number N of the N groups of SRS ports, and a number N1 of the time domain resource groups comprises at least one of the following items:

determining the transmission power of each SRS port of the M SRS ports based on $\dfrac{N1}{M}$;

determining that the transmission power of each SRS port of the M SRS ports equals to $\dfrac{N1}{M}$ of transmission power computed based on an SRS power control process;

determining the transmission power of each SRS port of the M SRS ports based on $\dfrac{N}{M}$; and

determining that the transmission power of each SRS port of the M SRS ports equals to $\dfrac{N}{M}$ of transmission power computed based on an SRS power control process.

46. The method according to any one of claims 26-45, **characterized in that** a value of N is 1, 2, 4, 6, or 8.

47. The method according to any one of claims 26-46, **characterized in that** a value of N1 is 1, 2, 4, 6, or 8; and/or a value of N2 is 1, 2, 4, 6, or 8.

48. The method according to any one of claims 26-47, **characterized in that** cyclic shifts corresponding to sequences of the M SRS ports satisfy at least one of the following items conditions:

different SRS ports of the same group of SRS ports of the N groups of SRS ports correspond to different cyclic shifts; and

different groups of SRS ports of the N groups of SRS ports correspond to a same cyclic shift.

49. A terminal, **characterized in that**, comprising: a processing unit, a receiving unit, and a transmitting unit, wherein

the receiving unit is configured to receive configuration information of a sounding reference signaling (SRS) resource transmitted by a network device; and

the transmitting unit is configured to transmit SRS to the network device based on the configuration information of the SRS resource, wherein the SRS resource corresponds to M SRS ports, the M SRS ports comprise a first SRS port and a second SRS port, and the first SRS port and the second SRS port are mapped to different time domain resources.

50. The terminal according to claim 49, **characterized in that** the M SRS ports comprise N groups of SRS ports, N is an integer greater than 1, and the first SRS port and the second SRS port belong to different groups of SRS ports.

51. The terminal according to claim 49, **characterized in that** the transmitting unit is configured to:

determine a resource mapping scheme of the SRS and/or a cyclic shift corresponding to the SRS based on the configuration information of the SRS resource; and

perform resource mapping of the M SRS ports according to the resource mapping scheme of the SRS, wherein the resource mapping scheme comprises one of a first resource mapping scheme and a second resource mapping scheme;

in the first resource mapping scheme, different groups of SRS ports of the N groups of SRS ports are mapped to different time domain resources; and

in the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, at least two groups of SRS ports of the N groups of SRS ports are mapped to different frequency domain resource groups, and both N1 and N2 are integers greater than or equal to 1.

52. The terminal according to any one of claims 49-51, **characterized in that** after the receiving unit receives the configuration information of the SRS resource transmitted by the network device, the processing unit is configured to: determine one or more of the N groups of SRS ports included in the M SRS ports, resource mapping corresponding to the M SRS ports, and SRS sequences corresponding to the M SRS ports based on one or more of a number M of the SRS ports, an SRS sequence generation parameter corresponding to the SRS resource and a transmission comb number.

53. The terminal according to claim 50 or 51, **characterized in that** before the SRS is transmitted to the network device by the transmitting unit, the receiving unit is further configured to: receive indication information transmitted by the network device, wherein the indication information comprises one or more of the following information:

at least one of a group number N of the N groups of SRS ports included in the M SRS ports, a number N1 of time domain resource groups, and a number N2 of frequency domain resource groups;
an SRS sequence generation parameter; and
time domain resource mapping mode information of the SRS.

54. The terminal according to claim 52 or 53, **characterized in that** the SRS sequence generation parameter comprises:

a maximum number of cyclic shifts; and/or,
cyclic shift configuration.

55. The terminal according to claim 53, **characterized in that** the indication information is included in the configuration information of the SRS resource; or, the indication information is independent of the configuration information of the SRS resource.

56. The terminal according to any one of claims 50-55, **characterized in that** the first resource mapping scheme comprises at least one of the following items:

SRS ports of a same group of SRS ports of the N groups of SRS ports are mapped to a same time domain resource;
the M SRS ports are mapped to a same frequency domain resource;
SRS ports of at least one group of SRS ports of the N groups of SRS ports are mapped to a plurality of time domain units in one time slot, wherein the plurality of time domain units are continuous or discontinuous in time;
SRS ports of at least one group of SRS ports of the N groups of SRS ports are mapped to a plurality of frequency domain units, wherein the plurality of frequency domain units are continuous or discontinuous in frequency;
a number of frequency domain units mapped by each SRS port of the M SRS ports is the same;
SRS ports mapped onto adjacent time domain symbols are different;
a number of time domain units mapped by each SRS port of the M SRS ports is the same;
serial numbers of the SRS ports of the same group of SRS ports of the N groups of SRS ports are adjacent to each other, or, an interval between serial numbers of the SRS ports of the same group of SRS ports of the N groups of SRS ports is K, wherein K is a multiple of 2 or 4; and
the N groups of SRS ports are sequentially mapped to R OFDM symbols, and in response to existence of remaining OFDM symbols after mapping of the N groups of SRS ports, frequency hopping pattern used for the remaining OFDM symbols is the same as frequency hopping pattern used for a last group of SRS ports.

**57.** The terminal according to claim 56, **characterized in that** the number of time domain units mapped by each SRS port of the M SRS ports is the same comprises: the number of the time domain units mapped by each SRS port of the M SRS ports equals to $\frac{1}{N}$ of a number of time domain units configured by the network device for the SRS resource.

**58.** The terminal according to any one of claims 50-55, **characterized in that** the second resource mapping scheme comprises at least one of the following items:

different groups of SRS ports of the N groups of SRS ports are mapped to different time domain resource groups and different frequency domain resource groups;

N1 groups of SRS ports of the N groups of SRS ports are mapped to different time domain resource groups and a same frequency domain resource group;

N2 groups of SRS ports of the N groups of SRS ports are mapped to different frequency domain resource groups and a same time domain resource group;

SRS ports of a same group of SRS ports of the N groups of SRS ports are mapped to a same time-frequency resource;

a number of time domain units mapped by each SRS port of the M SRS ports is the same;

a number of frequency domain units mapped by each SRS port of the M SRS ports is the same; and

serial numbers of the SRS ports of the same group of SRS ports of the N groups of SRS ports are adjacent to each other, or, an interval between serial numbers of the SRS ports of the same group of SRS ports of the N groups of SRS ports is K, wherein K is a multiple of 2 or 4.

**59.** The terminal according to claim 58, **characterized in that** in a case that the number of time domain units mapped by each SRS port of the M SRS ports is the same, the number of the time domain units to which each SRS port is mapped equals to $\frac{1}{N1}$ of a number of time domain units configured by the network device for the SRS resource.

**60.** The terminal according to claim 58, **characterized in that** in a case that the number of frequency domain units mapped by each SRS port of the M SRS ports is the same, the number of the frequency domain units to which each SRS port is mapped equals to $\frac{1}{N2}$ of a number of frequency domain units configured by the network device for the SRS resource.

**61.** The terminal according to any one of claims 50-60, **characterized in that** the transmitting unit is configured to:

determine transmission power of the SRS based on the configuration information of the SRS resource or power control indication information transmitted by the network device; and

transmit the SRS to the network device based on the transmission power of the SRS, wherein

in a case of performing resource mapping of the M SRS ports based on the first resource mapping scheme, the transmission power of the SRS is determined based on the configuration information of the SRS resource through at least one of the following items:

determining transmission power of the SRS ports of the M SRS ports based on at least one of the number M of the SRS ports and the group number N of the N groups of SRS ports;

determining transmission power of the SRS ports of the M SRS ports based on at least one of the number M of the SRS ports and a preset parameter, wherein the preset parameter is configured to determine the group number N of the N groups of SRS ports;

determining transmission power of the SRS ports of the M SRS ports based on a number of OFDM symbols of the SRS resource, wherein the number of the OFDM symbols indicates a number of groups into which the OFDM symbols of the SRS resource are divided, SRS ports corresponding to a same group of OFDM symbols are same, and SRS ports corresponding to different groups of OFDM symbols are different;

determining transmission power of SRS ports in the OFDM symbols based on a number of the SRS ports of the M SRS ports included in the OFDM symbols;

determining transmission power of each SRS port of the M SRS ports based on a number of the SRS ports of the M SRS ports included in each OFDM symbol;

determining transmission power of SRS ports of a first group of SRS ports based on a number of the SRS ports included in the first group of SRS ports, wherein the first group of SRS ports is one group of the N groups of SRS ports included in the M SRS ports;
determining transmission power of each SRS port of the M SRS ports based on a maximum value of a number of the SRS ports of the N groups of SRS ports;
determining transmission power of the SRS based on a frequency domain transmission comb number offset to which the SRS resource is mapped; and
determining transmission power of the SRS based on a frequency domain transmission comb number offset included in one OFDM symbol.

62. The terminal according to claim 61, **characterized in that** the determining transmission power of the SRS ports of the M SRS ports based on at least one of the number M of the SRS ports and the group number N of the N groups of SRS ports comprises at least one of the following items:

determining the transmission power of each SRS port of the M SRS ports based on $\frac{N}{M}$; and

determining that the transmission power of each SRS port of the M SRS ports equals to $\frac{N}{M}$ of transmission power computed based on an SRS power control process.

63. The terminal according to claim 61, **characterized in that** the preset parameter comprises any one or more of the following parameters:

a number $N_{ap}^{s}$ of the SRS ports included in the OFDM symbols, or a positive integer $N_{ap}^{s}$ of a first agreement;
a number $N_s$ of OFDM symbols occupied by the SRS resource in one time slot;
a repetition factor R1 of the SRS resource;
a number $N_s^{ap}$ of OFDM symbols to which the SRS ports are mapped in one time slot, or a positive integer $N_s^{ap}$ of a second agreement;
a number $N_{hop}$ of times of frequency hopping of the SRS ports in one time slot; and
a positive integer of a third agreement; and
the determining transmission power of the SRS ports of the M SRS ports based on at least one of the number M of the SRS ports and the preset parameter comprises:

determining, in response to determining that the preset parameters comprise $N_s$, R1 and $N_{hop}$, the transmission power of the SRS ports of the M SRS ports according to $\frac{N_s}{M*R1*N_{hop}}$;

determining, in response to determining that the preset parameters comprise $N_s$ and $N_s^{ap}$, the transmission power of the SRS ports of the M SRS ports according to $\frac{N_s}{M*N_s^{ap}}$;

determining, in response to determining that the preset parameters comprise $N_s$ and R1, the transmission power of the SRS ports of the M SRS ports according to $\frac{N_s}{M*R}$; and

determining, in response to determining that the preset parameter comprises the positive integer of the third agreement, the transmission power of the SRS ports of the M SRS ports according to M and the positive integer of the third agreement.

64. The terminal according to claim 63, **characterized in that** a number of OFDM symbols to which each SRS port corresponding to the SRS resource is mapped in one time slot is same; or,
a number of OFDM symbols to which one SRS port corresponding to the SRS resource is mapped in one time slot is a minimum value or a maximum value of a number of OFDM symbols to which each SRS port corresponding to the SRS resource is mapped in one time slot.

65. The terminal according to claim 61, **characterized in that** the transmitting unit determines the transmission power of the SRS ports in the OFDM symbols based on the number of the SRS ports of the M SRS ports included in the OFDM symbols, and is specifically configured to:

determine first power corresponding to the SRS resource based on a power control parameter configured for an SRS resource set where the SRS resource is located and/or the SRS resource; and
determine the transmission power of the SRS ports in the OFDM symbols according to a ratio of the first power to the number of the SRS ports of the M SRS ports included in the OFDM symbols.

66. The terminal according to claim 61, **characterized in that** the transmitting unit determines the transmission power of each SRS port of the M SRS ports based on the number of the SRS ports of the M SRS ports included in each OFDM symbol, and is specifically configured to:

determine first power corresponding to the SRS resource based on a power control parameter configured for an SRS resource set where the SRS resource is located and/or the SRS resource;
determine a maximum value of the number of the SRS ports of the M SRS ports included in each OFDM symbol; and
determine the transmission power of each SRS port of the M SRS ports according to a ratio of the first power to the maximum value.

67. The terminal according to claim 61, **characterized in that** the SRS power control indication information is configured to indicate a power control scaling factor of transmission of the SRS resource.

68. The terminal according to any one of claims 50-60, **characterized in that** the transmitting unit is specifically configured to:

determine transmission power of the SRS based on the configuration information of the SRS resource; and
transmit the SRS to the network device based on the transmission power, wherein
in a case of performing resource mapping of the M SRS ports based on the second resource mapping scheme, the transmission power of the SRS is determined based on the configuration information of the SRS resource through at least one of the following items:

determining transmission power of the SRS ports of the M SRS ports based on at least one of the number M of the SRS ports, the group number N of the N groups of SRS ports, and a number N1 of the time domain resource groups;
determining transmission power of SRS ports transmitted on a first time domain resource group based on a number of the SRS ports transmitted on the first time domain resource group, where the first time domain resource group is any one of the N1 time domain resource groups;
determining transmission power of each SRS port of the M SRS ports based on a maximum value of a number of the SRS ports included in each time domain resource group of the N1 time domain resource groups;
determining transmission power of SRS ports of a first group of SRS ports based on a number of the SRS ports included in the first group of SRS ports, wherein the first group of SRS ports is any one of the N groups of SRS ports; and
determining transmission power of each SRS port of the M SRS ports based on a maximum value of a number of the SRS ports of the N groups of SRS ports.

69. The terminal according to claim 68, **characterized in that** the determining transmission power of the SRS ports of the M SRS ports based on at least one of the number M of the SRS ports, the group number N of the N groups of SRS ports, and a number N1 of the time domain resource groups comprises at least one of the following items:

determining the transmission power of each SRS port of the M SRS ports based on $\frac{N1}{M}$;

determining that the transmission power of each SRS port of the M SRS ports equals to $\frac{N1}{M}$ of transmission power computed based on an SRS power control process;

determining the transmission power of each SRS port of the M SRS ports based on $\frac{N}{M}$; and

determining that the transmission power of each SRS port of the M SRS ports equals to $\frac{N}{M}$ of transmission power computed based on an SRS power control process.

70. The terminal according to any one of claims 50-69, **characterized in that** a value of N is 1, 2, 4, 6, or 8.

71. The terminal according to any one of claims 50-70, **characterized in that** a value of N1 is 1, 2, 4, 6, or 8; and/or a value of N2 is 1, 2, 4, 6, or 8.

72. The terminal according to any one of claims 50-71, **characterized in that** cyclic shifts corresponding to the sequences of the M SRS ports satisfy at least one of the following items conditions:

    different SRS ports of the same group of SRS ports of the N groups of SRS ports correspond to different cyclic shifts; and
    different groups of SRS ports of the N groups of SRS ports correspond to a same cyclic shift.

73. A network device, **characterized in that**, comprising: a processing unit, a receiving unit, and a transmitting unit, wherein

    the transmitting unit is configured to transmit configuration information of a sounding reference signaling (SRS) resource to a terminal; and
    the receiving unit is configured to receive SRS transmitted by the terminal based on the configuration information of the SRS resource, wherein the SRS resource corresponds to M SRS ports, the M SRS ports comprise a first SRS port and a second SRS port, and the first SRS port and the second SRS port are mapped to different time domain resources.

74. The network device according to claim 73, **characterized in that** the M SRS ports comprise N groups of SRS ports, N is an integer greater than 1, and the first SRS port and the second SRS port belong to different groups of SRS ports.

75. The network device according to claim 74, **characterized in that** the M SRS ports are mapped to a time-frequency resource according to one of a first resource mapping scheme and a second resource mapping scheme;

    in the first resource mapping scheme, different groups of SRS ports of the N groups of SRS ports are mapped to different time domain resources; and
    in the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, at least two groups of SRS ports of the N groups of SRS ports are mapped to different frequency domain resource groups, and both N1 and N2 are integers greater than or equal to 1.

76. The network device according to claim 75, **characterized in that** the processing unit is configured to:
    determine a resource mapping scheme of the SRS and/or a sequence corresponding to the SRS based on at least one of a number M of the SRS ports, a group number N of the N groups of SRS ports included in the M SRS ports, a number N1 of the time domain resource groups, a number N2 of the frequency domain resource groups, a transmission comb number, and an SRS sequence generation parameter.

77. The network device according to claim 74, **characterized in that** the processing unit is configured to:
    transmit indication information to the terminal, wherein the indication information comprises one or more of the following information:

    at least one of a group number N of the N groups of SRS ports included in the M SRS ports, a number N1 of time domain resource groups, and a number N2 of frequency domain resource groups;
    an SRS sequence generation parameter; and
    time domain resource mapping mode information of the SRS.

78. The network device according to claim 76 or 77, **characterized in that** the SRS sequence generation parameter comprises:

    a maximum number of cyclic shifts; and/or,
    cyclic shift configuration.

**79.** The network device according to claim 77, **characterized in that** the indication information is included in the configuration information of the SRS resource; or, the indication information is independent of the configuration information of the SRS resource.

**80.** The network device according to any one of claims 75-79, **characterized in that** the first resource mapping scheme comprises at least one of the following items:

> SRS ports of a same group of SRS ports of the N groups of SRS ports are mapped to a same time domain resource;
> the M SRS ports are mapped to a same frequency domain resource;
> SRS ports of at least one group of SRS ports of the N groups of SRS ports are mapped to a plurality of time domain units in one time slot, wherein the plurality of time domain units are continuous or discontinuous in time;
> SRS ports of at least one group of SRS ports of the N groups of SRS ports are mapped to a plurality of frequency domain units, wherein the plurality of frequency domain units are continuous or discontinuous in frequency;
> a number of frequency domain units mapped by each SRS port of the M SRS ports is the same;
> SRS ports mapped onto adjacent time domain symbols are different;
> a number of time domain units mapped by each SRS port of the M SRS ports is the same;
> serial numbers of the SRS ports of the same group of SRS ports of the N groups of SRS ports are adjacent to each other, or, an interval between serial numbers of the SRS ports of the same group of SRS ports of the N groups of SRS ports is K, wherein K is a multiple of 2 or 4; and
> the N groups of SRS ports are sequentially mapped to R OFDM symbols, and in response to existence of remaining OFDM symbols after mapping of the N groups of SRS ports, frequency hopping pattern used for the remaining OFDM symbols is the same as frequency hopping pattern used for a last group of SRS ports.

**81.** The network device according to claim 80, **characterized in that** the number of time domain units mapped by each SRS port of the M SRS ports is the same comprises: the number of the time domain units mapped by each SRS port of the M SRS ports equals to $\frac{1}{N}$ of a number of time domain units configured by the network device for the SRS resource.

**82.** The network device according to any one of claims 74-79, **characterized in that** the second resource mapping scheme comprises at least one of the following items:

> different groups of SRS ports of the N groups of SRS ports are mapped to different time domain resource groups and different frequency domain resource groups;
> N1 groups of SRS ports of the N groups of SRS ports are mapped to different time domain resource groups and a same frequency domain resource group;
> N2 groups of SRS ports of the N groups of SRS ports are mapped to different frequency domain resource groups and a same time domain resource group;
> SRS ports of a same group of SRS ports of the N groups of SRS ports are mapped to a same time-frequency resource;
> a number of time domain units mapped by each SRS port of the M SRS ports is the same;
> a number of frequency domain units mapped by each SRS port of the M SRS ports is the same; and
> serial numbers of the SRS ports of the same group of SRS ports of the N groups of SRS ports are adjacent to each other, or, an interval between serial numbers of the SRS ports of the same group of SRS ports of the N groups of SRS ports is K, wherein K is a multiple of 2 or 4.

**83.** The network device according to claim 82, **characterized in that** in a case that the number of time domain units mapped by each SRS port of the M SRS ports is the same, the number of the time domain units to which each SRS port is mapped equals to $\frac{1}{N1}$ of a number of time domain units configured by the network device for the SRS resource.

**84.** The network device according to claim 82, **characterized in that** in a case that the number of frequency domain units mapped by each SRS port of the M SRS ports is the same, the number of the frequency domain units to which each SRS port is mapped equals to $\frac{1}{N2}$ of a number of frequency domain units configured by the network device for the SRS resource.

**85.** The network device according to any one of claims 74-84, **characterized in that** in a case of performing resource mapping of the M SRS ports based on the first resource mapping scheme, transmission power of the SRS is determined through at least one of the following items:

determining transmission power of the SRS ports of the M SRS ports based on at least one of the number M of the SRS ports and the group number N of the N groups of SRS ports;

determining transmission power of the SRS ports of the M SRS ports based on at least one of the number M of the SRS ports and a preset parameter, wherein the preset parameter is configured to determine the group number N of the N groups of SRS ports;

determining transmission power of the SRS ports of the M SRS ports based on a number of OFDM symbols of the SRS resource, wherein the number of the OFDM symbols indicates a number of groups into which the OFDM symbols of the SRS resource are divided, SRS ports corresponding to a same group of OFDM symbols are same, and SRS ports corresponding to different groups of OFDM symbols are different;

determining transmission power of SRS ports in the OFDM symbols based on a number of the SRS ports of the M SRS ports included in the OFDM symbols;

determining transmission power of each SRS port of the M SRS ports based on a number of the SRS ports of the M SRS ports included in each OFDM symbol;

determining transmission power of SRS ports of a first group of SRS ports based on a number of the SRS ports included in the first group of SRS ports, wherein the first group of SRS ports is one group of SRS ports of the N groups of SRS ports included in the M SRS ports;

determining transmission power of each SRS port of the M SRS ports based on a maximum value of a number of the SRS ports of the N groups of SRS ports;

determining transmission power of the SRS based on a frequency domain transmission comb number offset to which the SRS resource is mapped; and

determining transmission power of the SRS based on a frequency domain transmission comb number offset included in one OFDM symbol.

86. The network device according to claim 85, **characterized in that** the determining transmission power of the SRS ports of the M SRS ports based on at least one of the number M of the SRS ports and the group number N of the N groups of SRS ports comprises at least one of the following items:

determining the transmission power of each SRS port of the M SRS ports based on $\frac{N}{M}$; and

determining that the transmission power of each SRS port of the M SRS ports equals to $\frac{N}{M}$ of transmission power computed based on an SRS power control process.

87. The network device according to claim 85, **characterized in that** the preset parameter comprises any one or more of the following parameters:

a number $N_{ap}^{s}$ of the SRS ports included in the OFDM symbols, or a positive integer $N_{ap}^{s}$ of a first agreement;
a number $N_s$ of OFDM symbols occupied by the SRS resource in one time slot;
a repetition factor R1 of the SRS resource;
a number $N_s^{ap}$ of OFDM symbols to which the SRS ports are mapped in one time slot, or a positive integer $N_s^{ap}$ of a second agreement;
a number $N_{hop}$ of times of frequency hopping of the SRS ports in one time slot; and
a positive integer of a third agreement; and
the determining transmission power of the SRS ports of the M SRS ports based on at least one of the number M of the SRS ports and a preset parameter comprises:

determining, in response to determining that the preset parameters comprise $N_s$, R1 and $N_{hop}$, the transmission power of the SRS ports of the M SRS ports according to $\frac{N_s}{M*R1*N_{hop}}$;

determining, in response to determining that the preset parameters comprise $N_s$ and $N_s^{ap}$, the transmission power of the SRS ports of the M SRS ports according to $\frac{N_s}{M*N_s^{ap}}$;

determining, in response to determining that the preset parameters comprise $N_s$ and R1, the transmission power of the SRS ports of the M SRS ports according to $\dfrac{N_s}{M*R}$; and

determining, in response to determining that the preset parameter comprises the positive integer of the third agreement, the transmission power of the SRS ports of the M SRS ports according to M and the positive integer of the third agreement.

88. The network device according to claim 87, **characterized in that** a number of OFDM symbols to which each SRS port corresponding to the SRS resource is mapped in one time slot is same; or,

a number of OFDM symbols to which one SRS port corresponding to the SRS resource is mapped in one time slot is a minimum value or a maximum value of a number of OFDM symbols to which each SRS port corresponding to the SRS resource is mapped in one time slot.

89. The network device according to claim 85, **characterized in that** in a case of determining transmission power of SRS ports in the OFDM symbols based on a number of the SRS ports of the M SRS ports included in the OFDM symbols, the processing unit is configured to:

determine first power corresponding to the SRS resource based on a power control parameter configured for an SRS resource set where the SRS resource is located and/or the SRS resource; and

determine the transmission power of the SRS ports in the OFDM symbols according to a ratio of the first power to the number of the SRS ports of the M SRS ports included in the OFDM symbols.

90. The network device according to claim 85, **characterized in that** in a case of determining transmission power of each SRS port of the M SRS ports based on a number of the SRS ports of the M SRS ports included in each OFDM symbol, the processing unit is configured to:

determine first power corresponding to the SRS resource based on a power control parameter configured for an SRS resource set where the SRS resource is located and/or the SRS resource;

determine a maximum value of the number of the SRS ports of the M SRS ports included in each OFDM symbol; and

determine the transmission power of each SRS port of the M SRS ports according to a ratio of the first power to the maximum value.

91. The network device according to claim 85, **characterized in that** the SRS power control indication information is configured to indicate a power control scaling factor of transmission of the SRS resource.

92. The network device according to any one of claims 74-91, **characterized in that** in a case of performing resource mapping of the M SRS ports based on the second resource mapping scheme, transmission power of the SRS is determined through at least one of the following items:

determining transmission power of the SRS ports of the M SRS ports based on at least one of the number M of the SRS ports, the group number N of the N groups of SRS ports, and a number N1 of the time domain resource groups;

determining transmission power of SRS ports transmitted on a first time domain resource group based on a number of the SRS ports transmitted on the first time domain resource group, where the first time domain resource group is any one of the N1 time domain resource groups;

determining transmission power of each SRS port of the M SRS ports based on a maximum value of a number of the SRS ports included in each time domain resource group of the N1 time domain resource groups;

determining transmission power of SRS ports of a first group of SRS ports based on a number of the SRS ports included in the first group of SRS ports, wherein the first group of SRS ports is any one of the N groups of SRS ports; and

determining transmission power of each SRS port of the M SRS ports based on a maximum value of a number of the SRS ports of the N groups of SRS ports.

93. The network device according to claim 92, **characterized in that** the determining transmission power of the SRS ports of the M SRS ports based on at least one of the number M of the SRS ports, the group number N of the N groups of SRS ports, and a number N1 of the time domain resource groups comprises at least one of the following items:

determining the transmission power of each SRS port of the M SRS ports based on $\frac{N1}{M}$;

determining that the transmission power of each SRS port of the M SRS ports equals to $\frac{N1}{M}$ of transmission power computed based on an SRS power control process;

determining the transmission power of each SRS port of the M SRS ports based on $\frac{N}{M'}$; and

determining that the transmission power of each SRS port of the M SRS ports equals to $\frac{N}{M}$ of transmission power computed based on an SRS power control process.

94. The network device according to any one of claims 74-93, **characterized in that** a value of N is 1, 2, 4, 6, or 8.

95. The network device according to any one of claims 74-94, **characterized in that** a value of N1 is 1, 2, 4, 6, or 8; and/or a value of N2 is 1, 2, 4, 6, or 8.

96. The network device according to any one of claims 74-95, **characterized in that** cyclic shifts corresponding to the sequences of the M SRS ports satisfy at least one of the following items conditions:

different SRS ports of the same group of SRS ports of the N groups of SRS ports correspond to different cyclic shifts; and
different groups of SRS ports of the N groups of SRS ports correspond to a same cyclic shift.

97. A communication apparatus, **characterized in that**, comprising: at least one processor; a memory communicatively connected to the at least one processor; and a transceiver communicatively connected to the at least one processor, wherein

the transceiver receives and transmits data under control of the at least one processor;
the memory stores a computer instruction executable by the at least one processor; and
the at least one processor is configured to read the computer instruction and execute the following operations:

receiving configuration information of a sounding reference signaling (SRS) resource transmitted by a network device; and
transmitting SRS to the network device based on the configuration information of the SRS resource, wherein the SRS resource corresponds to M SRS ports, the M SRS ports comprise a first SRS port and a second SRS port, the first SRS port and the second SRS port are mapped to different time domain resources, and M is an integer greater than 1.

98. The communication apparatus according to claim 97, **characterized in that** the M SRS ports comprise N groups of SRS ports, N is an integer greater than 1, and the first SRS port and the second SRS port belong to different groups of SRS ports.

99. The communication apparatus according to claim 98, **characterized in that** in a case of transmitting SRS to the network device based on the configuration information of the SRS resource, the at least one processor is configured to:

determine a resource mapping scheme of the SRS and/or a cyclic shift corresponding to the SRS based on the configuration information of the SRS resource; and
perform resource mapping of the M SRS ports according to the resource mapping scheme of the SRS, wherein the resource mapping scheme comprises one of a first resource mapping scheme and a second resource mapping scheme;
in the first resource mapping scheme, different groups of SRS ports of the N groups of SRS ports are mapped to different time domain resources; and
in the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, at least two groups of SRS ports of the N groups of SRS ports are mapped to different frequency domain resource groups, and both N1 and N2 are integers greater than or equal to 1.

**100.**

The communication apparatus according to any one of claims 97-98, **characterized in that** after the receiving configuration information of an SRS resource transmitted by a network device, the at least one processor is configured to: determine one or more of the N groups of SRS ports included in the M SRS ports, resource mapping corresponding to the M SRS ports, and SRS sequences corresponding to the M SRS ports based on one or more of a number M of the SRS ports, an SRS sequence generation parameter corresponding to the SRS resource and a transmission comb number.

**101.**

The communication apparatus according to claim 97 or 98, **characterized in that** before the transmitting SRS to the network device, the at least one processor is configured to:
receive indication information transmitted by the network device, wherein the indication information comprises one or more of the following information:

at least one of a group number N of the N groups of SRS ports included in the M SRS ports, a number N1 of time domain resource groups, and a number N2 of frequency domain resource groups;
an SRS sequence generation parameter; and
time domain resource mapping mode information of the SRS.

**102.**

The communication apparatus according to claim 100 or 101, **characterized in that** the SRS sequence generation parameter comprises:

a maximum number of cyclic shifts; and/or,
cyclic shift configuration.

**103.**

The communication apparatus according to claim 101, **characterized in that** the indication information is included in the configuration information of the SRS resource; or, the indication information is independent of the configuration information of the SRS resource.

**104.**

The communication apparatus according to any one of claims 98-103, **characterized in that** the first resource mapping scheme comprises at least one of the following items:

SRS ports of a same group of SRS ports of the N groups of SRS ports are mapped to a same time domain resource;
the M SRS ports are mapped to a same frequency domain resource;
SRS ports of at least one group of SRS ports of the N groups of SRS ports are mapped to a plurality of time domain units in one time slot, wherein the plurality of time domain units are continuous or discontinuous in time;
SRS ports of at least one group of SRS ports of the N groups of SRS ports are mapped to a plurality of frequency domain units, wherein the plurality of frequency domain units are continuous or discontinuous in frequency;
a number of frequency domain units mapped by each SRS port of the M SRS ports is the same;
SRS ports mapped onto adjacent time domain symbols are different;
a number of time domain units mapped by each SRS port of the M SRS ports is the same;
serial numbers of the SRS ports of the same group of SRS ports of the N groups of SRS ports are adjacent to each other, or, an interval between serial numbers of the SRS ports of the same group of SRS ports of the N groups of SRS ports is K, wherein K is a multiple of 2 or 4; and
the N groups of SRS ports are sequentially mapped to R OFDM symbols, and in response to existence of remaining OFDM symbols after mapping of the N groups of SRS ports, frequency hopping pattern used for the remaining OFDM symbols is the same as frequency hopping pattern used for a last group of SRS ports.

**105.**

The communication apparatus according to claim 104, **characterized in that** the number of time domain units mapped by each SRS port of the M SRS ports is the same comprises: the number of the time domain units mapped by each SRS port of the M SRS ports equals to $\frac{1}{N}$ of a number of time domain units configured by the network device for the SRS resource.

**106.**

The communication apparatus according to any one of claims 98-103, **characterized in that** the second resource mapping scheme comprises at least one of the following items:

different groups of SRS ports of the N groups of SRS ports are mapped to different time domain resource groups and different frequency domain resource groups;

N1 groups of SRS ports of the N groups of SRS ports are mapped to different time domain resource groups and a same frequency domain resource group;

N2 groups of SRS ports of the N groups of SRS ports are mapped to different frequency domain resource groups and a same time domain resource group;

SRS ports of a same group of SRS ports of the N groups of SRS ports are mapped to a same time-frequency resource;

a number of time domain units mapped by each SRS port of the M SRS ports is the same;

a number of frequency domain units mapped by each SRS port of the M SRS ports is the same; and

serial numbers of the SRS ports of the same group of SRS ports of the N groups of SRS ports are adjacent to each other, or, an interval between serial numbers of the SRS ports of the same group of SRS ports of the N groups of SRS ports is K, wherein K is a multiple of 2 or 4.

**107.**

The communication apparatus according to claim 106, **characterized in that** in a case that the number of time domain units mapped by each SRS port of the M SRS ports is the same, the number of the time domain units to which each SRS port is mapped equals to $\frac{1}{N1}$ of a number of time domain units configured by the network device for the SRS resource.

**108.**

The communication apparatus according to claim 106, wherein in a case that the number of frequency domain units mapped by each SRS port of the M SRS ports is the same, the number of the frequency domain units to which each SRS port is mapped equals to $\frac{1}{N2}$ of a number of frequency domain units configured by the network device for the SRS resource.

**109.**

The communication apparatus according to any one of claims 98-108, **characterized in that** in a case of transmitting SRS to the network device based on the configuration information of the SRS resource, the at least one processor is configured to:

determine transmission power of the SRS based on the configuration information of the SRS resource or power control indication information transmitted by the network device; and

transmit the SRS to the network device based on the transmission power of the SRS, wherein

in a case of performing resource mapping of the M SRS ports based on the first resource mapping scheme, the transmission power of the SRS is determined based on the configuration information of the SRS resource through at least one of the following items:

determining transmission power of the SRS ports of the M SRS ports based on at least one of the number M of the SRS ports and the group number N of the N groups of SRS ports;

determining transmission power of the SRS ports of the M SRS ports based on at least one of the number M of the SRS ports and a preset parameter, wherein the preset parameter is configured to determine the group number N of the N groups of SRS ports;

determining transmission power of the SRS ports of the M SRS ports based on a number of OFDM symbols of the SRS resource, wherein the number of the OFDM symbols indicates a number of groups into which the OFDM symbols of the SRS resource are divided, SRS ports corresponding to a same group of OFDM symbols are same, and SRS ports corresponding to different groups of OFDM symbols are different;

determining transmission power of SRS ports in the OFDM symbols based on a number of the SRS ports of the M SRS ports included in the OFDM symbols;

determining transmission power of each SRS port of the M SRS ports based on a number of the SRS ports of the M SRS ports included in each OFDM symbol;

determining transmission power of SRS ports of a first group of SRS ports based on a number of the SRS ports included in the first group of SRS ports, wherein the first group of SRS ports is one group of the N groups of SRS ports included in the M SRS ports;

determining transmission power of each SRS port of the M SRS ports based on a maximum value of a number of the SRS ports of the N groups of SRS ports;

determining transmission power of the SRS based on a frequency domain transmission comb number offset to which the SRS resource is mapped; and

determining transmission power of the SRS based on a frequency domain transmission comb number offset included in one OFDM symbol.

**110.**

The communication apparatus according to claim 109, **characterized in that** the determining transmission power of the SRS ports of the M SRS ports based on at least one of the number M of the SRS ports and the group number N of the N groups of SRS ports comprises at least one of the following items:

determining the transmission power of each SRS port of the M SRS ports based on $\frac{N}{M}$ ; and

determining that the transmission power of each SRS port of the M SRS ports equals to $\frac{N}{M}$ of transmission power computed based on an SRS power control process.

**111.** The communication apparatus according to claim 109, **characterized in that** the preset parameter comprises any one or more of the following parameters:

a number $N_{ap}^{s}$ of the SRS ports included in the OFDM symbols, or a positive integer $N_{ap}^{s}$ of a first agreement;

a number $N_s$ of OFDM symbols occupied by the SRS resource in one time slot;

a repetition factor R1 of the SRS resource;

a number $N_s^{ap}$ of OFDM symbols to which the SRS ports are mapped in one time slot, or a positive integer $N_s^{ap}$ of a second agreement;

a number $N_{hop}$ of times of frequency hopping of the SRS ports in one time slot; and

a positive integer of a third agreement; and

the determining transmission power of the SRS ports of the M SRS ports based on at least one of the number M of the SRS ports and the preset parameter comprises:

determining, in response to determining that the preset parameters comprise $N_s$, R1 and $N_{hop}$, the transmission power of the SRS ports of the M SRS ports according to $\frac{N_s}{M*R1*N_{hop}}$ ;

determining, in response to determining that the preset parameters comprise $N_s$ and $N_s^{ap}$, the transmission power of the SRS ports of the M SRS ports according to $\frac{N_s}{M*N_s^{ap}}$ ;

determining, in response to determining that the preset parameters comprise $N_s$ and R1, the transmission power of the SRS ports of the M SRS ports according to $\frac{N_s}{M*R}$ ; and

determining, in response to determining that the preset parameter comprises the positive integer of the third agreement, the transmission power of the SRS ports of the M SRS ports according to M and the positive integer of the third agreement.

**112.**

The communication apparatus according to claim 111, **characterized in that** a number of OFDM symbols to which each SRS port corresponding to the SRS resource is mapped in one time slot is same; or,

a number of OFDM symbols to which one SRS port corresponding to the SRS resource is mapped in one time slot is a minimum value or a maximum value of a number of OFDM symbols to which each SRS port corresponding to the SRS resource is mapped in one time slot.

**113.**

The communication apparatus according to claim 109, **characterized in that** in a case of determining transmission power of SRS ports in the OFDM symbols based on a number of the SRS ports of the M SRS ports included in the OFDM symbols, the at least one processor is configured to:

determine first power corresponding to the SRS resource based on a power control parameter configured for an SRS resource set where the SRS resource is located and/or the SRS resource; and
determine the transmission power of the SRS ports in the OFDM symbols according to a ratio of the first power to the number of the SRS ports of the M SRS ports included in the OFDM symbols.

**114.**

The communication apparatus according to claim 109, **characterized in that** in a case of determining transmission power of each SRS port of the M SRS ports based on a number of the SRS ports of the M SRS ports included in each OFDM symbol, the at least one processor is configured to:

determine first power corresponding to the SRS resource based on a power control parameter configured for an SRS resource set where the SRS resource is located and/or the SRS resource;
determine a maximum value of the number of the SRS ports of the M SRS ports included in each OFDM symbol; and
determine the transmission power of each SRS port of the M SRS ports according to a ratio of the first power to the maximum value.

**115.**

The communication apparatus according to claim 109, **characterized in that** the SRS power control indication information is configured to indicate a power control scaling factor of transmission of the SRS resource.

**116.**

The communication apparatus according to any one of claims 98-108, **characterized in that** in a case of transmitting SRS to the network device based on the configuration information of the SRS resource, the at least one processor is configured to:

determine transmission power of the SRS based on the configuration information of the SRS resource; and
transmit the SRS to the network device based on the transmission power, wherein
in a case of performing resource mapping of the M SRS ports based on the second resource mapping scheme, the transmission power of the SRS is determined based on the configuration information of the SRS resource through at least one of the following items:

determining transmission power of the SRS ports of the M SRS ports based on at least one of the number M of the SRS ports, the group number N of the N groups of SRS ports, and a number N1 of the time domain resource groups;
determining transmission power of SRS ports transmitted on a first time domain resource group based on a number of the SRS ports transmitted on the first time domain resource group, where the first time domain resource group is any one of the N1 time domain resource groups;
determining transmission power of each SRS port of the M SRS ports based on a maximum value of a number of the SRS ports included in each time domain resource group of the N1 time domain resource groups;
determining transmission power of SRS ports of a first group of SRS ports based on a number of the SRS ports included in the first group of SRS ports, wherein the first group of SRS ports is any one of the N groups of SRS ports; and
determining transmission power of each SRS port of the M SRS ports based on a maximum value of a number of the SRS ports of the N groups of SRS ports.

**117.**

The communication apparatus according to claim 116, **characterized in that** the determining transmission power of the SRS ports of the M SRS ports based on at least one of the number M of the SRS ports, the group number N of the N groups of SRS ports, and a number N1 of the time domain resource groups comprises at least one of the following items:

determining the transmission power of each SRS port of the M SRS ports based on $\dfrac{N1}{M}$ ;

determining that the transmission power of each SRS port of the M SRS ports equals to $\frac{N1}{M}$ of transmission power computed based on an SRS power control process;

determining the transmission power of each SRS port of the M SRS ports based on $\frac{N}{M}$; and

determining that the transmission power of each SRS port of the M SRS ports equals to $\frac{N}{M}$ of transmission power computed based on an SRS power control process.

**118.**
The communication apparatus according to any one of claims 98-117, **characterized in that** a value of N is 1, 2, 4, 6, or 8.

**119.**
The communication apparatus according to any one of claims 98-118, **characterized in that** a value of N1 is 1, 2, 4, 6, or 8; and/or a value of N2 is 1, 2, 4, 6, or 8.

**120.**
The communication apparatus according to any one of claims 98-119, **characterized in that** cyclic shifts corresponding to the sequences of the M SRS ports satisfy at least one of the following items conditions:

different SRS ports of the same group of SRS ports of the N groups of SRS ports correspond to different cyclic shifts; and
different groups of SRS ports of the N groups of SRS ports correspond to a same cyclic shift.

**121.**
A communication apparatus, **characterized in that**, comprising: at least one processor; a memory communicatively connected to the at least one processor; and a transceiver communicatively connected to the at least one processor, wherein

the transceiver receives and transmits data under control of the at least one processor;
the memory stores a computer instruction executable by the at least one processor; and
the at least one processor is configured to read the computer instruction and execute the following operations:

transmitting configuration information of a sounding reference signaling (SRS) resource to a terminal; and receiving SRS transmitted by the terminal based on the configuration information of the SRS resource, wherein the SRS resource corresponds to M SRS ports, the M SRS ports comprise a first SRS port and a second SRS port, and the first SRS port and the second SRS port are mapped to different time domain resources.

**122.**
The communication apparatus according to claim 121, **characterized in that** the M SRS ports comprise N groups of SRS ports, N is an integer greater than 1, and the first SRS port and the second SRS port belong to different groups of SRS ports.

**123.**
The communication apparatus according to claim 122, **characterized in that** the M SRS ports are mapped to a time-frequency resource according to one of a first resource mapping scheme and a second resource mapping scheme;

in the first resource mapping scheme, different groups of SRS ports of the N groups of SRS ports are mapped to different time domain resources; and
in the second resource mapping scheme, the N groups of SRS ports are transmitted on N1 time domain resource groups and N2 frequency domain resource groups, any group of SRS ports of the N groups of SRS ports are mapped to one time domain resource group and one frequency domain resource group, at least two groups of SRS ports of the N groups of SRS ports are mapped to different time domain resource groups, at least two groups of SRS ports of the N groups of SRS ports are mapped to different frequency domain resource groups, and both N1 and N2 are integers greater than or equal to 1.

**124.**

The communication apparatus according to claim 123, **characterized in that** the at least one processor is further configured to:
determine a resource mapping scheme of the SRS and/or a sequence corresponding to the SRS based on at least one of a number M of the SRS ports, a group number N of the N groups of SRS ports included in the M SRS ports, a number N1 of the time domain resource groups, a number N2 of the frequency domain resource groups, a transmission comb number, and an SRS sequence generation parameter.

**125.**
The communication apparatus according to claim 122, **characterized in that** the at least one processor is further configured to:
transmit indication information to the terminal, wherein the indication information comprises one or more of the following information:

at least one of a group number N of the N groups of SRS ports included in the M SRS ports, a number N1 of time domain resource groups, and a number N2 of frequency domain resource groups;
an SRS sequence generation parameter; and
time domain resource mapping mode information of the SRS.

**126.**
The communication apparatus according to claim 124 or 125, **characterized in that** the SRS sequence generation parameter comprises:

a maximum number of cyclic shifts; and/or,
cyclic shift configuration.

**127.**
The communication apparatus according to claim 125, **characterized in that** the indication information is included in the configuration information of the SRS resource; or, the indication information is independent of the configuration information of the SRS resource.

**128.**
The communication apparatus according to any one of claims 122-127, **characterized in that** the first resource mapping scheme comprises at least one of the following items:

SRS ports of a same group of SRS ports of the N groups of SRS ports are mapped to a same time domain resource;
the M SRS ports are mapped to a same frequency domain resource;
SRS ports of at least one group of SRS ports of the N groups of SRS ports are mapped to a plurality of time domain units in one time slot, wherein the plurality of time domain units are continuous or discontinuous in time;
SRS ports of at least one group of SRS ports of the N groups of SRS ports are mapped to a plurality of frequency domain units, wherein the plurality of frequency domain units are continuous or discontinuous in frequency;
a number of frequency domain units mapped by each SRS port of the M SRS ports is the same;
SRS ports mapped onto adjacent time domain symbols are different;
a number of time domain units mapped by each SRS port of the M SRS ports is the same;
serial numbers of the SRS ports of the same group of SRS ports of the N groups of SRS ports are adjacent to each other, or, an interval between serial numbers of the SRS ports of the same group of SRS ports of the N groups of SRS ports is K, wherein K is a multiple of 2 or 4; and
the N groups of SRS ports are sequentially mapped to R OFDM symbols, and in response to existence of remaining OFDM symbols after mapping of the N groups of SRS ports, frequency hopping pattern used for the remaining OFDM symbols is the same as frequency hopping pattern used for a last group of SRS ports.

**129.**
The communication apparatus according to claim 128, **characterized in that** the number of time domain units mapped by each SRS port of the M SRS ports is the same comprises: the number of the time domain units mapped by each SRS port of the M SRS ports equals to $\frac{1}{N}$ of a number of time domain units configured by the network device for the SRS resource.

**130.**

The communication apparatus according to any one of claims 122-127, **characterized in that** the second resource mapping scheme comprises at least one of the following items:

> different groups of SRS ports of the N groups of SRS ports are mapped to different time domain resource groups and different frequency domain resource groups;
> N1 groups of SRS ports of the N groups of SRS ports are mapped to different time domain resource groups and a same frequency domain resource group;
> N2 groups of SRS ports of the N groups of SRS ports are mapped to different frequency domain resource groups and a same time domain resource group;
> SRS ports of a same group of SRS ports of the N groups of SRS ports are mapped to a same time-frequency resource;
> a number of time domain units mapped by each SRS port of the M SRS ports is the same;
> a number of frequency domain units mapped by each SRS port of the M SRS ports is the same; and
> serial numbers of the SRS ports of the same group of SRS ports of the N groups of SRS ports are adjacent to each other, or, an interval between serial numbers of the SRS ports of the same group of SRS ports of the N groups of SRS ports is K, wherein K is a multiple of 2 or 4.

**131.**

The communication apparatus according to claim 130, **characterized in that** in a case that the number of time domain units mapped by each SRS port of the M SRS ports is the same, the number of the time domain units to which each SRS port is mapped equals to $\frac{1}{N1}$ of a number of time domain units configured by the network device for the SRS resource.

**132.**

The communication apparatus according to claim 130, **characterized in that** in a case that the number of frequency domain units mapped by each SRS port of the M SRS ports is the same, the number of the frequency domain units to which each SRS port is mapped equals to $\frac{1}{N2}$ of a number of frequency domain units configured by the network device for the SRS resource.

**133.**

The communication apparatus according to any one of claims 122-132, **characterized in that** in a case of performing resource mapping of the M SRS ports based on the first resource mapping scheme, transmission power of the SRS is determined through at least one of the following items:

> determining transmission power of the SRS ports of the M SRS ports based on at least one of the number M of the SRS ports and the group number N of the N groups of SRS ports;
> determining transmission power of the SRS ports of the M SRS ports based on at least one of the number M of the SRS ports and a preset parameter, wherein the preset parameter is configured to determine the group number N of the N groups of SRS ports;
> determining transmission power of the SRS ports of the M SRS ports based on a number of OFDM symbols of the SRS resource, wherein the number of the OFDM symbols indicates a number of groups into which the OFDM symbols of the SRS resource are divided, SRS ports corresponding to a same group of OFDM symbols are same, and SRS ports corresponding to different groups of OFDM symbols are different;
> determining transmission power of SRS ports in the OFDM symbols based on a number of the SRS ports of the M SRS ports included in the OFDM symbols;
> determining transmission power of each SRS port of the M SRS ports based on a number of the SRS ports of the M SRS ports included in each OFDM symbol;
> determining transmission power of SRS ports of a first group of SRS ports based on a number of the SRS ports included in the first group of SRS ports, wherein the first group of SRS ports is one group of SRS ports of the N groups of SRS ports included in the M SRS ports;
> determining transmission power of each SRS port of the M SRS ports based on a maximum value of a number of the SRS ports of the N groups of SRS ports;
> determining transmission power of the SRS based on a frequency domain transmission comb number offset to which the SRS resource is mapped; and
> determining transmission power of the SRS based on a frequency domain transmission comb number offset included in one OFDM symbol.

**134.**

The communication apparatus according to claim 133, **characterized in that** the determining transmission power of the SRS ports of the M SRS ports based on at least one of the number M of the SRS ports and the group number N of the N groups of SRS ports comprises at least one of the following items:

determining the transmission power of each SRS port of the M SRS ports based on $\frac{N}{M}$ ; and

determining that the transmission power of each SRS port of the M SRS ports equals to $\frac{N}{M}$ of transmission power computed based on an SRS power control process.

**135.**

The communication apparatus according to claim 133, **characterized in that** the preset parameter comprises any one or more of the following parameters:

a number $N_{ap}^{s}$ of the SRS ports included in the OFDM symbols, or a positive integer $N_{ap}^{s}$ of a first agreement;
a number $N_s$ of OFDM symbols occupied by the SRS resource in one time slot;
a repetition factor R1 of the SRS resource;
a number $N_s^{ap}$ of OFDM symbols to which the SRS ports are mapped in one time slot, or a positive integer $N_s^{ap}$ of a second agreement;
a number $N_{hop}$ of times of frequency hopping of the SRS ports in one time slot; and
a positive integer of a third agreement; and
the determining transmission power of the SRS ports of the M SRS ports based on at least one of the number M of the SRS ports and a preset parameter comprises:

determining, in response to determining that the preset parameters comprise $N_s$, R1 and $N_{hop}$, the transmission power of the SRS ports of the M SRS ports according to $\frac{N_s}{M*R1*N_{hop}}$ ;

determining, in response to determining that the preset parameters comprise $N_s$ and $N_s^{ap}$, the transmission power of the SRS ports of the M SRS ports according to $\frac{N_s}{M*N_s^{ap}}$

determining, in response to determining that the preset parameters comprise $N_s$ and R1, the transmission power of the SRS ports of the M SRS ports according to $\frac{N_s}{M*R}$ ; and

determining, in response to determining that the preset parameter comprises the positive integer of the third agreement, the transmission power of the SRS ports of the M SRS ports according to M and the positive integer of the third agreement.

**136.**

The communication apparatus according to claim 135, **characterized in that** a number of OFDM symbols to which each SRS port corresponding to the SRS resource is mapped in one time slot is same; or,
a number of OFDM symbols to which one SRS port corresponding to the SRS resource is mapped in one time slot is a minimum value or a maximum value of a number of OFDM symbols to which each SRS port corresponding to the SRS resource is mapped in one time slot.

**137.**

The communication apparatus according to claim 133, **characterized in that** in a case of determining transmission power of SRS ports in the OFDM symbols based on a number of the SRS ports of the M SRS ports included in the OFDM symbols, the at least one processor is configured to:

determine first power corresponding to the SRS resource based on a power control parameter configured for an SRS resource set where the SRS resource is located and/or the SRS resource; and
determine the transmission power of the SRS ports in the OFDM symbols according to a ratio of the first power to the number of the SRS ports of the M SRS ports included in the OFDM symbols.

**138.**

The communication apparatus according to claim 133, **characterized in that** in a case of determining transmission power of each SRS port of the M SRS ports based on a number of the SRS ports of the M SRS ports included in each OFDM symbol, the at least one processor is configured to:

determine first power corresponding to the SRS resource based on a power control parameter configured for an SRS resource set where the SRS resource is located and/or configured for the SRS resource;
determine a maximum value of the number of the SRS ports of the M SRS ports included in each OFDM symbol; and
determine the transmission power of each SRS port of the M SRS ports according to a ratio of the first power to the maximum value.

**139.**

The communication apparatus according to claim 133, **characterized in that** the SRS power control indication information is configured to indicate a power control scaling factor of transmission of the SRS resource.

**140.**

The communication apparatus according to any one of claims 122-139, **characterized in that** in a case of performing resource mapping of the M SRS ports based on the second resource mapping scheme, transmission power of the SRS is determined through at least one of the following items:

determining transmission power of the SRS ports of the M SRS ports based on at least one of the number M of the SRS ports, the group number N of the N groups of SRS ports, and a number N1 of the time domain resource groups;
determining transmission power of SRS ports transmitted on a first time domain resource group based on a number of the SRS ports transmitted on the first time domain resource group, where the first time domain resource group is any one of the N1 time domain resource groups;
determining transmission power of each SRS port of the M SRS ports based on a maximum value of a number of the SRS ports included in each time domain resource group of the N1 time domain resource groups;
determining transmission power of SRS ports of a first group of SRS ports based on a number of the SRS ports included in the first group of SRS ports, wherein the first group of SRS ports is any one of the N groups of SRS ports; and
determining transmission power of each SRS port of the M SRS ports based on a maximum value of a number of the SRS ports of the N groups of SRS ports.

**141.**

The communication apparatus according to claim 140, **characterized in that** the determining transmission power of the SRS ports of the M SRS ports based on at least one of the number M of the SRS ports, the group number N of the N groups of SRS ports, and a number N1 of the time domain resource groups comprises at least one of the following items:

determining the transmission power of each SRS port of the M SRS ports based on $\frac{N1}{M}$;

determining that the transmission power of each SRS port of the M SRS ports equals to $\frac{N1}{M}$ of transmission power computed based on an SRS power control process;

determining the transmission power of each SRS port of the M SRS ports based on $\frac{N}{M}$; and

determining that the transmission power of each SRS port of the M SRS ports equals to $\frac{N}{M}$ of transmission power computed based on an SRS power control process.

**142.**

The communication apparatus according to any one of claims 122-141, **characterized in that** a value of N is 1, 2, 4, 6, or 8.

**143.**

The communication apparatus according to any one of claims 122-142, **characterized in that** a value of N1 is 1, 2, 4, 6, or 8; and/or a value of N2 is 1, 2, 4, 6, or 8.

**144.**
The communication apparatus according to any one of claims 122-142, **characterized in that** cyclic shifts corresponding to the sequences of the M SRS ports satisfy at least one of the following items conditions:

different SRS ports of the same group of SRS ports of the N groups of SRS ports correspond to different cyclic shifts; and
different groups of SRS ports of the N groups of SRS ports correspond to a same cyclic shift.

**145.**
A computer-readable storage medium, storing an instruction executable by a computer, **characterized in that** the instruction executable by the computer is configured to cause the computer to execute the method according to any one of claims 1-24, or the method according to any one of claims 25-48.
146.A computer program product, **characterized in that** when the computer program product is invoked by a computer, the computer is caused to execute the method according to any one of claims 1-24, or the method according to any one of claims 25-48.

Network device
101

Terminal
102

FIG. 1

| | |
|---|---|
| receiving, by a terminal, configuration information of an SRS resource tranmistted by a network device | S210 |

| | |
|---|---|
| transmitting, by the terminal, SRS to the network device based on the configuration information of the SRS resource, wherein the SRS resource corresponds to M SRS ports, the M SRS ports comprise a first SRS port and a second SRS port, the first SRS port and the second SRS port are mapped to different time domain resources | S211 |

FIG. 2a

transmitting, by a network device, configuration information of a sounding reference signaling (SRS) resource to a terminal

S220

receiving, by the network device, SRS transmitted by the terminal based on the configuration information of the SRS resource, wherein the SRS resource corresponds to M SRS ports, the M SRS ports comprise a first SRS port and a second SRS port, and the first SRS port and the second SRS port are mapped to different time domain resources

S221

F

FIG. 2b

| Terminal | Network device |

S301: configuration information of an SRS resource

S302: SRS corresponding to the SRS resource
(SRS ports of the SRS resource include N groups of SRS ports, and the N groups of SRS ports are mapped to different time domain resources)

FIG. 3

Terminal

Network device

S401: configuration information of an SRS resource

S402: SRS corresponding to the SRS resource
(SRS ports of the SRS resource include N groups of SRS
ports, the N groups of SRS ports are transmitted on N1 time
domain resource groups and N2 frequency domain resource
groups, at least two groups of SRS ports are mapped to
different time domain resource groups, and at least two
groups of SRS ports are mapped to different frequency
domain resource groups)

FIG. 4

Terminal

| Reception unit 503 | Processing unit 501 | Transmission unit 502 |

FIG. 5

Network device

| Reception unit 603 | Processing unit 601 | Transmission unit 602 |

FIG. 6

701 Processor

704 Bus Interface

703 Transceiver

702 Memory

FIG. 7

## INTERNATIONAL SEARCH REPORT

| | |
|---|---|
| International application No. | |
| | **PCT/CN2023/089522** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

3GPP, CNTXT, ENTXTC; VEN; ENTXT: 探测参考信号, SRS, 配置, 映射, 时域, 频域, 资源, 端口, 端口组, 端口数量, 传输功率, 功率, 确定, 计算, sounding reference signal, configuration, mapping, time domain, frequency domain, resource, port, group, number, transmission, power, determine, calculate

### C. DOCUMENTS CONSIDERED TO BE RELEVANT

| Category* | Citation of document, with indication, where appropriate, of the relevant passages | Relevant to claim No. |
|---|---|---|
| Y | WO 2022067802 A1 (GUANGDONG OPPO MOBILE TELECOMMUNICATIONS CORP. LTD.) 07 April 2022 (2022-04-07)<br>description, pages 6-18 | 1-146 |
| Y | WO 2020151531 A1 (HUAWEI TECHNOLOGIES CO., LTD.) 30 July 2020 (2020-07-30)<br>description, pages 12-38 | 1-146 |
| Y | WO 2021109403 A1 (ZTE CORP.) 10 June 2021 (2021-06-10)<br>description, pages 19-22 | 13-21, 37-45, 61-69, 85-93, 109-117, 133-141 |
| A | CN 114337948 A (RESEARCH INSTITUTE OF CHINA MOBILE COMMUNICATIONS CORPORATION et al.) 12 April 2022 (2022-04-12)<br>entire document | 1-146 |
| A | LENOVE et al. "R1-2109107 Enhancements on SRS_final"<br>*3GPP tsg_ran\wg1_rl1*, 01 October 2021 (2021-10-01),<br>entire document | 1-146 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 August 2023** | **10 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/089522**

| Patent document cited in search report | | | Publication date (day/month/year) | Patent family member(s) | Publication date (day/month/year) |
|---|---|---|---|---|---|
| WO | 2022067802 | A1 | 07 April 2022 | None | |
| WO | 2020151531 | A1 | 30 July 2020 | None | |
| WO | 2021109403 | A1 | 10 June 2021 | None | |
| CN | 114337948 | A | 12 April 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210419466X

- CN 202310154012